# EUROPEAN PATENT APPLICATION

(11) **EP 4 762 897 A1**
(43) Date of publication of application: **24.06.2026**
(21) Application number: 25219903.9
(22) Date of filing: 01.12.2025
(51) Int. Cl.: A01B 76/00, A01B 69/00

(54) **ASSISTANCE SYSTEM**

(30) Priority: 17.12.2024 JP 2024221101
(71) Applicant: KUBOTA CORPORATION, Osaka-shi, Osaka 556-8601 (JP)
(72) Inventor: FUJIMOTO, Koichi, SAKAI-SHI, OSAKA, 5900908 (JP); MIURA, Keisuke, SAKAI-SHI, OSAKA, 5900908 (JP)
(74) Representative: Cabinet Beau de Loménie

(57) **Abstract**

An assistance system (S) includes assistance terminal(s) (2) to provide assistance to working machine(s) (1) from an outside of the working machine(s) (1), and a definer (61a) to define a predetermined group (G) including at least one working machine (1) which is at least one of the working machine(s) (1) and at least one assistance terminal (2) which is at least one of the assistance terminal(s) (2). The at least one assistance terminal (2) belonging to the predetermined group (G) is configured to perform one or more functions-for-assistance, which are one or more functions for the assistance, with respect to the at least one working machine (1) belonging to the predetermined group (G). The definer (61a) is configured or programmed to define that one or more functions-for-assistance, with respect to at least one of the at least one working machine (1) belonging to the predetermined group (G), are assigned to at least one of the at least one assistance terminals (2) belonging to the predetermined group (G).

## Description

### BACKGROUND OF THE INVENTION

### Field of the Invention

The present invention relate to assistance systems for working machines such as agricultural machines and construction machines.

### Description of the Related Art

Japanese Unexamined Patent Application Publication No. 2022-154873 discloses a remote operation system, which has the function to intercommunicate with (i) a plurality of working machines and (ii) a remote operation device to remotely operate one of the plurality of working machines that is subject to remote operation.

### SUMMARY OF THE INVENTION

However, with the remote operation system of Japanese Unexamined Patent Application Publication No. 2022-154873, a single remote operation device (assistance terminal) remotely operates one of the plurality of working machines that is subject to remote operation, and therefore the system does not allow for a great flexibility in the combination of working machines and remote operation devices, making it difficult to provide appropriate assistance using the assistance terminal.

Example embodiments of the present invention provide assistance systems each of which allows one or more assistance terminals to provide appropriate assistance to one or more working machines.

An assistance system according to an example embodiment of the present invention includes one or more assistance terminals to provide assistance to one or more working machines from an outside of the one or more working machines, and a definer to define a predetermined group including at least one working machine which is at least one of the one or more working machines and at least one assistance terminal which is at least one of the one or more assistance terminals, wherein the at least one assistance terminal belonging to the predetermined group is configured to perform one or more functions-for-assistance, which are one or more functions for the assistance, with respect to the at least one working machine belonging to the predetermined group.

The above assistance system allows one or more assistance terminals to provide appropriate assistance to one or more working machines.

The above and other elements, features, steps, characteristics and advantages of the present invention will become more apparent from the following detailed description of the example embodiments with reference to the attached drawings.

### BRIEF DESCRIPTION OF THE DRAWINGS

A more complete appreciation of example embodiments of the present invention and many of the attendant advantages thereof will be readily obtained as the same becomes better understood by reference to the following detailed description when considered in connection with the accompanying drawings described below.
FIG. 1 schematically illustrates a general configuration of an assistance system of a first example embodiment of the present invention.
FIG. 2 is a block diagram illustrating a working machine.
FIG. 3 is a side view schematically illustrating a working machine.
FIG. 4 is a rear perspective view of a lifter.
FIG. 5 is a block diagram illustrating an assistance terminal.
FIG. 6 is a block diagram illustrating a management terminal.
FIG. 7 is a block diagram illustrating an assistance device.
FIG. 8 is a block diagram showing an example of a user table.
FIG. 9 is a block diagram showing an example of a working machine table.
FIG. 10 illustrates an example of a first definition screen.
FIG. 11 is a block diagram of an example of a first group table.
FIG. 12 illustrates an example of a second definition screen.
FIG. 13 is a block diagram showing an example of a second group table.
FIG. 14 illustrates an example of a third definition screen.
FIG. 15 is a block diagram showing an example of an assignment table.
FIG. 16 schematically illustrates a flow of various information in a first group according to the first example embodiment of the present invention.
FIG. 17 schematically illustrates a flow of various information in a second group according to the first example embodiment of the present invention.
FIG. 18 illustrates an example of a first assistance screen.
FIG. 19 illustrates another example of a first assistance screen.
FIG. 20 illustrates a further example of a first assistance screen.
FIG. 21 illustrates an example of a second assistance screen.
FIG. 22 illustrates another example of a second assistance screen.
FIG. 23 schematically illustrates a general configuration of an assistance system of a second example embodiment of the present invention.
FIG. 24 illustrates an example of a fourth definition screen.
FIG. 25 is a block diagram showing an example of a group table.
FIG. 26 illustrates an example of a fifth definition screen.
FIG. 27 schematically illustrates a flow of various information in a predetermined group according to the second example embodiment of the present invention.
FIG. 28 schematically illustrates a flow of various information in a first group according to a third example embodiment of the present invention.
FIG. 29 schematically illustrates a flow of various information in a second group according to a third example embodiment of the present invention.

### DESCRIPTION OF THE EXAMPLE EMBODIMENTS

Example embodiments will now be described with reference to the accompanying drawings, wherein like reference numerals designate corresponding or identical elements throughout the various drawings. The drawings are to be viewed in an orientation in which the reference numerals are viewed correctly.

The following description discusses example embodiments of the present invention with reference to drawings.

### First Example Embodiment

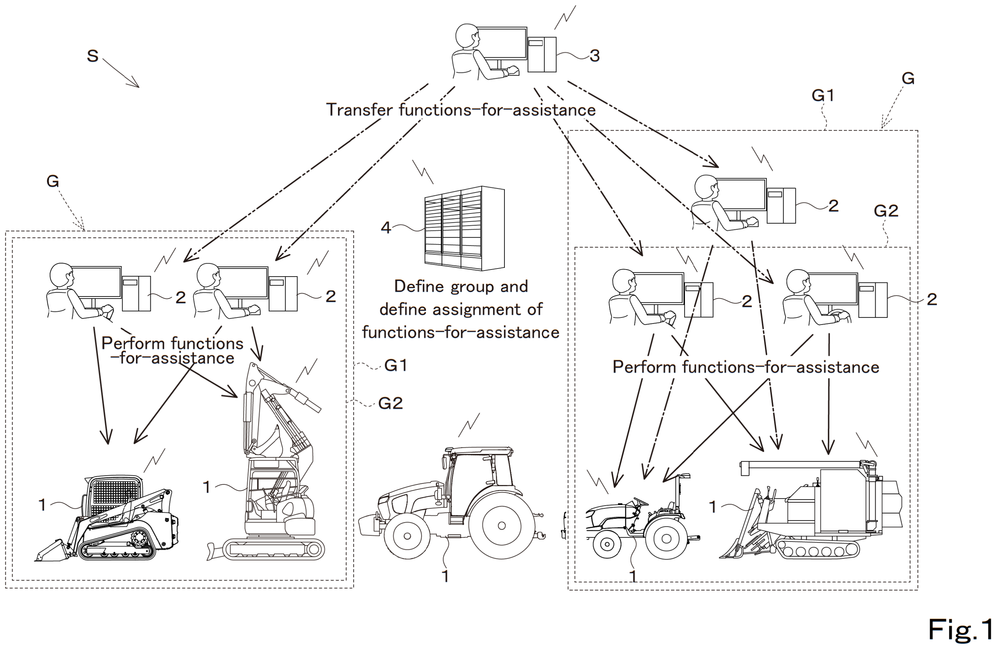

FIG. 1 schematically illustrates a general configuration of an assistance system S according to a first example embodiment of the present invention. As illustrated in FIG. 1, the assistance system S includes assistance terminal(s) 2. The assistance terminal(s) 2 is/are configured to assist (provide assistance to) working machine(s) 1 from the outside of the working machine(s) 1. As illustrated in FIG. 1, the assistance system S includes one or more such assistance terminals 2, and the assistance terminal(s) 2 is/are configured to perform function(s)-for-assistance with respect to the working machine(s) 1. The following first discusses such a working machine 1 in detail.

### Working machine 1

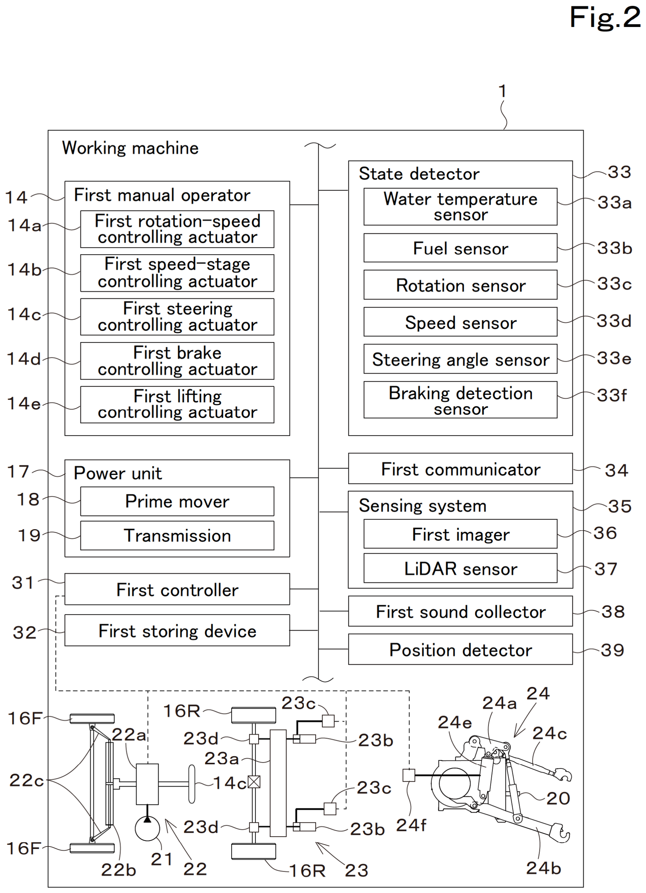

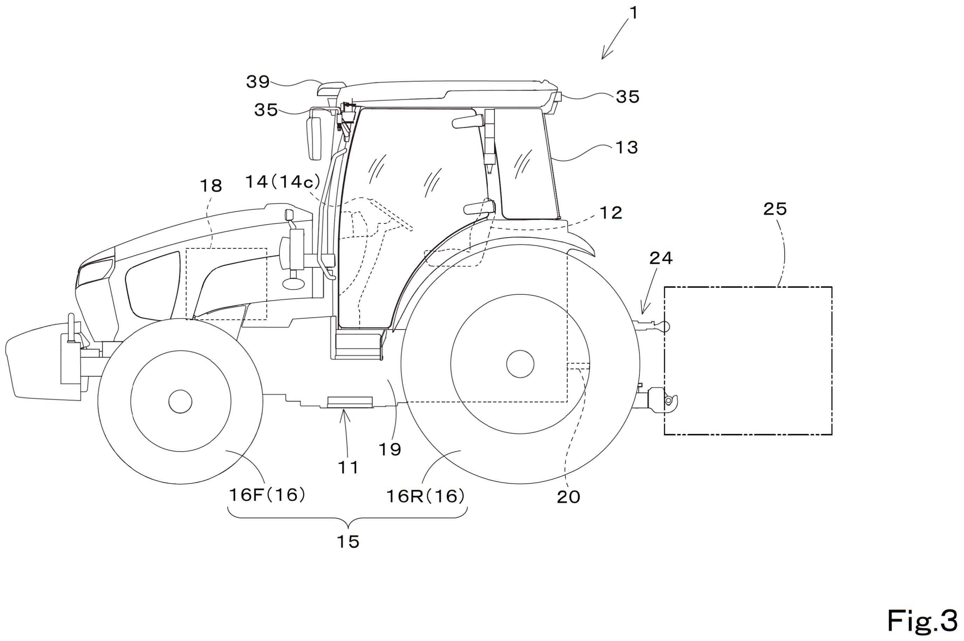

FIG. 2 is a block diagram illustrating the working machine 1. FIG. 3 is a side view schematically illustrating the working machine 1. In the example in FIG. 3, the working machine 1 is a tractor. Although the following description discusses the working machine 1 based on a tractor as an example, the working machine 1 is not limited to the tractor and may be an agricultural work vehicle such as a combine or a rice transplanter, a construction work vehicle such as a compact track loader or a backhoe, or the like.

As illustrated in FIG. 3, the working machine 1 includes a traveling vehicle body 11. The traveling vehicle body 11 supports devices and apparatuses of the working machine 1. The traveling vehicle body 11 illustrated in FIG. 3 is provided with an operator's seat 12 for a worker to sit in, and a protection structure 13 to protect the operator's seat 12. The protection structure 13 is, for example, a cabin to surround the operator's seat 12. The protection structure 13 is not limited to the cabin and may be a canopy, a rollover protection structure (ROPS) provided upright behind the operator's seat 12, or the like.

The working machine 1 includes a first manual operator 14 (in-vehicle manual operator). The first manual operator 14 is a device used to operate devices and/or apparatus of the working machine 1. The first manual operator 14 is manually operated by the worker. Specifically, the first manual operator 14 is provided in or on the traveling vehicle body 11. The first manual operator 14 is provided in the vicinity of the operator's seat 12. Thus, the first manual operator 14 is a device to be operated by the worker in the working machine 1. This allows the worker to manually operate the first manual operator 14 to manually drive the working machine 1 according to the manual operation.

Note that the first manual operator 14 may be provided somewhere other than the vicinity of the operator's seat 12, and is not limited to the vicinity of the operator's seat 12 as to the position thereof.

As illustrated in FIG. 3, the working machine 1 includes a traveling device 15. The traveling device 15 is configured to support the traveling vehicle body 11 such that the traveling vehicle body 11 is allowed to travel. The traveling device 15 is configured to be driven to apply a propelling force to the traveling vehicle body 11. Thus, the traveling vehicle body 11 is configured to be caused to travel by the propelling force generated by the traveling device 15.

The traveling device 15 includes a plurality of wheels 16. In the example in FIG. 3, the wheels 16 include front wheels 16F and rear wheels 16R. The front wheels 16F are a pair of front wheels spaced apart from each other in the width direction, and the rear wheels 16R are a pair of rear wheels spaced apart from each other in the width direction. Examples of the wheels 16 include tire wheels 16 including tires and crawler wheels 16. Note that the number of the wheels 16 of the traveling device 15 is not limited to four, and may be two or three.

As illustrated in FIG. 2, the working machine 1 includes a power unit 17. The power unit 17 is configured to output power. The power unit 17 is configured to output power to drive devices and apparatus of the working machine 1. The power unit 17 is provided in or on the traveling vehicle body 11.

In the present example embodiment, the power unit 17 includes a prime mover 18 and a transmission 19. The prime mover 18 is provided at a front portion of the traveling vehicle body 11. The transmission 19 defines a rear portion of the traveling vehicle body 11. The prime mover 18 includes, for example, a diesel engine. As another example, the prime mover 18 may include some other internal combustion engine such as a gasoline engine, an electric motor, and/or the like. The prime mover 18 is controlled by operating a first rotation-speed controlling actuator 14a (e.g., accelerator pedal) included in the first manual operator 14.

The transmission 19 is configured to change the propelling force of the traveling device 15 by switching speed stages. The transmission 19 is configured to also switch between forward travel and rearward travel of the traveling device 15. The transmission 19 includes gears to transmit power, shifter(s) to change the connection of the gears, clutch(es) to switch between transmission and non-transmission of power, and/or the like. The transmission 19 is configured such that the gears, shifter(s), clutch(es) and/or the like switch the propelling force of the traveling device 15 and switch between forward travel and rearward travel of the traveling device 15. With this, the power generated by the prime mover 18 is transmitted via the transmission 19 to the traveling device 15. This drives the traveling device 15 to cause the traveling vehicle body 11 to travel forward or rearward. The transmission 19 is controlled by operating a first speed-stage controlling actuator 14b (e.g., shift lever) included in the first manual operator 14.

Note that the power unit 17 may be configured to output power to other device(s) and/or other apparatus(es) other than the traveling device 15. For example, the power unit 17 may be configured to not only output power to the traveling device 15 but also to output power to drive a working device 25 (described later). Specifically, the power unit 17 outputs power to an output shaft 20 (PTO shaft). The transmission 19 transmits power from the prime mover 18 to the output shaft 20. The output shaft 20 is configured to be connected to the working device 25 to drive the working device 25.

The power unit 17 outputs power to a hydraulic pump 21. The hydraulic pump 21 is driven by power outputted from the prime mover 18 to deliver hydraulic fluid sucked from a hydraulic fluid tank. The hydraulic pump 21 supplies hydraulic fluid to hydraulic devices of the working machine 1.

As illustrated in FIG. 2, the working machine 1 includes a steering system 22. The steering system 22 is configured to change the steering direction and steering angle (steered angle) of the working machine 1. That is, the steering system 22 is configured to steer the working machine 1. In the present example embodiment, the steering system 22 is supplied with hydraulic fluid delivered by the hydraulic pump 21, and the hydraulic fluid changes the steering direction and the steered angle. The steering system 22 includes a steering control valve 22a, a steering cylinder 22b, and arms 22c (knuckle arms).

The steering control valve 22a is supplied with hydraulic fluid delivered by the hydraulic pump 21 to adjust the flow rate and/or the like of the hydraulic fluid to be supplied to the steering cylinder 22b. The steering control valve 22a is, for example, a three-position switching valve which is switchable by the movement of a spool or the like. The steering control valve 22a is controlled by operating a first steering controlling actuator 14c (steering wheel) included in the first manual operator 14. Specifically, the steering control valve 22a is switched according to the direction of rotation of a rotary shaft (steering shaft) rotated by the first steering controlling actuator 14c (according to the steering direction).

The steering cylinder 22b is driven by hydraulic fluid supplied from the steering control valve 22a. The steering cylinder 22b extends or retracts in a first direction or a second direction opposite to the first direction along the width of the working machine 1 according to the switching position and the opening of the steering control valve 22a.

The arms 22c are connected to the steering cylinder 22b, and is configured to move as the steering cylinder 22b extends or retracts to change the steering (steering direction and steered angle) of the front wheels 16F.

As illustrated in FIG. 2, the working machine 1 includes a braking system 23. The braking system 23 is configured to brake the working machine 1 (traveling device 15). In the present example embodiment, the braking system 23 is supplied with hydraulic fluid delivered by the hydraulic pump 21, and is actuated by the hydraulic fluid to brake the traveling device 15. The braking system 23 is configured to brake at least one of a pair of front wheels 16F or a pair of rear wheels 16R. The braking system 23 includes a master cylinder 23a, hydraulic actuator(s) 23b, and brake control valve(s) 23c. The braking system 23 includes brake mechanism(s) 23d.

The master cylinder 23a actuates the brake mechanism(s) 23d by the pressure of hydraulic fluid. The master cylinder 23a is configured to, for example, pressurize the hydraulic fluid delivered by the hydraulic pump 21 using an accumulator, and the pressure of the hydraulic fluid actuates the brake mechanism(s) 23d. The master cylinder 23a is controlled by operating a first brake controlling actuator 14d included in the first manual operator 14. The first brake controlling actuator 14d includes, for example, a foot pedal and/or a lever.

The master cylinder 23a is connected to the first brake controlling actuator 14d via connector(s), and is actuated as the first brake controlling actuator 14d is operated. With this, the master cylinder 23a supplies hydraulic fluid to the brake mechanism(s) 23d to apply the pressure of the hydraulic fluid to the brake mechanism(s) 23d to actuate the brake mechanism(s) 23d.

Each hydraulic actuator 23b is actuated by the supplied hydraulic fluid to move connector(s) to in a direction that applies the brake. The hydraulic actuator 23b is connected to the corresponding brake control valve 23c via a fluid passage. The brake control valve 23c is supplied with hydraulic fluid delivered by the hydraulic pump 21 to adjust the flow rate and/or the like of hydraulic fluid to be supplied to the hydraulic actuator 23b. The brake control valve 23c is, for example, a two-position switching valve which is switchable by the movement of a spool or the like. Therefore, the hydraulic fluid that acts on the hydraulic actuator 23b can be changed by changing the switching position of the brake control valve 23c. The hydraulic actuator 23b is configured to thus move the connector(s) in the direction that applies the brake.

The brake mechanisms 23d are configured to brake at least one of the pair of front wheels 16F or the pair of rear wheels 16R. Each brake mechanism 23d includes, for example, a disc brake. The brake mechanism 23d includes a brake piston, and the brake piston is actuated to change the braking force. Specifically, as the connector is operated in the direction that applies the brake and hydraulic fluid is supplied from the master cylinder 23a, the brake piston presses a brake disc and a brake plate to increase the braking force. On the contrary, as the connector is operated in a direction that releases the brake and hydraulic fluid is returned to the master cylinder 23a, the brake piston moves away from the brake disc and the brake plate to reduce the braking force.

Note that the steering system 22 and the brake mechanisms 23d as described above are mere examples, and their configuration is not limited to the examples described above. For example, although the above description discusses cases in which the steering system 22 and the brake mechanisms 23d operate on the supplied hydraulic fluid, the steering system 22 and the brake mechanisms 23d may be actuated by some other driving source other than hydraulic devices (e.g., electric actuator(s).)

As illustrated in FIG. 3, the working machine 1 includes a linkage 24. The linkage 24 is configured to attach and detach a working device 25 (implement) thereto and therefrom. Such linkage(s) 24 is/are provided at a front portion and/or a rear portion of the traveling vehicle body 11. In the example in FIG. 3, the linkage 24 is provided at the rear portion of the traveling vehicle body 11. Therefore, the working machine 1 is connected to the working device 25 via the linkage 24, and is configured to move together with the working device 25. In the present example embodiment, the linkage 24 is a lifter including a three-point linkage, for example. The lifter 24 is controlled by operating a first lifting controlling actuator 14e (e.g., lifting lever) included in the first manual operator 14. Note that the linkage 24 is not limited to the lifter 24, and may include, for example, a swinging drawbar or the like.

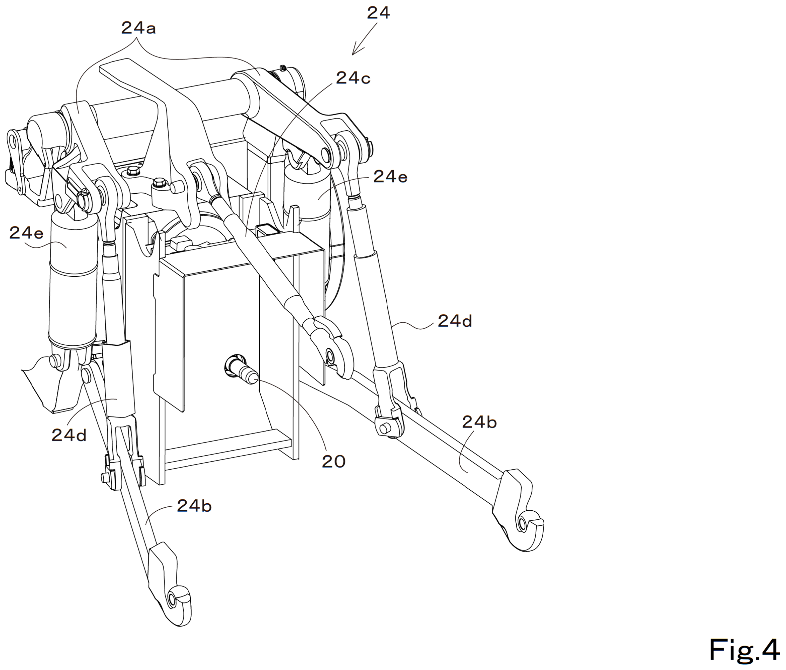

FIG. 4 is a rear perspective view of the lifter 24. The lifter 24 includes lift arm(s) 24a, lower link(s) 24b, a top link 24c, lift rod(s) 24d, and lift cylinder(s) 24e.

The front ends of the lift arms 24a are connected to an upper rear portion of the traveling vehicle body 11 such that the lift arms 24a are swingable up and down. The lift arms 24a swing (are raised or lowered) by being driven by the lift cylinders 24e. The lift cylinders 24e each include a hydraulic device (hydraulic cylinder). As illustrated in FIG. 2, the lift cylinders 24e are connected to the hydraulic pump 21 via a lifting control valve 24f. The lifting control valve 24f is configured to, as the first lifting controlling actuator 14e is operated, change the flow rate and/or the like of hydraulic fluid supplied from the hydraulic pump 21 to the lift cylinder(s) 24e or hydraulic fluid discharged from the lift cylinder(s) 24e to cause the lift cylinder(s) 24e to extend or retract.

As illustrated in FIG. 4, the front ends of the lower links 24b are supported on a lower rear portion of the traveling vehicle body 11 such that the lower links 24b are swingable up and down. The front end of the top link 24c is positioned higher than the lower links 24b, and supported on the rear portion of the traveling vehicle body 11 such that the top link 24c is swingable up and down. The lift rods 24d connect the lift arms 24a and the lower links 24b. The rear portions of the lower links 24b and the rear portion of the top link 24c are each in a hook form.

When the lift cylinders 24e are driven (extend or retract), the lift arms 24a are raised or lowered, as well as the lower links 24b connected to the lift arms 24a via the lift rods 24d are raised or lowered. With this, the working device 25 swings up or down (is raised or lowered) about the front portions of the lower links 24b.

Examples of the working device 25 include tillers for tillage, ridgers to make ridges, ditchers to ditch furrows, harvesters to harvest, mowers to mow grass or the like, tedders to ted grass or the like, rakes to rake grass or the like, balers to bale grass or the like, fertilizer spreaders to spread fertilizer, agricultural chemical spreaders to spread agricultural chemicals, separators to separate crops, and carriages to carry materials and/or the like.

Note that the working device 25 may be configured to be driven by power transmitted from the output shaft 20. The working device 25 may include a hydraulic device to be driven by hydraulic fluid supplied from the hydraulic pump 21 and may be driven by the hydraulic device. The working device 25 may include an electric actuator to be driven by electricity supplied from a storage battery such as a battery and may be driven by the electric actuator.

As illustrated in FIG. 2, the working machine 1 includes a first controller 31. The working machine 1 also includes a first storing device (memory and/or storage) 32.

The first controller 31 includes one or more processors. The first controller 31 is configured or programmed to control the working machine 1, and perform various controls relating to the working machine 1. The first controller 31 is communicably connected to apparatuses and devices provided in or on the working machine 1 via an in-vehicle network such as CAN, ISOBUS, LIN, and/or FlexRay.

For example, the first controller 31 is configured or programmed to control driving, stopping, and the rotation speed of the prime mover 18. The first controller 31 is configured or programmed to control the transmission 19 to change the vehicle speed of the working machine 1 (traveling vehicle body 11) and switch between forward travel and rearward travel of the working machine 1. The first controller 31 is configured or programmed to control the transmission 19 to change the rotation speed of the output shaft 20 to control driving of the working device 25 connected to the output shaft 20. The first controller 31 is configured or programmed to control the steering control valve 22a to control steering performed by the steering system 22. The first controller 31 is configured or programmed to control the brake control valve 23c to control braking performed by the braking system 23. The first controller 31 is configured or programmed to control the lifting control valve 24f to control raising and lowering of the lifter 24.

Note that the first controller 31 may be configured or programmed to, in the case where the working device 25 includes an electric actuator, control electricity supplied to the electric actuator to control driving of the working device 25. The first controller 31 may be configured or programmed to, in the case where the working device 25 includes a hydraulic device, control a control valve provided in a fluid passage connecting the hydraulic pump 21 and the hydraulic device to control driving of the working device 25.

The first controller 31 includes one or more memories, analog circuits, digital circuits, and/or the like. The one or more memories store (record) software program(s) to be executed by one or more processors, various information (data, signals, and/or the like), and/or the like. The first controller 31 is configured or programmed cause the one or more processors to read software program(s) from the one or more memories to perform various processes based on the software program(s). Note that the first controller 31 may be configured or programmed to cause the one or mor processors to perform various processes based on predetermined logic circuit(s).

Examples of the one or more processors include Central Processing Unit (CPU), Graphics Processing Unit (GPU), Digital Signal Processor (DSP), Field Programmable Gate Array (FPGA), and Application Specific Integrated Circuit (ASIC).

Note that the first controller 31 may be such that a plurality of physically separated processors cooperate together to perform various processes, and the configuration thereof is not limited to those described above. In such a case, the plurality of processors are provided in one or more computers physically separated from the working machine 1, and the processors are communicably connected via a network such as an in-vehicle network, LAN, WAN, and/or the Internet.

The software program(s) may be stored in the first storing device 32 communicably connected to the first controller 31 or an external server connected to the first controller 31 via a network such as those described above, and may be installed in the one or more memories from the first storing device 32 or the external server.

The first storing device 32 stores various information relating to the working machine 1 in a read/write manner. The first storing device 32 includes a nonvolatile memory such as a Hard Disk Drive (HDD) and/or a Solid State Drive (SSD). The first storing device 32 is communicably connected to the first controller 31, and the first controller 31 is configured or programmed to acquire various information stored in the first storing device 32.

As illustrated in FIG. 2, the working machine 1 includes a state detector 33. The state detector 33 detects the state (operating status) of the working machine 1. Specifically, the state detector 33 includes sensors provided in or on devices or apparatuses of the working machine 1. The state detector 33 is communicably connected to the first controller 31 and is configured to input the detection result into the first controller 31. The first controller 31 is configured or programmed to thus calculate (acquire) the operating status of the working machine 1 based on the detection result from the state detector 33. The first controller 31 is configured or programmed to control devices and apparatuses based on the calculated operating status of the working machine 1.

The state detector 33 includes, for example, a water temperature sensor 33a, a fuel sensor 33b, a rotation sensor 33c, a speed sensor 33d, and/or the like. The water temperature sensor 33a is configured to detect the temperature of cooling water to cool the prime mover 18 (detect water temperature). The fuel sensor 33b is configured to detect the remaining amount of fuel to drive the prime mover 18. The rotation sensor 33c is configured to detect the rotation speed of the prime mover 18. The speed sensor 33d is configured to detect the travel speed (vehicle speed) of the traveling vehicle body 11.

The state detector 33 includes a steering angle sensor 33e to detect the steering angle achieved by the steering system 22. The state detector 33 includes a braking detection sensor 33f to detect the operating status of the braking system 23. The braking detection sensor 33f includes, for example, a pressure sensor to detect the pressure of hydraulic fluid acting on the brake piston.

Note that sensors and devices included in the state detector 33 are not limited to those described above, and the combination, types and the like thereof are not limited to those described above. The state detector 33 may include sensor(s) to detect the direction and amount of the operation of the first manual operator 14 of the working machine 1. The state detector 33 may include a PTO rotation sensor to detect the rotation speed of the output shaft 20, a battery sensor to detect the voltage of a storage battery such as a battery, and/or the like.

As illustrated in FIG. 2, the working machine 1 includes a first communicator 34. The first communicator 34 is a communication interface of the working machine 1, and includes a communication circuit. The first communicator 34 is communicable with devices external to the working machine 1, and receives input of and outputs various information (receives and transmits various information). For example, the first communicator 34 is communicable directly or indirectly with an assistance device 4 (describe later). The first communicator 34 communicates wirelessly with external devices via a cell phone communication network, the Internet, wireless LAN and/or the like.

The working machine 1 includes a sensing system 35. The sensing system 35 is configured to sense an environment in a surrounding area of the working machine 1. The first controller 31 is configured or programmed to detect workers, obstacles, and the like based on the sensing result from the sensing system 35. The first controller 31 may be configured or programmed to estimate the position of the working machine 1 based on the sensing result (detected point cloud data) and environmental map information stored in the first storing device 32 and/or the like.

The sensing system 35 includes an optical ranging sensor, a signal processing circuit, and the like. The optical ranging sensor of the sensing system 35 is, for example, a Light Detection And Ranging (LiDAR) sensor 37. The optical sensor(s) of the sensing system 35 include, for example, an imager 36 such as a camera, the LiDAR sensor 37, and/or the like.

The imager 36 includes a Charge Coupled Devices (CCD) camera with a CCD image sensor, a Complementary Metal Oxide Semiconductor (CMOS) camera with a CMOS image sensor, and/or the like. The imager 36 captures an image of a certain range of the surrounding area of the working machine 1, and generates image information (data). The imager 36 is configured to capture an image of, for example, an area forward of, leftward of, rearward of, and/or rightward of the working machine 1.

The range in which an image can be captured by the imager 36 is not particularly limited, and the range may include an area forward of and an area rearward of the working machine 1, and may include the interior of the protection structure 13. The signal processing circuit is configured to, based on the image information inputted from the imager 36, detect the presence or absence of an object, the position of the object, the type of the object, and/or the like.

The LiDAR sensor 37 (laser sensor) applies pulsed measuring light (laser light) several million times per second from a light source such as a laser diode, and scans the measuring light in the horizontal direction or the vertical direction by reflecting the measuring light with a rotatable mirror to project the light onto a predetermined detection range (sensing range, e.g., 360 degrees). The LiDAR sensor 37 then receives the measuring light reflected by an object at light receiver(s). The signal processing circuit detects the distance to the object based on the time from emission of measuring light from the LiDAR sensor 37 to reception of the reflected light by the LiDAR sensor 37 (time of flight (TOF) method).

Note that, although the above description discusses example cases in which the sensing system 35 includes an optical ranging sensor, a sonic ranging sensor (e.g., aerial ultrasonic sensor such as sonar) may be used instead of the optical ranging sensor. The following description of the present example embodiment discusses example cases in which the sensing system 35 of the working machine 1 includes the imager 36 and the LiDAR sensor 37. In the following description, the imager 36 attached to the working machine 1 may be referred to as a "first imager".

As illustrated in FIG. 2, the working machine 1 includes a first sound collector 38. The first sound collector 38 is provided in or on the traveling vehicle body 11 and is configured to collect sound from the surrounding area of the traveling vehicle body 11. The first sound collector 38 is, for example, a microphone attached to the protection structure 13. Specifically, the first sound collector 38 is provided inside the protection structure 13.

Note that the position at which the first sound collector 38 is attached is not limited to the interior of the protection structure 13, and may be outside the protection structure 13 (e.g., a position forward of the cabin). The first sound collector 38 is communicably connected to the first controller 31, and is configured to input the detected sound information into the first controller 31.

As illustrated in FIG. 2, the working machine 1 includes a position detector 39. The position detector 39 is configured to detect the position of the working machine 1 (measure the position of the working machine 1). The position detector 39 receives satellite signal(s) from a satellite positioning system using an GNSS antenna, and detects the position of the working machine 1 based on the satellite signal(s). Note that, for convenience of description, the following description mainly discusses cases in which the first controller 31 acquires the position of the working machine 1 (vehicle body position) based on the detection result from the position detector 39.

As has been described, the working machine 1 according to the present example embodiment includes the first manual operator 14, and is caused to operate by the worker manually operating the first manual operator 14 (manual operation control). The working machine 1 may be configured to be caused to operate without relying on the manual operation control, instead of or in addition to the worker's manual operation of the first manual operator 14 (manual operation control). For example, the working machine 1 may be configured to operate based on information acquired by the state detector 33 and/or the like.

For example, the working machine 1 may be configured to be caused to operate by remote operation (manual remote operation). That is, the first controller 31 may be configured or programmed to control travel, work, and/or the like of the working machine 1 in response to remote operation (remote operation control). In such a case, the first controller 31 is configured or programmed to control the operation of the power unit 17, the steering system 22, and/or the like based on an operation signal (operation information) received by the first communicator 34 from an external device and based on the state of the working machine 1 detected by the state detector 33.

The working machine 1 may be configured to automatically control the vehicle speed of the traveling vehicle body 11 and automatically control the steering system 22. That is, the first controller 31 may be configured or programmed to automatically control the vehicle speed of the traveling vehicle body 11 and the operation of the steering system 22 to automatically control the travel, work, and/or the like of the working machine 1 (automatic operation control). For example, the first controller 31 is configured or programmed to perform a line-based automatic operation control. The first controller 31 is configured or programmed to, in the line-based automatic operation control, control the operation of the power unit 17, the steering system 22 and the like based on the vehicle body position and a predetermined planned travel line such that the vehicle body position moves along the planned travel line.

The first controller 31 may be configured or programmed to perform an autonomous-based automatic operation control which is a type of the automatic operation control. The first controller 31 is configured or programmed to, in the autonomous-based automatic operation control, set (define) the steering direction, travel speed (speed) and the like of the traveling vehicle body 11 based on the sensing result from the sensing system 35, and control the operation of the power unit 17, the steering system 22 and the like such that the defined steering direction and travel speed are achieved.

The working machine 1 may be configured to automatically control the steering system 22. That is, the first controller 31 may be configured or programmed to automatically control the operation of the steering system 22 to automatically control steering of the working machine 1 (automatic steering control). The first controller 31 is configured or programmed to, in the automatic steering control, control the operation of the steering system 22 based on the vehicle body position and the predetermined planned travel line such that the vehicle body position moves along the planned travel line. In such a case, the traveling device 15 is caused to operate by operating the first manual operator 14 or by remote operation.

For convenience of description, the following description discusses example cases in which the working machine 1 is configured to operate selectively in the manual operation control, remote operation control, automatic operation control, or automatic steering control. Therefore, the first controller 31 (working machine 1) according to the present example embodiment is configured or programmed to switch between a manual operation mode (first mode) in which the working machine 1 operates in the manual operation control, a remote operation mode (second mode) in which the working machine 1 operates in the remote operation control, an automatic travel mode (third mode) in which the working machine 1 operates in the automatic operation control, and an automatic steering mode (fourth mode) in which the working machine 1 operates in the automatic steering control.

Note that the working machine 1 need only be configured to operate in at least one of the operation controls in the first to fourth modes. Therefore, the modes that can be performed by the first controller 31 are not limited to all the first to fourth modes. For example, in the case where the working machine 1 is configured to operate selectively in the manual operation control or the remote operation control, the first controller 31 is configured or programmed to switch between the first mode and the second mode. In the case where the working machine 1 is configured to operate selectively in the remote operation control or the automatic operation control, the first controller 31 is configured or programmed to switch between the second mode and the third mode.

### Assistance terminal 2

An assistance terminal 2 is configured to assist working machine(s) 1 at a location outside the working machine(s) 1. The assistance terminal 2 is configured to be operated by a human operator such as a worker. Examples of the operator who operates the assistance terminal 2 other than the worker include a manager of the working machine 1, an owner of the working machine 1, a maintenance worker who performs maintenance of the working machine 1, a clerical worker who communicates information or the like with the maintenance worker, and a sales person of a dealer of the working machine 1.

For example, the assistance terminal 2 is located at a position (remote place) remote from the working machine 1. In the present example embodiment, the remote place refers to an area at least outside the working machine 1 and including the surrounding area of the working machine 1. In other words, the remote place may be an area outside the working machine 1 that does not include the interior of the protection structure 13. In such a case, the range within about 1 m from the working machine 1 can be the remote place. In the case where the working machine 1 is located in a worksite (agricultural field), a road (e.g., farm road) in the vicinity of the worksite can be the remote place.

The assistance terminal 2 may be fixed to or provided movably on the exterior of the working machine 1. The assistance terminal 2 may be detachably attached to the working machine 1 and be configured to be carried to the outside of the working machine 1.

Note that, although the example of the assistance terminal 2 in the example in FIG. 1 is a stationary terminal provided at a remote place remote from the working machine 1, the assistance terminal 2 may be a mobile terminal that can be moved by the operator such as a tablet terminal or a laptop terminal.

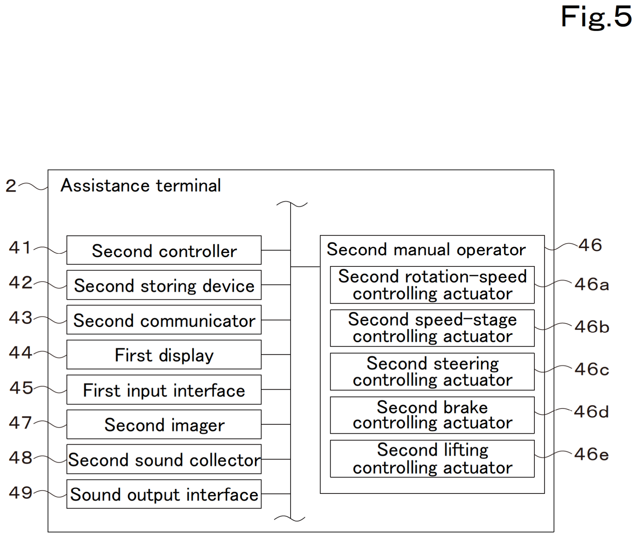

FIG. 5 is a block diagram illustrating the assistance terminal 2. As illustrated in FIG. 5, the assistance terminal 2 includes a second controller 41. The assistance terminal 2 includes a second storing device (memory and/or storage) 42. The second controller 41 includes a processing circuit including one or more processors. The second controller 41 is configured or programmed to control the assistance terminal 2, and perform various controls relating to the assistance terminal 2. The second controller 41 includes one or more memories, analog circuits, digital circuits, and/or the like. The one or more memories store (record) software program(s) to be executed by one or more processors, various information, and/or the like. The second controller 41 is configured or programmed cause the one or more processors to read software program(s) from the one or more memories to perform various processes based on the software program(s).

Note that the second controller 41 may be configured or programmed to cause the one or mor processors to perform various processes based on predetermined logic circuit(s), as described in relation to the first controller 31. Note also that the second controller 41 may be such that a plurality of physically separated processors cooperate together to perform various processes, and the configuration thereof is not limited to those described above, as described in relation to the first controller 31.

The second storing device 42 stores various information in a read/write manner. The second storing device 42 includes a nonvolatile memory such as a HDD and/or a SSD. The second storing device 42 is communicably connected to the second controller 41, and the second controller 41 is configured or programmed to acquire various information stored in the second storing device 42.

As illustrated in FIG. 5, the assistance terminal 2 includes a second communicator 43. The second communicator 43 is a communication interface of the assistance terminal 2, and includes a communication circuit. The second communicator 43 is configured to communicate with devices external to the assistance terminal 2, and receive input of and output (receive and transmit) various information and the like. For example, the second communicator 43 is communicable directly or indirectly with the assistance device 4 (described later). The second communicator 43 is configured to perform wireless communication via the Internet, wireless LAN, cell phone communication network, and/or the like.

As illustrated in FIG. 5, the assistance terminal 2 includes a first display 44. The first display 44 is configured to display various information. The first display 44 is, for example, a liquid crystal display, an OLED display, or the like. The first display 44 is controlled by the second controller 41. For example, the second controller 41 is configured or programmed to control the first display 44 to cause the first display 44 to display information relating to assistance for the working machine 1. Note that the first display 44 may be hereinafter referred to simply as a "display". Thus, it can be said that the assistance system S includes the first display 44 (display).

As illustrated in FIG. 5, the assistance terminal 2 includes a first input interface 45. The first input interface 45 is configured to receive operator's operations. Thus, the human operator is able to input instruction information into the assistance terminal 2 by operating the first input interface 45.

The first input interface 45 is, for example, an operation actuator such as a mouse or keyboard. The first input interface 45 is operated by the human operator and inputs instruction information based on the operation into the second controller 41. The second controller 41 is configured or programmed to, for example, based on the instruction information inputted from the first input interface 45, receive a selection or setting of a piece of information displayed on the first display 44 or an instruction relating to information displayed on the first display 44.

Note that the first input interface 45 is not limited to the mouse or keyboard, and may be a touch panel provided in the first display 44. In such a case, the first input interface 45 is configured to detect a touch on the first display 44 and input instruction information based on the touch into the second controller 41.

As illustrated in FIG. 5, the assistance terminal 2 may include a second manual operator 46. The second manual operator 46 is configured to remotely operate devices and apparatuses of the working machine 1. The second manual operator 46 is configured to be manually operated by the human operator. Therefore, different from the first manual operator 14, the second manual operator 46 is configured to be operated by a human operator not in the working machine 1 (human remote operator). The second manual operator 46 preferably includes operation actuators similar to those of the first manual operator 14.

For example, the second manual operator 46 includes a second rotation-speed controlling actuator 46a (e.g., accelerator pedal or the like). The second rotation-speed controlling actuator 46a is configured to be used to remotely control the rotation speed of the prime mover 18. The second manual operator 46 includes a second speed-stage controlling actuator 46b (e.g., shift lever or the like). The second speed-stage controlling actuator 46b is configured to be used to remotely control speed changes and forward and rearward travels achieved by the transmission 19. The second manual operator 46 includes a second steering controlling actuator 46c (steering wheel). The second steering controlling actuator 46c is configured to be used to remotely control steering achieved by the steering system 22. The second manual operator 46 includes a second brake controlling actuator 46d (brake pedal, parking brake). The second brake controlling actuator 46d is configured to be used to remotely control braking achieved by the braking system 23. The second manual operator 46 includes a second lifting controlling actuator 46e (lifting lever). The second lifting controlling actuator 46e is configured to be used to remotely control raising and lowering of the lifter 24.

Note that the second manual operator 46 is not limited to the foregoing second rotation-speed controlling actuator 46a, second speed-stage controlling actuator 46b and the like, and is not particularly limited as to the types and combinations thereof. For example, in the case where the working device 25 is driven by some other power source (such as a hydraulic device or electric actuator) instead of or in addition to the power transmitted from the output shaft 20, the second manual operator 46 may include an operation actuator to be operated to control such other power source. The second manual operator 46 is not limited to a hardware operation actuator, and may include software operation actuator(s) displayed on the first display 44.

Note that the assistance terminal 2 do not need to include the second manual operator 46 in the case where the assistance terminal 2 does not remotely operate (control) the working machine 1.

As illustrated in FIG. 5, the assistance terminal 2 may include a second imager 47. The second imager 47 is provided in or on the assistance terminal 2, and is configured to capture an image of the operator who operates the assistance terminal 2. The second imager 47 includes a CCD camera with a CCD image sensor, a CMOS camera with a CMOS image sensor. and/or the like. The second imager 47 is attached to, for example, the front surface (the surface on which screens are displayed) of the first display 44, and is configured to capture an image of the face of the operator who looks at the screen displayed on the first display 44 (display screen).

The second imager 47 captures an image and generates image information (data). The second imager 47 is communicably connected to the second controller 41, and is configured to input the generated image information into the second controller 41. Note that the position at which the second imager 47 is attached is not limited to the first display 44. The second imager 47 may be provided in or on the assistance terminal 2 independently of the first display 44.

As illustrated in FIG. 5, the assistance terminal 2 may include a second sound collector 48. The second sound collector 48 is provided in or on the assistance terminal 2, and is configured to collect sound from the surrounding area of the assistance terminal 2. The second sound collector 48 is, for example, a microphone attached to the first display 44. For example, the second sound collector 48 is configured to detect, as sound information, a voice emitted by the operator in the vicinity of the first display 44.

Specifically, the second sound collector 48 is attached to the front surface of the first display 44, the second sound collector 48 is communicably connected to the second controller 41, and the second sound collector 48 is configured to input the detected sound information into the second controller 41. Note that the position at which the second sound collector 48 is attached is not limited to the front surface of the first display 44. The second sound collector 48 may be provided in or on the assistance terminal 2 independently of the first display 44.

As illustrated in FIG. 5, the assistance terminal 2 may include a sound output interface 49. The sound output interface 49 is provided in or on the assistance terminal 2, and is configured to output sound based on sound information. The sound output interface 49 is, for example, a speaker attached to the first display 44. For example, the sound output interface 49 is configured to output sound to the operator who looks at the first display 44.

Specifically, the sound output interface 49 includes sound output interfaces attached to the opposite sides of the first display 44 in the width direction. The sound output interface 49 is communicably connected to the second controller 41. The second controller 41 controls the sound output interface 49 based on sound information to cause the sound output interface 49 to output sound. Note that the positions at which the sound output interfaces of the sound output interface 49 are attached are not limited to the opposite sides of the first display 44 in the width direction. The sound output interface 49 may be provided in or on the assistance terminal 2 independently of the first display 44.

### Management terminal 3

As illustrated in FIG. 1, the assistance system S includes a management terminal 3. The management terminal 3 is configured to be operated to allow function(s)-for-assistance for working machine(s) 1 to be assigned to assistance terminal(s) 2. The management terminal 3 is configured to be operated by the manager, the owner, etc., of the working machine 1 (the manager, the owner, etc., may be hereinafter referred to collectively as "manager etc."). The management terminal 3 is located remotely from the working machine 1 (located at a remote place from the working machine 1)

Note that, although the example of the management terminal 3 in the example illustrated in FIG. 1 is a stationary terminal provided at a remote place from the working machine 1, the management terminal 3 may be a mobile terminal that can be carried by the manager etc. such as a tablet terminal or a laptop terminal.

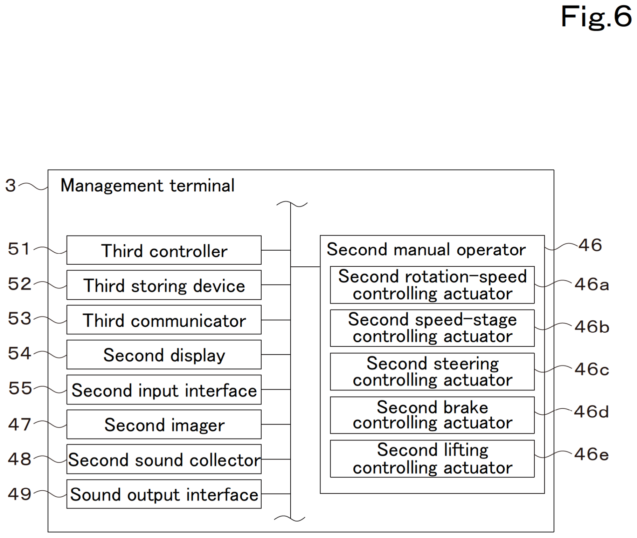

FIG. 6 is a block diagram illustrating the management terminal 3. As illustrated in FIG. 6, the management terminal 3 includes a third controller 51. The management terminal 3 includes a third storing device (memory and/or storage) 52. The third controller 51 includes a processing circuit including one or more processors. The third controller 51 is configured to programmed to control the management terminal 3, and perform various controls relating to the management terminal 3. The third controller 51 includes one or more memories, analog circuits, digital circuits, and/or the like. The one or more memories store (record) software program(s) to be executed by the one or more processors, various information, and/or the like. The third controller 51 is configured or programmed to cause the one or more processors to read software program(s) from the one or more memories to perform various processes based on the software program(s).

Note that the third controller 51 may be configured or programmed to cause one or more processors to perform various processes based on predetermined logic circuit(s), as described in relation to the first controller 31. Note also that, as described in relation to the first controller 31, the third controller 51 may be such that a plurality of physically separated processors cooperate together to perform various processes, and the configuration thereof is not limited to those described above.

The third storing device 52 stores various information in a read/write manner. The third storing device 52 includes a nonvolatile memory such as a HDD and/or a SSD. The third storing device 52 is communicably connected to the third controller 51, and the third controller 51 is configured or programmed to acquire various information stored in the third storing device 52.

As illustrated in FIG. 6, the management terminal 3 includes a third communicator 53. The third communicator 53 is a communication interface of the management terminal 3, and includes a communication circuit. The third communicator 53 is configured to communicate with devices external to the management terminal 3, and receive input of and output (receive and transmit) various information and the like. For example, the third communicator 53 is communicable directly or indirectly with the assistance device 4 (described later). The third communicator 53 is configured to perform wireless communication via the Internet, wireless LAN, cell phone communication network, and/or the like.

As illustrated in FIG. 6, the management terminal 3 includes a second display 54. The second display 54 is configured to display various information. The second display 54 is, for example, a liquid crystal display, an OLED display, or the like. The second display 54 is controlled by the third controller 51. For example, the third controller 51 is configured or programmed to control the second display 54 to cause the second display 54 to display information relating to assignment of functions-for-assistance to assistance terminal(s) 2. Note that the second display 54 may be hereinafter referred to simply as a "display". Thus, it can be said that the assistance system S includes the second display 54 (display).

As illustrated in FIG. 6, the management terminal 3 includes a second input interface 55. The second input interface 55 is configured to receive operations of the manager etc. Thus, the manager etc. is able to input instruction information into the management terminal 3 by operating the second input interface 55.

The second input interface 55 is, for example, an operation actuator such as a mouse or keyboard. The second input interface 55 is operated by the manager etc. and inputs instruction information based on the operation into the third controller 51. The third controller 51 is configured or programmed to, for example, based on the instruction information inputted from the second input interface 55, receive a selection or setting of a piece of information displayed on the second display 54 or an instruction relating to information displayed on the second display 54.

Note that the second input interface 55 is not limited to the mouse or keyboard, and may be a touch panel provided in the second display 54. In such a case, the second input interface 55 is configured to detect a touch on the second display 54 and input instruction information based on the touch into the third controller 51.

The management terminal 3 may be configured to operate (function) as a terminal configured to, in addition to allowing functions-for-assistance to be assigned to assistance terminal(s) 2, be used by the manager etc. to assist the working machine 1. In such a case, the management terminal 3 functions also as an assistance terminal 2. In this case, it is only necessary that the second controller 41 in the description be replaced by the third controller 51, the second storing device 42 in the description be replaced by the third storing device 52, and the second communicator 43 in the description be replaced by the third communicator 53.

In the case where the management terminal 3 functions also as an assistance terminal 2, the management terminal 3 may include the second manual operator 46. The management terminal 3 may include the second imager 47. The management terminal 3 may include the second sound collector 48. The management terminal 3 may include the sound output interface 49.

Note, however, that in the case where the management terminal 3 does not function also as an assistance terminal 2, the management terminal 3 does not need to include the second manual operator 46 and the like.

### Assistance device 4

As illustrated in FIG. 1, the assistance system S according to the present example embodiment includes an assistance device 4. For example, the assistance device 4 is a stationary terminal such as a stationary computer to receive and manage various information transmitted from working machine(s) 1, assistance terminal(s) 2, and the management terminal 3. In the present example embodiment, the assistance device 4 transmits (provides) various information received from working machine(s) 1, assistance terminal(s) 2, and/or the management terminal 3 to working machine(s) 1, assistance terminal(s) 2, and/or the management terminal 3. Thus, the working machine(s) 1, the assistance terminal(s) 2, and the management terminal 3 communicate with each other via the assistance device 4 in a client-server manner.

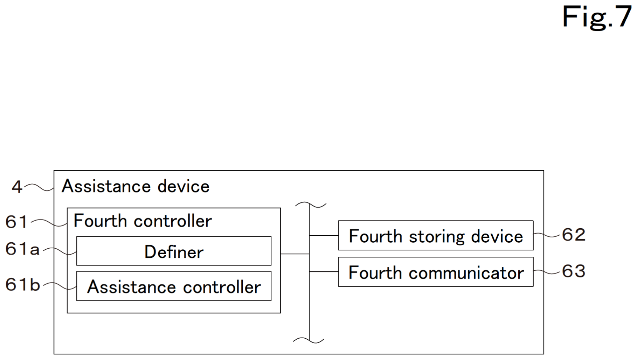

The assistance device 4 is a server located at a maker (manufacturer) of the working machine(s) 1, a server located at a dealer (party which sales and provides maintenance service) to sale the working machine(s) 1 and provide maintenance service relating to the working machine(s) 1, a server at a rental service provider (rental company) to rent the working machine(s) 1, and/or the like. FIG. 7 is a block diagram illustrating the assistance device 4. As illustrated in FIG. 7, the assistance device 4 includes a fourth controller 61, a fourth storing device (memory and/or storage) 62, and a fourth communicator 63.

The fourth controller 61 includes a processing circuit including one or more processors. The fourth controller 61 is configured or programmed to perform various calculating processes. The fourth controller 61 includes one or more memories, analog circuits, digital circuits, and/or the like. The one or more memories store (record) software program(s) to be executed by one or more processors, various information, and/or the like. The fourth controller 61 is configured or programmed cause the one or more processors to read software program(s) from the one or more memories to perform various processes based on the software program(s).

Note that the fourth controller 61 may be configured or programmed to cause the one or mor processors to perform various processes based on predetermined logic circuit(s), as described in relation to the first controller 31. Note also that the fourth controller 61 may be such that a plurality of physically separated processors cooperate together to perform various processes, and the configuration thereof is not limited to those described above, as described in relation to the first controller 31.

The fourth storing device 62 stores various information in a read/write manner. The fourth storing device 62 includes a nonvolatile memory such as a HDD and/or a SSD. The fourth storing device 62 is communicably connected to the fourth controller 61, and the fourth controller 61 is configured or programmed to acquire various information stored in the fourth storing device 62.

For example, the fourth storing device 62 stores a user table T1 to manage user information relating to user(s). The user is, for example, the operator who operates the assistance terminal 2. Thus, examples of the user include a manager of the working machine(s) 1, an owner of the working machine(s) 1, a worker who performs work using the working machine(s) 1, a maintenance worker who performs maintenance of the working machine(s) 1, a clerical worker who communicates information or the like with the maintenance worker, and a sales person of a dealer of the working machine(s) 1.

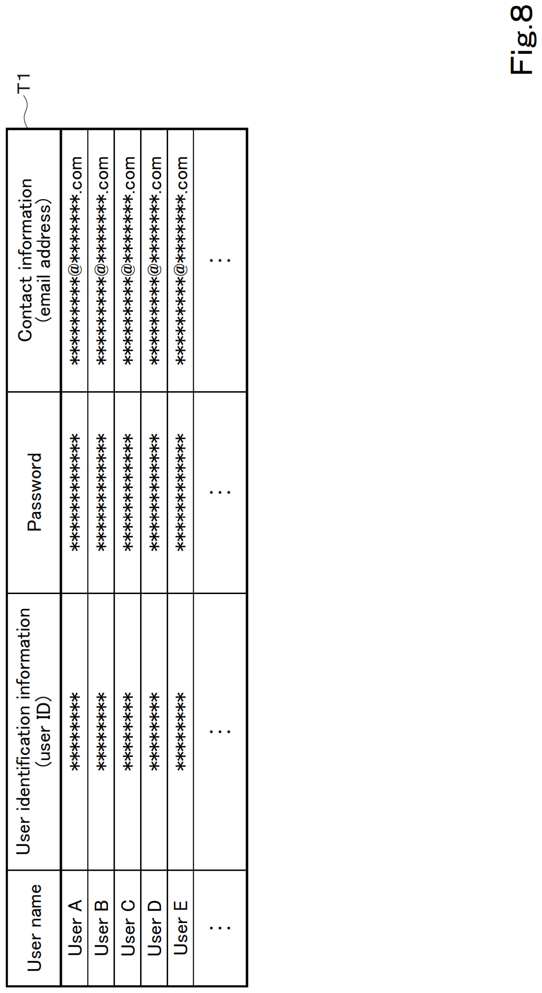

FIG. 8 is a block diagram illustrating an example of the user table T1. As illustrated in FIG. 8, the user table T1 stores pieces of user information of users including the user name(s) and piece(s) of user identification information (user ID(s)) associated with each other. The user information stored in the user table T1 may include login password(s), contact information, user type(s), and/or the like such that these are associated with the user name(s), etc., in addition to the user name(s) and the user identification information. The contact information includes, for example, an e-mail address, a phone number, and/or the like. The user type is, for example, information indicating the type of the role of the user such as a manager, owner, worker, maintenance worker, clerical worker, sales person or the like.

The user information stored in the user table T1 is not limited to the above-described examples, and may include other information such as affiliation information of each user (company or party to which the user belongs). The user information may include an IP address of the second communicator 43 of the assistance terminal 2 logged in by the user. For convenience of description, the following description discusses example cases in which the user information included in the user table T1 includes user name, user identification information, password, and e-mail address.

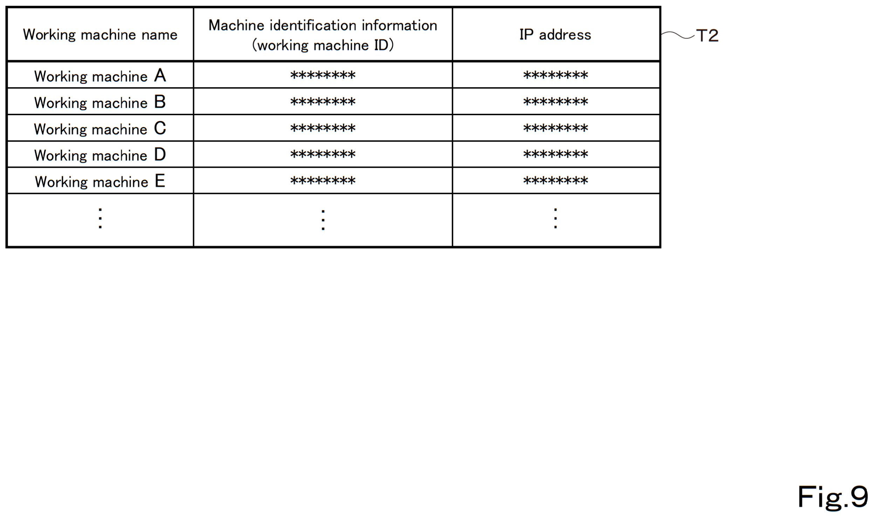

The fourth storing device 62 stores a working machine table T2 to manage working machine information relating to the working machine(s) 1. FIG. 9 is a block diagram showing an example of the working machine table T2. As illustrated in FIG. 9, the working machine table T2 stores, as the working machine information relating to each working machine 1, the name of the working machine and the machine identification information (working machine ID) which are associated with each other.

The working machine information stored in the working machine table T2 is not limited to the above-described examples, and may include other information such as the product serial number of the working machine 1, the type of the working machine 1, and/or the IP address of the first communicator 34. For convenience of description, the following description discusses example cases in which the working machine information included in the working machine table T2 includes the name of the working machine, machine identification information, and IP address.

The fourth storing device 62 may store update file(s) (update program(s)) to update software program(s) stored in a memory of the first controller 31 of each working machine 1. The update program is stored such that the update program is associated with information such as the type of the working machine 1.

Note that the information stored in the fourth storing device 62 is not limited to the above-describe examples, and the fourth storing device 62 may store other information. For example, the fourth storing device 62 may store first schedule information indicating an action plan for each working machine 1. The first schedule information includes the content of the action plan for each working machine 1, the start date and time of the action plan, and the end date and time of the action plan, which are associated with each other. The action plan for each working machine 1 is, for example, a work plan to be followed by the working machine 1 (a plan of work to be performed by the working machine 1). The action plan for each working machine 1 is not limited to the work plan to be followed by the working machine 1, and may include a transport plan for the working machine 1, a maintenance plan for the working machine 1, and/or the like. The transport plan for the working machine 1 is, for example, a plan for the working machine 1 to be transported from one worksite (first worksite) to another worksite (second worksite). The maintenance plan for the working machine 1 is a plan for maintenance work to be performed on the working machine 1.

The fourth storing device 62 may include second schedule information indicating an action plan for each user. The second schedule information includes the content of an action plan for each user, the start date and time of the action plan, and the end date and time of the action plan, which are associated with each other. The action plan for each user is not limited to work plans using working machine(s) 1, and may include a meeting plan relating to an online meeting to be attended by the user and other plan(s) (such as a business trip plan and/or a vacation plan for the user). The online meeting may be performed by the assistance device 4. The online meeting may be performed using an online meeting service performed by another server.

The fourth communicator 63 is a communication interface of the assistance device 4, and includes a communication circuit . The fourth communicator 63 is communicable with devices external to the assistance device 4, and receives input of and outputs (receives and transmits) various information. The fourth communicator 63 performs wireless communication via, for example, the Internet, a wireless LAN, a cell phone communication network, and/or the like. The fourth communicator 63 according to the present example embodiment is communicable with the first communicator 34 of the working machine(s) 1. The fourth communicator 63 is communicable with the second communicator 43 of the assistance terminal(s) 2. The fourth communicator 63 is communicable with the third communicator 53 of the management terminal 3.

Note that the fourth communicator 63 may be configured to be communicable with communicator(s) other than the first communicator 34, the second communicator 43, and the third communicator 53. For example, the fourth communicator 63 may be configured to be communicable with a server external to the assistance device 4. The fourth communicator 63 may be configured to receive update program(s) from the server. The update program received by the fourth communicator 63 is stored in the fourth storing device 62.

### Management of functions-for-assistance

In the present example embodiment, an assistance device 4 (fourth controller 61) manages function(s)-for-assistance to be performed by assistance terminal(s) 2 with respect to working machine(s) 1. Specifically, as illustrated in FIG. 7, the fourth controller 61 includes a definer 61a. In other words, it can be said that the assistance system S includes the definer 61a. The definer 61a includes one or more processors in the fourth controller 61, software program(s) stored in a memory, and/or the like.

The definer 61a defines a group G. As illustrated in FIG. 1, the group G includes one or more working machines 1 (i.e., at least one working machine 1) and one or more assistance terminals 2 (i.e., at least one assistance terminal 2). Each assistance terminal 2 belonging to a group G is allowed to (able to) perform one or more functions-for-assistance with respect to working machine(s) 1 belonging to the group G. The definer 61a is configured or programmed to define that one or more functions-for-assistance with respect to working machine(s) 1 belonging to the group G are assigned to assistance terminal(s) 2 belonging to the group G. With this, the assistance terminal(s) 2 is/are allowed to perform, with respect to the working machine(s) 1 belonging to the group G, the one or more functions-for-assistance defined by the definer 61a to be assigned thereto.

In the present example embodiment, when a user logs into an assistance terminal 2, the user is associated with the assistance terminal 2. Therefore, the definer 61a of the present example embodiment is configured or programmed to, by defining a group G including one or more users (i.e., at least one user), indirectly define a group G including one or more assistance terminals 2. That is, it can be said that each assistance terminal 2 belonging to a group G refers to an assistance terminal 2 logged in by a user belonging to the group G.

The definer 61a is configured or programmed to define that function(s)-for-assistance is/are assigned to each user to indirectly define that the function(s)-for-assistance is/are assigned to the assistance terminal 2 logged in by the user. With this, each user (operator) is allowed to perform the function(s)-for-assistance defined to be assigned thereto, using their logged in assistance terminal 2.

A function-for-assistance includes providing assistance with respect to function(s) of device(s) included in the working machine 1. For example, the function-for-assistance is performed by an assistance terminal 2 belonging to a group G and a working machine 1 belonging to the group G communicating various information to each other. That is, it can be said that the assignment of function(s)-for-assistance by the definer 61a is assignment of various information that can be communicated between the assistance terminal 2 and the working machine 1. Thus, it can be said that the definer 61a defines that information which can be communicated between an assistance terminal 2 belonging to a group G and a working machine 1 belonging to the group G is assigned to the assistance terminal 2 belonging to the group G, to thus define that function(s)-for-assistance allowed to be performed by the assistance terminal 2 are assigned to the assistance terminal 2.

A function-for-assistance may be performed by one assistance terminal 2 (first assistance terminal 2A) belonging to a group G and another assistance terminal 2 (second assistance terminal 2B) belonging to the group G communicating various information to each other. That is, it can be said that the assignment of function(s)-for-assistance by the definer 61a is assignment of various information that can be communicated between the first assistance terminal 2A and the second assistance terminal 2B. Thus, it can be said that the definer 61a defines that information which can be communicated between a first assistance terminal 2A belonging to a group G and a second assistance terminal 2B belonging to the group G is assigned to the first assistance terminal 2A belonging to the group G, to thus define that function(s)-for-assistance allowed to be performed by the first assistance terminal 2A are assigned to the first assistance terminal 2A.

For example, functions-for-assistance include remote operation of the working machine 1. The remote operation is a function-for-assistance in which a user at a remote place from a working machine 1 operates the working machine 1 to assist work and/or travel of the working machine 1. The assistance terminal 2 is configured to, in the case where the remote operation is assigned thereto as a function-for-assistance, accept operator's manual operations at the second manual operator 46 and remotely operate the working machine 1 according to the manual operations.

For example, the remote operation includes a first remote operation in which the travel (propelling force of the traveling device 15) of the working machine 1 is remotely controlled (such a remote operation is "remote travel-controlling operation"). The first remote operation is to be performed in response to manual operation(s) of the second rotation-speed controlling actuator 46a, the second speed-stage controlling actuator 46b, and/or the like. The first controller 31 is configured or programmed to, when in the second mode, upon acquisition of operation information relating to operation of the second rotation-speed controlling actuator 46a and the second speed-stage controlling actuator 46b, control the prime mover 18 and/or the transmission 19 based on the acquired operation information.

The remote operation may include a second remote operation in which the steering (steering direction, steering angle) of the working machine 1 is remotely controlled (such a remote operation is "remote steering-controlling operation"). The second remote operation is to be performed by manual operation of the second steering controlling actuator 46c. The first controller 31 is configured or programmed to, when in the second mode, upon acquisition of operation information relating to operation of the second steering controlling actuator 46c, control the steering system 22 based on the acquired operation information.

The remote operation may include a third remote operation in which braking of the working machine 1 (braking force of the braking system 23) is remotely controlled (such a remote operation is "remote braking-controlling operation"). The third remote operation is to be performed by manual operation of the second brake controlling actuator 46d. The first controller 31 is configured or programmed to, when in the second mode, upon acquisition of operation information relating to operation of the second brake controlling actuator 46d, control the braking system 23 based on the acquired operation information.

The remote operation may include a fourth remote operation in which work performed by the working device 25 is remotely controlled (such a remote operation is "remote work-controlling operation"). The fourth remote operation is to be performed by manual operation of the second lifting controlling actuator 46e and/or the like. The first controller 31 is configured or programmed to, when in the second mode, upon acquisition of operation information relating to operation of the second lifting controlling actuator 46e, control the lifter 24 based on the acquired operation information.

The remote operation may include a fifth remote operation in which modes of the first controller 31 are remotely switched (such a remote operation is "remote switching operation"). The fifth remote operation is to be performed by manual operation of, for example, software operation actuator(s) displayed on the first display 44. The first controller 31 is configured or programmed to, upon acquisition of operation information relating to operation of the software operation actuator(s), switch modes based on the operation information.

The functions-for-assistance may include remote configuration of working machine(s) 1. The remote configuration is a function-for-assistance in which a user at a remote place from a working machine 1 changes setting(s) of function(s) of the working machine 1 to assist work and/or travel of the working machine 1. The assistance terminal 2 is configured to, in the case where the remote configuration is assigned thereto a function-for-assistance, accept input operation via the first input interface 45, and make settings on the working machine 1 based on the input operation. Settings of the working machine 1 include enabling or disabling a function of the working machine 1, and setting an output limit of the power unit 17, etc. The assistance terminal 2 may be configured to, in the case where the remote configuration is assigned as a function-for-assistance, update software program(s) of the first controller 31 using update file(s).

The functions-for-assistance may include remote monitoring of working machine(s) 1. The remote monitoring is a function-for-assistance in which a user at a remote place from a working machine 1 monitors the working machine 1 to assist work and/or travel of the working machine 1. The assistance terminal 2 is configured to, in the case where the remote monitoring is assigned as a function-for-assistance, cause the first display 44 to display image information about an image captured by the first imager 36. The assistance terminal 2 is configured to, in the case where the remote monitoring is assigned as a function-for-assistance, cause the first display 44 to display the state of the working machine 1 detected by the state detector 33. The assistance terminal 2 is configured to, in the case where the remote monitoring is assigned as a function-for-assistance, cause the sound output interface 49 to output, as sound, sound information detected by the first sound collector 38.

The functions-for-assistance may include voice conversation between assistance terminals 2 belonging to a group G. The voice conversation is a function-for-assistance in which assistance terminals 2 belonging to a group G perform voice conversation to assist the cooperation between operators who operate the assistance terminals 2 to provide assistance relating to work performed by the working machine 1. The assistance terminal 2 is configured to, in the case where the voice conversation is assigned as a function-for-assistance, transmit sound information detected by its second sound collector 48 and allow the sound output interface 49 of another assistance terminal 2 belonging to the group G to output the sound information as sound. The assistance terminal 2 is configured to, in the case where the voice conversation is assigned as a function-for-assistance, receive sound information detected by the second sound collector 48 of another assistance terminal 2 belonging to the group and cause its sound output interface 49 to output the sound information as sound.

The assistance terminal 2 may be configured or programmed to, in the case where the voice conversation is assigned as a function-for-assistance, transmit image information about an image captured by its second imager 47 and allow the first display 44 of another assistance terminal 2 belonging to the group G to display the image information. In such a case, the assistance terminal 2 may be configured or programmed to, in the case where the voice conversation is assigned as a function-for-assistance, receive image information about an image captured by the second imager 47 of another assistance terminal 2 belonging to the group G and cause its first display 44 to display the image information.

The functions-for-assistance may include exchange of text massages between assistance terminals 2 belonging to a group G (i.e., chat function). The chat function is a function-for-assistance in which assistance terminals 2 belonging to a group G exchange (transmit/receive) text message(s), thus assisting the cooperation between operators who operate the assistance terminals 2 to provide assistance for work performed by the working machine 1. The assistance terminal 2 is configured to, in the case where the chat function is assigned thereto as a function-for-assistance, transmit a text message inputted via its first input interface 45 and allow the first display 44 of another assistance terminal 2 belonging to the group G to display the text message. The assistance terminal 2 is configured to, in the case where the chat function is assigned thereto as a function-for-assistance, receive a text message inputted via the first input interface 45 of another assistance terminal 2 belonging to the group G and cause its first display 44 to display the text message.

Note that the definer 61a is configured or programmed to not define that the remote configuration, which is one of the functions-for-assistance, is assigned to a user other than the manager etc., e.g., to a worker. In other words, users (assistance terminals 2) without administrative privileges are not permitted to perform the remote configuration of the working machine(s) 1.

The definer 61a may be configured or programmed to subdivide each of the remote operation, the remote configuration, the remote monitoring, the voice conversation, and/or the chat function of the functions-for-assistance and assign the subdivided functions. Specifically, the definer 61a is configured or programmed to separately (independently) assign the first to fifth remote operations of the remote operation, for example. Note, however, that the combination of functions-for-assistance that can be independently assigned by the definer 61a is not limited to the above examples, and the combination may be changeable according to need.

The functions-for-assistance include at least one of the remote operation of working machine(s) 1, the remote configuration of working machine(s) 1, or the remote monitoring of working machine(s) 1. The following description discusses example cases in which the functions-for-assistance include remote operation, remote configuration, remote monitoring, voice conversation, and chat function.

As illustrated in FIG. 1, the definer 61a of the present example embodiment is configured or programmed to redefine that function(s)-for-assistance, which is/are defined to be assigned to the management terminal 3, is/are assigned to assistance terminal(s) 2 belonging to a group G. In other words, the definer 61a is configured or programmed to redefine that function(s)-for-assistance, which is/are defined to be assigned to a user such as the manager etc., is/are assigned to other user(s) belonging to the group G.

That is, before the definer 61a defines that function(s)-for-assistance is/are assigned to assistance terminal(s) 2 belonging to a group G (i.e., when in the initial state), the function(s)-for-assistance with respect to working machine(s) 1 is/are assigned to the management terminal 3 in advance. Thus, in the initial state, the function(s)-for-assistance with respect to working machine(s) 1 is/are assigned to a user such as the manager etc. who manages the working machine(s) 1. For example, remote operation, remote configuration, and remote monitoring are assigned in advance to the management terminal 3 (user such as the manager etc.) as the functions-for-assistance with respect to the working machine(s) 1 managed by the user. Therefore, the definer 61a is configured or programmed to assign, to user(s), function(s)-for-assistance assigned to the management terminal 3, to thus transfer the function(s)-for-assistance.

In the present example embodiment, the definer 61a is configured or programmed to define a group G in response to an operation of a user having a predetermined right (administrative privileges). The definer 61a is configured or programmed to define a group G in response to an operation of a user with the user type of, for example, the owner or the manager etc. Thus, the definer 61a is configured or programmed to define a group G based on information relating to input operation on an assistance terminal 2 (management terminal 3) logged in by the manager etc. The definer 61a is configured or programmed to define, based on information relating to assignment of function(s)-for-assistance transmitted from the management terminal 3, that the function(s)-for-assistance is/are assigned to assistance terminal(s) 2 belonging to the group G.

Note that the following description discusses example cases in which function(s)-for-assistance with respect to working machine(s) 1 is/are assigned to the management terminal 3 in the initial state. Note, however, that the function(s)-for-assistance do not need to be assigned to the management terminal 3 in advance.

### First group G1, First function-for-assistance

In the present example embodiment, the definer 61a may be configured or programmed to define, as a group G, a first group G1 including one or more working machines 1 and one or more assistance terminals 2. The definer 61a is configured or programmed to define, as a first group G1, one or more assistance terminals 2 connected to a predetermined access point and one or more working machines 1 associated with the access point. Specifically, the definer 61a is configured or programmed to generate an access point associated with one or more working machines 1. In so doing, the definer 61a does not associate assistance terminal(s) 2 (users) with the access point in advance, but defines, as the first group G1, a group G including assistance terminal(s) 2 actually connected to the access point.

The definer 61a is configured or programmed to acquire a defining instruction to define a first group G1 based on information inputted via the management terminal 3. The definer 61a is configured or programmed to generate an access point in accordance with the defining instruction to define the first group G1. When one or more assistance terminals 2 connect to the access point, the definer 61a defines a first group G1. Specifically, the definer 61a is configured or programmed to acquire information about working machine(s) 1 (machine identification information) and information about user(s) (user identification information) to be associated with the group G1 based on information inputted via the management terminal 3, to define first group information in which information relating to the access point, the machine identification information, and the user identification information are associated with each other.

The information relating to the access point includes, for example, address information of the access point, unique identification information (first group ID) of the access point, and/or the like. The definer 61a is configured or programmed to generate the address information of the access point. For example, the definer 61a is configured or programmed to generate, as the address information of the access point, a unique Uniform Resource Locator (URL) of the first group G1. Note that the first group ID may function also as the address information of the access point.

With this, assistance terminal(s) 2 each logged in by a user is/are connectable to an access point based on the address information (such as URL, first group ID) of the access point. In such a case, a configuration may be used in which an assistance terminal 2 (user) not associated with the access point in advance can also connect to the access point based on the address information. The address information of the access point is not limited to the URL, first group ID and the like, and may include authentication code for authorization of the connection to the access point, etc. in addition to the URL, first group ID and/or the like.

The definer 61a is configured or programmed to define that first function(s)-for-assistance is/are assigned to assistance terminal(s) 2 belonging to a first group G1, as function(s)-for-assistance with respect to working machine(s) 1 belonging to the first group G1. The definer 61a is configured or programmed to, in the case where a plurality of assistance terminals 2 (including a first assistance terminal 2A and a second assistance terminal 2B) belong to the first group G1, define that first function(s)-for-assistance is/are assigned in common to the first assistance terminal 2A belonging to the first group G1 and the second assistance terminal 2B belonging to the first group G1, as function(s)-for-assistance with respect to working machine(s) 1 belonging to the first group G1. In other words, the definer 61a is configured or programmed to define that first function(s)-for-assistance with respect to one working machine 1 belonging to a first group G1 is/are assigned to one assistance terminal 2 (first assistance terminal 2A) belonging to the first group G1, and also define that those first function(s)-for-assistance with respect to the one working machine 1 is/are assigned to another assistance terminal 2 (second assistance terminal 2B) belonging to the first group G1.

Thus, the first functions-for-assistance are functions-for-assistance that can be performed in common by assistance terminals 2 belonging to a first group G1 with respect to working machine(s) 1 belonging to the first group G1. That is, it can be said that the first function(s)-for-assistance is/are function(s)-for-assistance that can performed concurrently by assistance terminal(s) 2 belonging to a first group G1 with respect to a plurality of working machines 1 belonging to the first group G1. It can also be said that the first function(s)-for-assistance are function(s)-for-assistance that can be performed concurrently by a plurality of assistance terminals 2 belonging to a first group G1 with respect to a single working machine 1 belonging to the first group G1.

In the present example embodiment, the definer 61a is configured or programmed to, in defining a first group G1, automatically define first function(s)-for-assistance for assistance terminal(s) 2 (user(s)) belonging to the first group G1. For example, the definer 61a is configured or programmed to associate first function(s)-for-assistance with first group information.

The definer 61a is configured or programmed to, with this, based on the defining instruction for the first group G1, define that first function(s)-for-assistance is/are assigned to assistance terminal(s) 2 belonging to the first group G1. Thus, it can be said that the defining instruction for the first group G1 is information relating to assignment of first function(s)-for-assistance transmitted from the management terminal 3.

The definer 61a is configured or programmed to, for example, define that the remote monitoring is assigned to assistance terminal(s) 2 belonging to a first group G1, as a first function-for-assistance with respect to working machine(s) 1 belonging to the first group G1. In other words, in the case where a plurality of working machines 1 belong to a first group G1, one assistance terminal 2 belonging to the first group G1 is allowed to perform the remote monitoring, as a first function-for-assistance with respect to the plurality of working machines 1. That is, one assistance terminal 2 may be allowed to perform the remote monitoring of a plurality of working machines 1 concurrently.

In the case where a plurality of assistance terminals 2 belong to a first group G1, the plurality of assistance terminals 2 are allowed to perform the remote monitoring as a first function-for-assistance with respect to common (same) working machine(s) 1. That is, a plurality of assistance terminals 2 belonging to a first group G1 may be allowed to perform the remote monitoring of a plurality of working machines 1 concurrently.

Note that the description of the present example embodiment discusses example cases in which the first functions-for-assistance include remote monitoring, but the first functions-for-assistance may include voice conversation. The first functions-for-assistance may include the chat function.

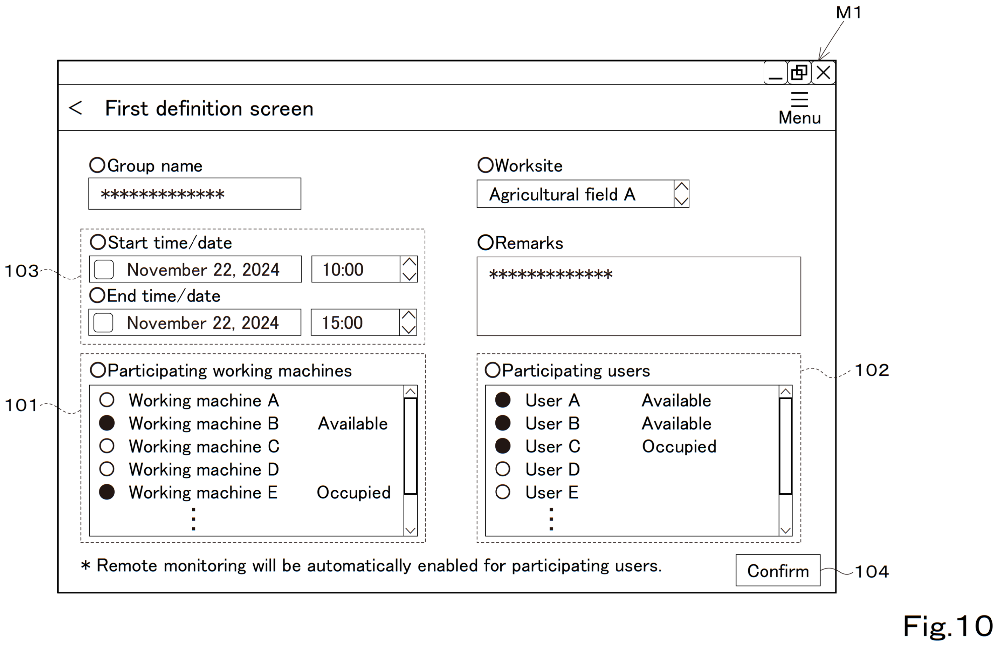

FIG. 10 illustrates an example of a first definition screen M1. The first definition screen M1 is configured to receive input of various information used to define a first group G1. Thus, the first definition screen M1 is displayed on the second display 54 of the management terminal 3. Various information inputted on the first definition screen M1 is transmitted via the third communicator 53 and the fourth communicator 63 to the fourth controller 61. The definer 61a is configured or programmed to, with this, define a first group G1 based on the various information.

The third controller 51 is configured or programmed to, when the manager etc. performs an operation on the second input interface 55, cause the second display 54 to display the first definition screen M1. In the present example embodiment, the third controller 51 is configured or programmed to send, via the third communicator 53 and the fourth communicator 63 to the fourth controller 61, a request for display information including image information for use in displaying the first definition screen M1. The third controller 51 is configured or programmed to, upon receipt of the display information by the third communicator 53 from the fourth communicator 63, cause the second display 54 to display the first definition screen M1 based on the display information.

Note that the third controller 51 may be configured or programmed to cause the second display 54 to display the first definition screen M1 based on program(s), image information, and/or the like stored in the third storing device 52.

As illustrated in FIG. 10, the first definition screen M1 includes a first machine body input section 101. The first machine body input section 101 receives input of one or more working machines 1 to be associated with an access point. For example, the first machine body input section 101 includes an input section to receive input of information to identify working machine(s) 1 (e.g., machine identification information).

The first machine body input section 101 may receive direct input of machine identification information, and may receive indirect input of machine identification information by receiving input of other working machine information stored in the working machine table T2 and associated with the machine identification information in the working machine table T2. The machine body input section 101 may display a list of working machine(s) 1 stored in the working machine table T2 as options and receive input of a selection of one of the working machine(s) 1. This allows the manager etc. to select one or more of the working machine(s) 1 in the list displayed by the first machine body input section 101 to input the working machine(s) 1.

The first definition screen M1 includes a first user input section 102. The first user input section 102 receives input of one or more users to share connection information about the access point. For example, the first user input section 102 includes an input section to receive input of information to identify user(s) (e.g., user identification information).

The first user input section 102 may receive direct input of user identification information, and may receive indirect input of user identification information by receiving input of other user information stored in the user table T1 and associated with the user identification information in the user table T1. The first user input section 102 may display a list of user(s) stored in the user table T1 as options and receive input of a selection of one of the user(s). This allows the manager etc. to select one or more of the user(s) in the list displayed by the first user input section 102 to input the user(s).

The first definition screen M1 may include a first time input section 103. The first time input section 103 receives input of time information relating to the first group G1. For example, the first time input section 103 receives input of, as the time information relating to the first group G1, at least one of the start time or the end time. In the present example embodiment, the first time input section 103 receives input of both the start time and the end time. The start time is the time at which assistance for working machine(s) 1 belonging to a first group G1 is to be started using assistance terminal(s) 2 belonging to the first group G1. The end time is the time at which assistance for working machine(s) 1 belonging to a first group G1 using assistance terminal(s) 2 belonging to the first group G1 is to be ended.

Note that the first definition screen M1 may present working machine(s) 1 that can be inputted into the first machine body input section 101 based on the time information inputted on the first time input section 103. For example, when at least one of the start time or the end time is inputted via the first time input section 103, the management terminal 3 transmits the information inputted via the first time input section 103 to the fourth controller 61 via the third communicator 53 and the fourth communicator 63.

The fourth controller 61 is configured or programmed to reference the information received by the fourth communicator 63 and the first schedule information stored in the fourth storing device 62 to extract working machine(s) 1 for which no action plans are scheduled at at least one of the input start time or the input end time. For example, the fourth controller 61 is configured or programmed to extract working machine(s) 1 for which no action plans are scheduled during the period from the input start time to the input end time. The fourth controller 61 is configured or programmed to transmit, via the fourth communicator 63 and the third communicator 53 to the management terminal 3, the extracted information about the working machine(s) 1 (e.g., machine identification information), display information for use in presenting the working machine(s) 1, and/or the like.

With this, the management terminal 3 updates the first definition screen M1 of the second display 54 based on the information received by the third communicator 53, the first machine body input section 101 displays a list of the working machine(s) 1 extracted by the fourth controller 61 as option(s), making it possible to present the working machine(s) 1 for which no action plans are scheduled at the input time(s) inputted via the first time input section 103. This allows the manager etc. to select working machine(s) 1 from the list displayed on the first machine body input section 101 to input the working machine(s) 1.

As illustrated in FIG. 10, the first definition screen M1 may provide a predetermined notification based on the time information inputted on the first time input section 103 and the working machine 1 inputted on the first machine body input section 101, instead of presenting working machine(s) 1 that can be inputted into the first machine body input section 101. For example, when a working machine 1 for which action plan(s) is/are scheduled at the time(s) inputted via the first time input section 103 is inputted into the first machine body input section 101, the first definition screen M1 displays an error message such as "occupied" or "select another date/time or change working machines", etc. When a working machine 1 for which no action plans are scheduled at the time(s) inputted via the first time input section 103 is inputted into the first machine body input section 101, the first definition screen M1 may display a message such as "available".

The first definition screen M1 may present user(s) that can be inputted into the first user input section 102 based on the time information inputted on the first time input section 103. For example, when at least one of the start time or the end time is inputted via the first time input section 103, the management terminal 3 transmits the information inputted via the first time input section 103 to the fourth controller 61 via the third communicator 53 and the fourth communicator 63.

The fourth controller 61 is configured or programmed to reference the information received by the fourth communicator 63 and the second schedule information stored in the fourth storing device 62 to extract user(s) for which no action plans are scheduled at at least one of the input start time or the input end time. For example, the fourth controller 61 is configured or programmed to extract user(s) for which no action plans are scheduled during the period from the input start time to the input end time. The fourth controller 61 is configured or programmed to transmit, via the fourth communicator 63 and the third communicator 53 to the management terminal 3, the extracted information about the user(s) (e.g., user identification information), display information for use in presenting the user(s), and/or the like.

With this, the management terminal 3 updates the first definition screen M1 of the second display 54 based on the information received by the third communicator 53, the first user input section 102 displays a list of the user(s) extracted by the fourth controller 61 as option(s), making it possible to present the user(s) for which no action plans are scheduled at the input time(s) inputted via the first time input section 103. This allows the manager etc. to select user(s) from the list displayed on the first user input section 102 to input the user(s).

As illustrated in FIG. 10, the first definition screen M1 may provide a predetermined notification based on the time information inputted on the first time input section 103 and the user inputted on the first user input section 102, instead of presenting user(s) that can be inputted into the first user input section 102. For example, when a user for which action plan(s) is/are scheduled at the time(s) inputted in the first time input section 103 is inputted into the first user input section 102, the first definition screen M1 displays an error message such as "occupied" or "select another date/time or change users", etc. When a user for which no action plans are scheduled at the time(s) inputted in the first time input section 103 is inputted into the first user input section 102, the first definition screen M1 may display a message such as "available".

The first definition screen M1 includes a first confirmation button 104. The first confirmation button 104 is a displayed image to receive operation via the second input interface 55. The first confirmation button 104, when operated, receives confirmation of information inputted on the first definition screen M1. When the first confirmation button 104 is operated, the management terminal 3 transmits, via the third communicator 53 and the fourth communicator 63 to the fourth controller 61, the information inputted on the first definition screen M1.

When the fourth communicator 63 receives the information, the definer 61a generates first group information based on the received information. In the present example embodiment, the definer 61a generates an access point and a first group ID, and generates a URL specific to the first group G1, as the address information of the access point. The definer 61a acquires one or more pieces of machine identification information, one or more pieces of user identification information, and time information inputted on the first definition screen M1. With this, the definer 61a associates the first group ID, the address information, the one or more pieces of machine identification information, the one or more pieces of user identification information, and the time information with each other to generate first group information.

Note that the definer 61a may associate other information in addition to the above-described information to generate first group information. For example, the definer 61a may associate information about a worksite such as an agricultural field where work is to be performed by the working machine(s) 1 and/or the content of the work, etc., in addition to the above-described information to define first group information.

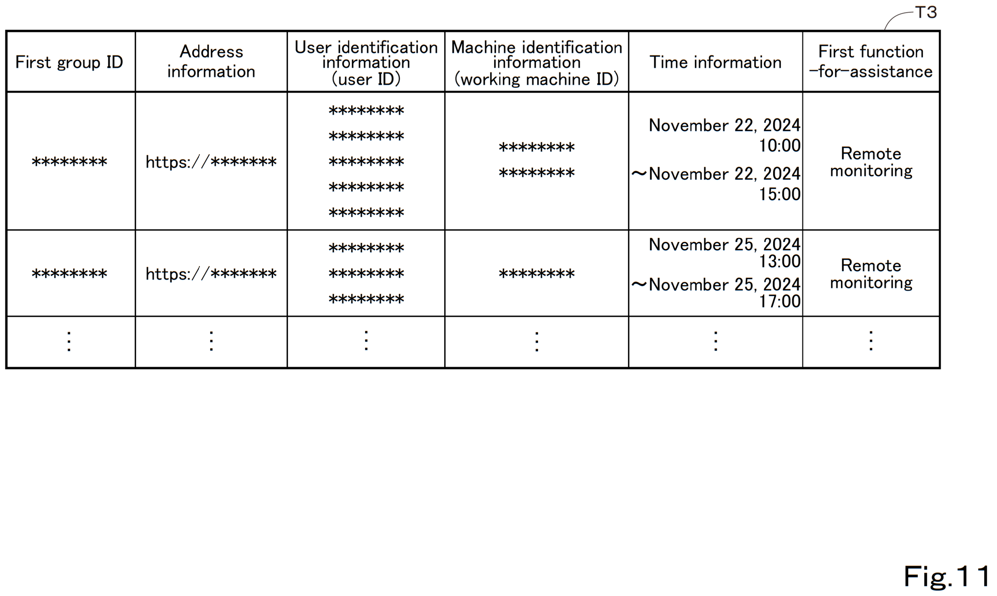

FIG. 11 is a block diagram showing an example of a first group table T3. As illustrated in FIG. 11, the first group table T3 stores a first group ID, address information, one or more pieces of machine identification information, one or more pieces of user identification information, time information, and a first function-for-assistance which are associated with each other per first group G1.

The fourth controller 61 may be configured or programmed to, when the definer 61a defines first group information, provide a notification of address information based on the one or more pieces of user identification information included in the corresponding first group G1. For example, the fourth controller 61 is configured or programmed to reference the user table T1 stored in the fourth storing device 62 to acquire email address(es) corresponding to the one or more pieces of user identification information included in the first group information. The fourth controller 61 is configured or programmed to generate (create) notification email(s) including or enclosing the address information, and send the notification email(s) to the acquired email address(es).

The fourth controller 61 may be configured or programmed to, when the definer 61a generates first group information, update the first schedule information based on the first group information. Specifically, the fourth controller 61 is configured or programmed to cause information included in the first group information to be stored as action plan(s) for working machine(s) 1 corresponding to the one or more pieces of machine identification information included in the first group information. For example, the fourth controller 61 is configured or programmed to cause the first schedule information to store action plan(s) for working machine(s) 1 included in the first group information.

The fourth controller 61 may be configured or programmed to, when the definer 61a generates first group information, update the second schedule information based on the first group information. Specifically, the fourth controller 61 may be configured or programmed to cause information included in the first group information to be stored as action plan(s) for the user(s) corresponding to the one or more pieces of user identification information included in the first group information. For example, the fourth controller 61 may be configured or programmed to cause the second schedule information to store action plan(s) for the user(s) during the time indicated by the time information included in the first group information. The fourth controller 61 may be configured or programmed to cause the schedule information to store, as action plan(s) for the user(s), information such as the address information, one or more working machine(s) 1, other user(s), worksite(s), work content, and/or the like, of the first group information.

### Second group G2

In the present example embodiment, the definer 61a is configured or programmed to define a second group G2 including at least one (one or more) of the working machine(s) 1 belonging to the first group G1 and at least one (one or more) of the assistance terminal(s) 2 belonging to the first group G1. In other words, the definer 61a is configured or programmed to define, as a second group G2, a group G included in the first group G1. Thus, it can be said that, as illustrated in FIG. 1, the second group G2 is a group G subordinate to a first group G1.

Note that the number of second group G2 that can be defined by the definer 61a with respect to a single first group G1 is not particularly limited. Therefore, the definer 61a may be configured or programmed to define one second group G2 including at least one (one or more) of the working machine(s) 1 belonging to the first group G1 and at least one (one or more) of the assistance terminal(s) 2 belonging to the first group G1, and another second group G2 including at least one (one or more) of the working machine(s) 1 belonging to the first group G1 and at least one (one or more) of the assistance terminal(s) 2 belonging to the first group G1.

The definer 61a defines, as a second group G2, one or more assistance terminals 2 and one or more working machines 1 extracted from the assistance terminal(s) 2 belonging to the first group G1 and the working machine(s) 1 belonging to the first group G1. That is, the assistance terminal(s) 2 included in the second group G2 is/are connected to the access point corresponding to the first group information. The working machine(s) 1 included in the second group G2 is/are associated with the access point corresponding to the first group information.

Specifically, the definer 61a acquires a defining instruction to define a second group G2 based on information inputted on the management terminal 3. The definer 61a generates identification information (second group ID) of the second group G2 in accordance with the defining instruction to define the second group G2. The definer 61a acquires, based on information inputted on the management terminal 3, information relating to working machine(s) 1 (machine identification information) and information relating to user(s) (user identification information) to be associated with the second group G2. With this, the definer 61a defines second group information in which the second group ID, the machine identification information, and the user identification information are associated with each other.

The definer 61a defines that one or more second functions-for-assistance, as one or more functions-for-assistance with respect to working machine(s) 1 belonging to the second group G2, are assigned to assistance terminal(s) 2 belonging to the second group G2. Specifically, the definer 61a is configured or programmed to, in the case where a plurality of assistance terminals 2 belong to the second group G2, define that different second functions-for-assistance are assigned to one of the plurality of assistance terminal 2 (first assistance terminal 2A) and another of the plurality of assistance terminal 2 (second assistance terminal 2B), as functions-for-assistance with respect to working machine(s) 1 belonging to the second group G2. In other words, the definer 61a is configured or programmed such that, when the definer 61a defines that a second function-for-assistance with respect to one working machine 1 belonging to a second group G2 is assigned to one assistance terminal 2 (first assistance terminal 2A) belonging to the second group G2, the definer 61a does not define that the same second function-for-assistance with respect to the one working machine 1 is assigned to another assistance terminal 2 (second assistance terminal 2B) belonging to the second group G2.

The definer 61a may be configured or programmed to define that one or more third functions-for-assistance are assigned in common to assistance terminals 2 belonging to the second group G2, as one or more functions-for-assistance with respect to working machine(s) 1 belonging to the second group G2. Specifically, the definer 61a is configured or programmed to define that one or more third functions-for-assistance are assigned in common to a first assistance terminal 2A belonging to a second group G2 and a second assistance terminal 2B belonging to the second group G2, as one or more functions-for-assistance with respect to working machine(s) 1 belonging to the second group G2. In other words, the definer 61a may be configured or programmed to define that a third function-for-assistance with respect to one working machine 1 belonging to a second group G2 is assigned to one assistance terminal 2 (first assistance terminal 2A) belonging to the second group G2, and to define that the same third function-for-assistance with respect to the one working machine 1 is assigned to another assistance terminal 2 (second assistance terminal 2B) belonging to the second group G2.

The definer 61a is configured or programmed to define that at least some types of remote operation included in the functions-for-assistance are assigned independently to different assistance terminals 2, as one or more second functions-for-assistance and one or more third functions-for-assistance. The following details the definition of second functions-for-assistance and third functions-for-assistance defined by the definer 61a.

### Second functions-for-assistance

The definer 61a is configured or programmed to define, based on information relating to assignment of one or more second functions-for-assistance inputted by the manager etc. operating the management terminal 3, that one or more second functions-for-assistance are assigned to assistance terminal(s) 2 belonging to the second group G2. The definer 61a acquires, based on the information inputted on the management terminal 3, a second group ID, machine identification information, user identification information which correspond to a second function-for-assistance. The definer 61a associates the second group ID, the machine identification information, the user identification information, and the second function-for-assistance with each other to generate assignment information. Note that the definer 61a may be configured or programmed to associate other information in addition to the above-described information to generate assignment information.

For example, the definer 61a of the present example embodiment is configured or programmed such that, when the definer 61a has defined that a function-for-assistance in traveling (first remote operation, remote travel-controlling operation) or steering (second remote operation, remote steering-controlling operation) of working machine(s) 1 belonging to the second group G2 is assigned to a first assistance terminal 2A belonging to the second group G2, the definer 61a does not define that the function-for-assistance in traveling (first remote operation, remote travel-controlling operation) or steering (second remote operation, remote steering-controlling operation) of the working machine(1) belonging to the second group G2, which has been assigned to the first assistance terminal 2A, is assigned to a second assistance terminal 2B belonging to the second group G2.

Specifically, the definer 61a is configured or programmed to define the first remote operation for one assistance terminal 2 belonging to the second group G2, as a second function-for-assistance with respect to working machine(s) 1 belonging to the second group G2. In other words, when the definer 61a has defined that the first remote operation is assigned to one assistance terminal 2 (first assistance terminal 2A) belonging to the second group G2 as a second function-for-assistance with respect to one working machine 1 belonging to the second group G2, the definer 61a does not define that the first remote operation is assigned to another assistance terminal 2 (second assistance terminal 2B) belonging to the second group G2 as a second function-for-assistance with respect to the one working machine 1.

Thus, an assistance terminal 2 belonging to the second group G2 that is assigned the first remote operation with respect to one working machine 1 is allowed to perform the first remote operation of the one working machine 1. Therefore, the first remote operation of one working machine 1 cannot be performed concurrently by a plurality of assistance terminals 2. This makes it possible to eliminate or reduce the likelihood that the travel of a working machine 1 will be remotely controlled concurrently by a plurality of operators.

The definer 61a may be configured or programmed to define the second remote operation for one assistance terminal 2 belonging to the second group G2, as a second function-for-assistance with respect to one working machine 1 belonging to the second group G2. In other words, when the definer 61a has defined that the second remote operation is assigned to one assistance terminal 2 (first assistance terminal 2A) belonging to the second group G2 as a second function-for-assistance with respect to one working machine 1 belonging to the second group G2, the definer 61a does not define that the second remote operation is assigned to another assistance terminal 2 (second assistance terminal 2B) belonging to the second group G2 as a second function-for-assistance with respect to the one working machine 1.

Thus, an assistance terminal 2 belonging to the second group G2 that is assigned the second remote operation with respect to one working machine 1 is allowed to perform the second remote operation of the one working machine 1. Therefore, the second remote operation of one working machine 1 cannot be performed concurrently by a plurality of assistance terminals 2. This makes it possible to eliminate or reduce the likelihood that the steering of a working machine 1 will be remotely controlled concurrently by a plurality of operators.

Note that the second functions-for-assistance that can be assigned by the definer 61a to assistance terminals 2 belonging to the second group G2 are not limited to the first remote operation and the second remote operation, and may include other types of remote operation and/or the like.

For example, the definer 61a may be configured or programmed to define the fourth remote operation for one assistance terminal 2 belonging to the second group G2, as a second function-for-assistance with respect to working machine(s) 1 belonging to the second group G2. In other words, when the definer 61a has defined that the fourth remote operation is assigned to one assistance terminal 2 (first assistance terminal 2A) belonging to the second group G2 as a second function-for-assistance with respect to one working machine 1 belonging to the second group G2, the definer 61a does not define that the fourth remote operation is assigned to another assistance terminal 2 (second assistance terminal 2B) belonging to the second group G2 as a second function-for-assistance with respect to the one working machine 1.

Thus, an assistance terminal 2 belonging to the second group G2 that is assigned the fourth remote operation with respect to one working machine 1 is allowed to perform the fourth remote operation of the one working machine 1. Therefore, the fourth remote operation of one working machine 1 cannot be performed concurrently by a plurality of assistance terminals 2. This makes it possible to eliminate or reduce the likelihood that the working device 25 will be remotely operated concurrently by a plurality of operators.

The definer 61a may be configured or programmed to define the fifth remote operation for one assistance terminal 2 belonging to the second group G2, as a second function-for-assistance with respect to working machine(s) 1 belonging to the second group G2. In other words, when the definer 61a has defined that the fifth remote operation is assigned to one assistance terminal 2 (first assistance terminal 2A) belonging to the second group G2 as a second function-for-assistance with respect to one working machine 1 belonging to the second group G2, the definer 61a does not define that the fifth remote operation is assigned to another assistance terminal 2 (second assistance terminal 2B) belonging to the second group G2 as a second function-for-assistance with respect to the one working machine 1.

Thus, an assistance terminal 2 belonging to the second group G2 that is assigned the fifth remote operation with respect to one working machine 1 is allowed to perform the fifth remote operation of the one working machine 1. Therefore, the fifth remote operation of one working machine 1 cannot be performed concurrently by a plurality of assistance terminals 2. This makes it possible to eliminate or reduce the likelihood that the modes of the first controller 31 will be remotely switched concurrently by a plurality of operators.

### Third functions-for-assistance

As described earlier, a third function-for-assistance can be performed in common by assistance terminal(s) 2 belonging to a second group G2 with respect to working machine(s) 1 belonging to the second group G2. Therefore, a third function-for-assistance can be said to be a function-for-assistance that can be performed by an assistance terminal 2 belonging to a second group G2 with respect to a plurality of working machines 1 belonging to the second group G2 concurrently. A third function-for-assistance can be said to be a function-for-assistance that can be performed by a plurality of assistance terminals 2 belonging to a second group G2 concurrently with respect to a single working machine 1 belonging to the second group G2.

In the present example embodiment, when the definer 61a defines a second group G2, the definer 61a automatically defines one or more third functions-for-assistance for assistance terminal(s) 2 (user(s)) belonging to the second group G2. For example, the definer 61a associates one or more third functions-for-assistance with second group information.

With this, based on a defining instruction to define a second group G2, the definer 61a defines that one or more third functions-for-assistance are assigned to assistance terminal(s) 2 belonging to the second group G2. Thus, the defining instruction to define a second group G2 can be said to be information relating to assignment of one or more third functions-for-assistance transmitted from the management terminal 3.

For example, the definer 61a of the present example embodiment is configured or programmed to define that a function-for-assistance in braking working machine(s) 1 (third remote operation) is assigned to assistance terminal(s) 2 belonging to the second group G2, as a third function-for-assistance with respect to the working machine(s) 1 belonging to the second group G2. Therefore, the definer 61a is configured or programmed to, when a plurality of assistance terminals 2 belong to the second group G2, define that the third remote operation is assigned to both a first assistance terminal 2A (one of the plurality of assistance terminals 2) belonging to the second group G2 and a second assistance terminal 2B (another of the plurality of assistance terminals 2) belonging to the second group G2, as a third function-for-assistance with respect to working machine(s) 1 belonging to the second group G2.

Thus, in the case where a plurality of working machines 1 belong to a second group G2, one assistance terminal 2 belonging to the second group G2 is allowed to perform the third remote operation as a third function-for-assistance with respect to the plurality of working machines 1. In the case where a plurality of assistance terminal 2 belong to the second group G2, the plurality of assistance terminals 2 are allowed to perform the third remote operation as a third function-for-assistance with respect to a single working machine 1. Thus, the barking of the working machine(s) 1 can be remotely operated concurrently by a plurality of operators.

Note that the third functions-for-assistance that can be assigned by the definer 61a to assistance terminal(s) 2 belonging to the second group G2 are not limited to the third remote operation, and may include other remote operation and/or the like. For example, the definer 61a is configured or programmed to define the remote monitoring for assistance terminal(s) 2 belonging to the second group G2, as a third function-for-assistance with respect to working machine(s) 1 belonging to the second group G2. In other words, in the case where a plurality of working machines 1 belong to the second group G2, one assistance terminal 2 belonging to the second group G2 is allowed to perform the remote monitoring as a third function-for-assistance with respect to the plurality of working machines 1. In the case where a plurality of assistance terminals 2 belong to the second group G2, the plurality of assistance terminals 2 are allowed to perform the remote monitoring as a third function-for-assistance with respect to a single working machine 1. That is, a plurality of assistance terminals 2 belonging to the second group G2 may be able to concurrently perform the remote monitoring of a plurality of working machines 1.

Note that the third functions-for-assistance may include the voice conversation. The third functions-for-assistance may include the chat function.

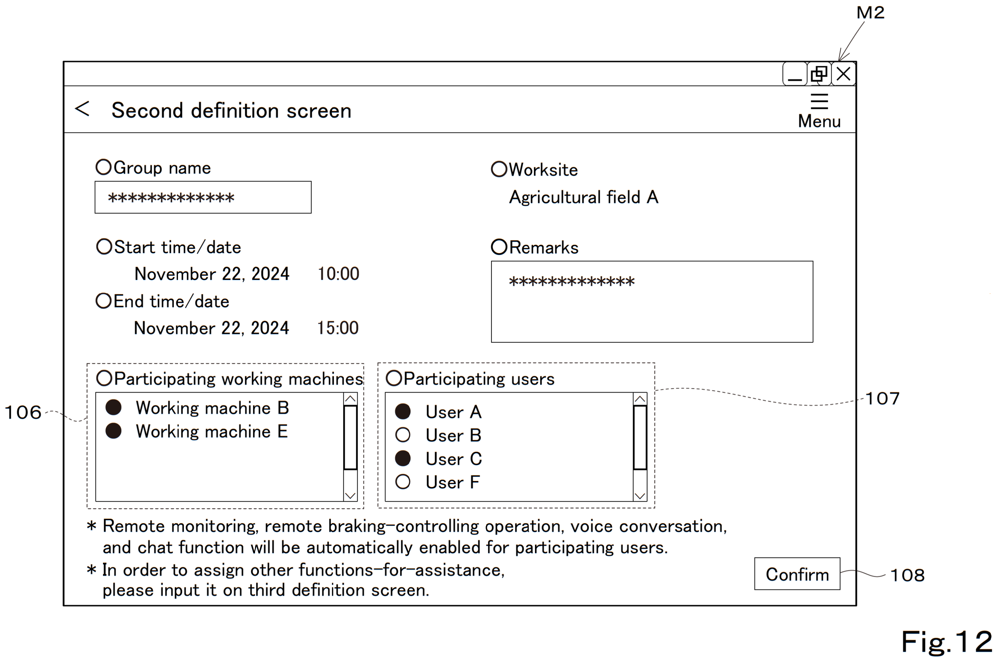

FIG. 12 illustrates an example of a second definition screen M2. The second definition screen M2 is configured to receive input of various information used to define a second group G2. Thus, the second definition screen M2 is displayed on the second display 54 of the management terminal 3. Various information inputted on the second definition screen M2 is transmitted via the third communicator 53 and the fourth communicator 63 to the fourth controller 61. The definer 61a is configured or programmed to, with this, define a second group G2 based on the various information.

The third controller 51 is configured or programmed to, when the manager etc. performs an operation on the second input interface 55, cause the second display 54 to display the second definition screen M2. For example, the third controller 51 is configured or programmed to, when the first confirmation button 104 is operated while the second display 54 is displaying the first definition screen M1, control the second display 54 to cause a display transition from the first definition screen M1 to the second definition screen M2.

The second definition screen M2 is configured to be used to define a second group G2 which corresponds to a first group G1 defined based on various information inputted on the first definition screen M1. In other words, the second definition screen M2 is configured to be used to define a second group G2 included in the first group G1. Thus, the second definition screen M2 corresponds to the first group G1 which has been defined using the first definition screen M1 displayed before the display transition.

Note that the third controller 51 may be configured or programmed to display the second definition screen M2 anytime in response to the operation by the manager etc. on the second input interface 55.

In the present example embodiment, the third controller 51 is configured or programmed to send, via the third communicator 53 and the fourth communicator 63 to the fourth controller 61, a request for display information including image information for use in displaying the second definition screen M2. The third controller 51 is configured or programmed to, upon receipt of the display information by the third communicator 53 from the fourth communicator 63, cause the second display 54 to display the second definition screen M2 based on the display information.

Note that the third controller 51 may be configured or programmed to cause the second display 54 to display the second definition screen M2 based on program(s), image information, and/or the like stored in the third storing device 52.

As illustrated in FIG. 12, the second definition screen M2 includes a second machine body input section 106. The second machine body input section 106 receives input of one or more working machines 1 to be associated with a second group G2. For example, the second machine body input section 106 includes an input section to receive input of information to identify working machine(s) 1 (e.g., machine identification information).

The second machine body input section 106 may display a list of working machine(s) 1 belonging to the first group G1 corresponding to the second definition screen M2 as option(s), and receive input of a selection of one of the working machine(s) 1. In such a case, the second machine body input section 106 displays, as option(s), working machine(s) 1 belonging to the first group G1 based on the machine identification information of the working machine(s) 1 associated with the first group ID. This allows the manager etc. to select one or more of the working machine(s) 1 in the list displayed by the second machine body input section 106 to input the working machine(s) 1.

Note that the second machine body input section 106 may receive direct input of machine identification information, and may receive indirect input of machine identification information by receiving input of other working machine information stored in the working machine table T2 and associated with the machine identification information in the working machine table T2.

The second definition screen M2 includes a second user input section 107. The second user input section 107 receives input of one or more users to be associated with the second group G2. For example, the second user input section 107 includes an input section to receive input of information to identify user(s) (e.g., user identification information).

The second user input section 107 may display a list of user(s) belonging to the first group G1 corresponding to the second definition screen M2 as options, and receive input of a selection of one of the user(s). In such a case, the second user input section 107 displays, as option(s), user(s) belonging to the first group G1 based on the user identification information of the user(s) associated with the first group ID. This allows the manager etc. to select one or more of the user(s) in the list displayed by the second user input section 107 to input to the user(s).

The second user input section 107 may receive direct input of user identification information, and may receive indirect input of user identification information by receiving input of other user information stored in the user table T1 and associated with the user identification information in the user table T1.

The second definition screen M2 includes a second confirmation button 108. The second confirmation button 108 is a displayed image to receive operation via the second input interface 55. The second confirmation button 108, when operated, receives confirmation of information inputted on the second definition screen M2. When the second confirmation button 108 is operated, the management terminal 3 transmits, via the third communicator 53 and the fourth communicator 63 to the fourth controller 61, the information inputted on the second definition screen M2.

When the fourth communicator 63 receives the information, the definer 61a generates second group information based on the received information. The definer 61a generates a second group ID. The definer 61a acquires one or more pieces of machine identification information and one or more pieces of user identification information inputted on the second definition screen M2. With this, the definer 61a associates the first group ID, the second group ID, the one or more pieces of machine identification information, the one or more pieces of user identification information, and one or more third functions-for-assistance with each other to generate second group information. When the definer 61a defines second group information, the fourth storing device 62 stores the second group information in a second group table T4.

Note that the definer 61a may associate other information in addition to the above-described information to generate second group information. For example, the definer 61a may associate information about a worksite such as an agricultural field where work is to be performed by the working machine(s) 1 and/or the content of the work, etc., in addition to the above-described information to generate second group information.

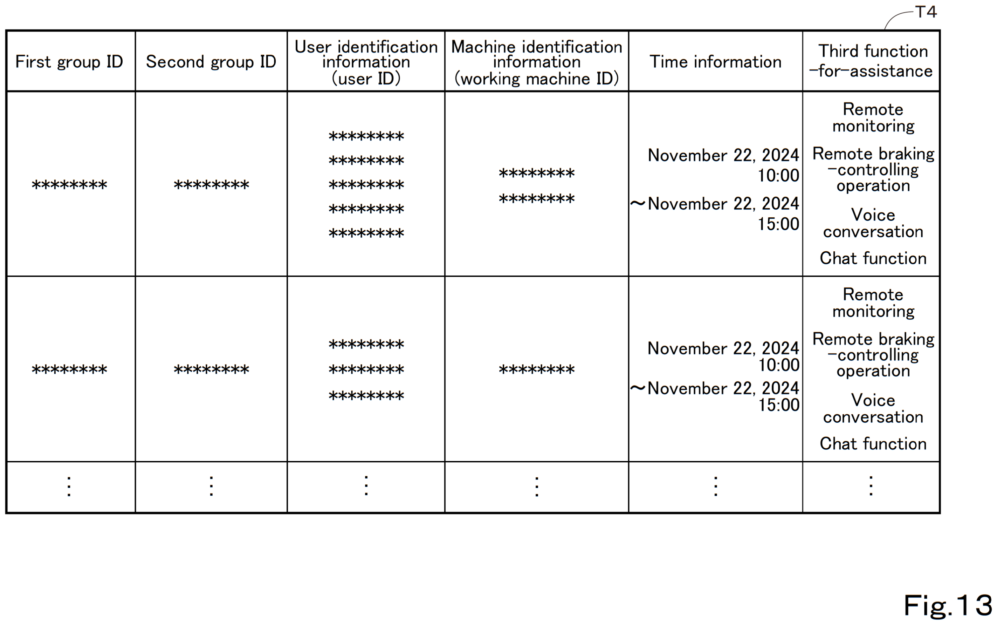

FIG. 13 is a block diagram showing an example of the second group table T4. As illustrated in FIG. 13, the second group table T4 stores first group ID(s) of the first group(s) G1 corresponding to the respective second group(s) G2, second group ID(s) corresponding to the respective second group(s) G2, one or more pieces of machine identification information, one or more pieces of user identification information, and third function(s)-for-assistance which are associated with each other.

Note that, although the description of the present example embodiment discusses an example case in which the fourth storing device 62 stores the second group table T4 independently of the first group table T3, the fourth storing device 62 may store a single table which is a combination of the first group table T3 and the second group table T4. In such a case, the fourth storing device 62 stores first group information and second group information associated with the first group information.

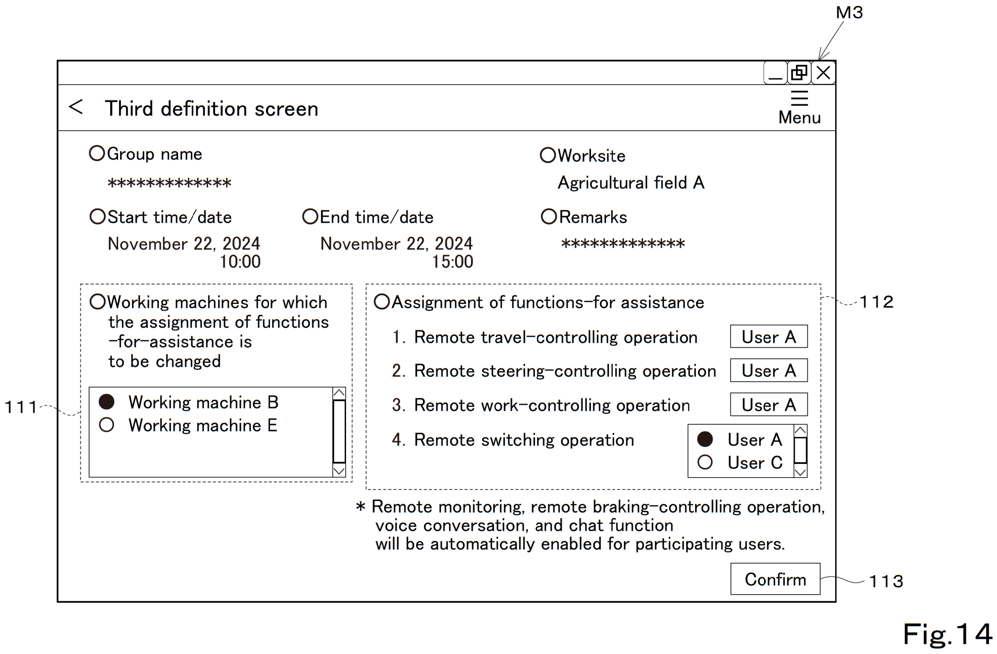

FIG. 14 illustrates an example of a third definition screen M3. The third definition screen M3 is configured to receive input of various information used to define that second function(s)-for-assistance with respect to working machine(s) 1 belonging to the second group G2 are assigned to assistance terminal(s) 2 belonging to the second group G2. Thus, the third definition screen M3 is displayed on the second display 54 of the management terminal 3. Various information inputted on the third definition screen M3 is transmitted via the third communicator 53 and the fourth communicator 63 to the fourth controller 61. The definer 61a is configured or programmed to, with this, define second function(s)-for-assistance for assistance terminal(s) 2 belonging to the second group G2 based on the various information.

The third controller 51 is configured or programmed to, when the manager etc. performs an operation on the second input interface 55, cause the second display 54 to display the third definition screen M3. For example, the third controller 51 is configured or programmed to, when the second confirmation button 108 is operated while the second display 54 is displaying the second definition screen M2, control the second display 54 to cause a display transition from the second definition screen M2 to the third definition screen M3. In such a case, the third definition screen M3 is configured to be used to define second function(s)-for-assistance for assistance terminal(s) 2 belonging to the second group G2 which has been defined based on the various information inputted on the second definition screen M2. Thus, the third definition screen M3 corresponds to the second group G2 which has been defined using the second definition screen M2 displayed before the display transition.

Note that the third controller 51 may be configured or programmed to display the third definition screen M3 anytime in response to the operation by the manager etc. on the second input interface 55.

In the present example embodiment, the third controller 51 is configured or programmed to send, via the third communicator 53 and the fourth communicator 63 to the fourth controller 61, a request for display information including image information for use in displaying the third definition screen M3. The third controller 51 is configured or programmed to, upon receipt of the display information by the third communicator 53 from the fourth communicator 63, cause the second display 54 to display the third definition screen M3 based on the display information.

Note that the third controller 51 may be configured or programmed to cause the second display 54 to display the third definition screen M3 based on program(s), image information, and/or the like stored in the third storing device 52.

As illustrated in FIG. 14, the third definition screen M3 includes a first machine body selecting section 111. The first machine body selecting section 111 receives input of a selection of one or more working machines 1 belonging to the second group G2. The first machine body selecting section 111 displays a list of working machine(s) 1 belonging to the second group G2 corresponding to the third definition screen M3 as option(s), and receives input of a selection of one or more of the working machine(s) 1. In such a case, the first machine body selecting section 111 displays, as option(s), working machine(s) 1 belonging to the second group G2 based on the machine identification information of the working machine(s) 1 associated with the second group ID. This allows the manager etc. to select one or more of the working machine(s) 1 in the list displayed by the first machine body selecting section 111 to input the working machine(s) 1.

The third definition screen M3 includes a first assignment selecting section 112. The first assignment selecting section 112 receives input of assignment of second function(s)-for-assistance with respect to working machine(s) 1 belonging to the second group G2 to assistance terminal(s) 2 (user(s)) belonging to the second group G2. For example, the first assignment selecting section 112 receives input of a selection of an assistance terminal 2 (user) for each of the second functions-for-assistance with respect to one working machine 1 selected in the first machine body selecting section 111.

For example, in the example in FIG. 14, the first assignment selecting section 112 includes input sections to receive input of assistance terminals 2 (users) to which the first remote operation, second remote operation, fourth remote operation, and fifth remote operation with respect to one working machine 1 are assigned. Each input section of the first assignment selecting section 112 displays a list of user(s) belonging to the second group G2 corresponding to the third definition screen M3 as option(s), and receives input of one of the user(s). In such a case, the first assignment selecting section 112 displays user(s) belonging to the second group G2 as option(s) based on the machine identification information of the working machine 1 associated with the second group ID. This allows the manager etc. to select one of the user(s) in the list displayed by the first assignment selecting section 112 to input assignment of one or more second functions-for-assistance to the assistance terminal(s) 2 (user(s)).

The third definition screen M3 includes a third confirmation button 113. The third confirmation button 113 is a displayed image to receive operation via the second input interface 55. The third confirmation button 113, when operated, receives confirmation of information inputted on the third definition screen M3. When the third confirmation button 113 is operated, the management terminal 3 transmits, via the third communicator 53 and the fourth communicator 63 to the fourth controller 61, the information inputted on the third definition screen M3. Note here that the third confirmation button 113 may be configured to not accept the operation in the case where no assistance terminals 2 (users) are assigned to second function(s)-for-assistance with respect to working machine(s) 1 belonging to the second group G2.

When the fourth communicator 63 receives the information, the definer 61a defines the second function(s)-for-assistance for the assistance terminal(s) 2 based on the received information. The definer 61a associates the second group ID, machine identification information, user identification information, and second function(s)-for-assistance with each other to generate assignment information. When the definer 61a defines assignment information, the fourth storing device 62 stores the assignment information in a assignment table T5.

Note that the definer 61a may associate other information in addition to the above-described information to generate assignment information. For example, the definer 61a may associate user identification information assigned to the third function(s)-for-assistance in addition to the above-described information to generate assignment information.

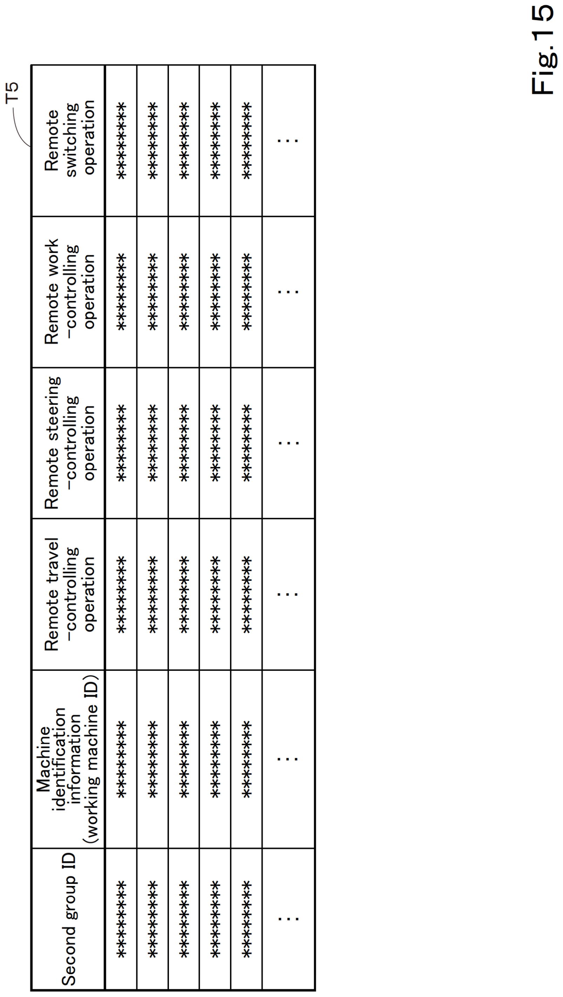

FIG. 15 is a block diagram showing an example of the assignment table T5. As illustrated in FIG. 15, the assignment table T5 stores second group ID(s) corresponding to second group(s) G2, machine identification information, and user identification information assigned to the second function(s)-for-assistance, which are associated with each other.

### Performing functions-for-assistance

The following description discusses performing functions-for-assistance using assistance terminals 2. As illustrated in FIG. 7, in the present example embodiment, a server (fourth controller 61) includes an assistance controller 61b. In other words, it can be said that the assistance system S includes the assistance controller 61b. The assistance controller 61b includes one or more processors provided in the fourth controller 61, software program(s) stored in a memory, and/or the like.

The assistance controller 61b is configured or programmed to control transmission and reception of various information for assistance terminal(s) 2 belonging to a group G defined by the definer 61a to perform function(s)-for-assistance with respect to working machine(s) 1 belonging to the group G. Specifically, the assistance controller 61b is configured or programmed to control transmission and reception of various information for assistance terminal(s) 2 belonging to a first group G1, based on the first group table T3 stored in the fourth storing device 62, to perform function(s)-for-assistance (first function(s)-for-assistance). The assistance controller 61b is configured or programmed to control transmission and reception of various information for assistance terminal(s) 2 belonging to a second group G2, based on the second group table T4 and the assignment table T5 stored in the fourth storing device 62, to perform function(s)-for-assistance (second function(s)-for-assistance, third function(s)-for-assistance).

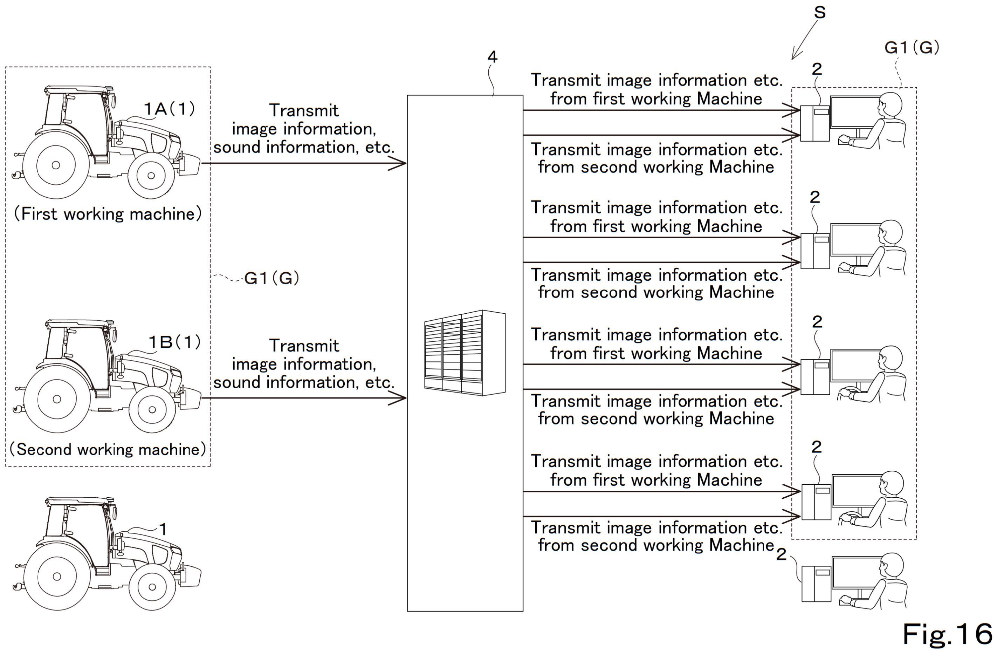

FIG. 16 schematically illustrates a flow of various information in a first group G1 of the first example embodiment. FIG. 16 shows that users have logged in to assistance terminals 2 and the assistance terminals 2 are connected to an access point corresponding to the first group G1. FIG. 16 also shows that working machines 1 associated with the access point are connected to the access point.

As illustrated in FIG. 16, in the case where one or more working machines 1 have established communication with the access point corresponding to the first group G1, the one or more working machines 1 transmit image information about an image captured by the first imager 36 to the assistance device 4. The one or more working machines 1 transmit the image information to the assistance device 4 via the first communicator 34 and the fourth communicator 63. The one or more working machines 1 transmit the state of the one or more working machines 1 detected by the state detector 33 to the assistance device 4. The one or more working machines 1 transmit sound information to the assistance device 4 via the first communicator 34 and the fourth communicator 63. The one or more working machines 1 transmit sound information detected by the first sound collector 38 to the assistance device 4.

The assistance controller 61b is configured or programmed to, upon receipt of various information from one or more working machines 1 connected to the access point, provide (transmit) the information to assistance terminal(s) 2 according to function(s)-for-assistance assigned to the assistance terminal(s) 2. In the present example embodiment, first function(s)-for-assistance is/are assigned to the assistance terminals 2 belonging to the first group G1, and therefore the assistance controller 61b provides various information to the assistance terminals 2 according to the first function(s)-for-assistance.

Specifically, the assistance device 4 (assistance controller 61b) transmits image information about an image captured by the first imager 36 to the assistance terminals 2 according to the first function-for-assistance (remote monitoring). The assistance device 4 transmits image information to the assistance terminals 2 via the fourth communicator 63 and the second communicator 43. The assistance device 4 (assistance controller 61b) transmits the state of the working machine(s) 1 detected by the state detector 33 to the assistance terminals 2 according to the first function-for-assistance (remote monitoring). The assistance device 4 transmits sound information to the assistance terminals 2 via the fourth communicator 63 and the second communicator 43. The assistance device 4 (assistance controller 61b) transmits sound information detected by the first sound collector 38 to the assistance terminals 2 according to the first function-for-assistance (remote monitoring).

With this, the assistance terminals 2 belonging to the first group G1 are able to perform the first function-for-assistance (remote monitoring) based on various information provided by the assistance device 4 (assistance controller 61b).

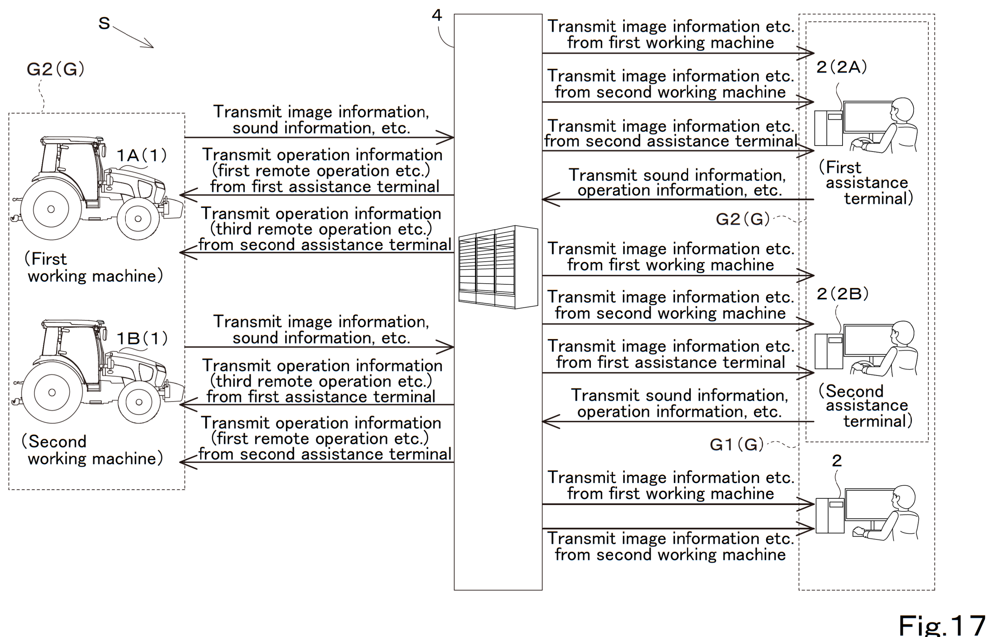

FIG. 17 schematically illustrates a flow of various information in a second group G2. In the case where one or more assistance terminals 2 have established connection with the access point corresponding to the first group G1, assistance terminal(s) 2 belonging to the second group G2 transmits operation information received at the second manual operator 46 to the assistance device 4. Each assistance terminal 2 transmits operation information via the second communicator 43 and the fourth communicator 63. Each assistance terminal 2 transmits sound information detected by the second sound collector 48 to the assistance device 4. Each assistance terminal 2 transmits sound information to the assistance device 4 via the second communicator 43 and the fourth communicator 63. Each assistance terminal 2 transmits image information about an image captured by the second imager 47 to the assistance device 4. Each assistance terminal 2 transmits image information to the assistance device 4 via the second communicator 43 and the fourth communicator 63. Each assistance terminal 2 transmits a text message inputted via the first input interface 45 to the assistance device 4. Each assistance terminal 2 transmits a text message to the assistance device 4 via the second communicator 43 and the fourth communicator 63.

The assistance controller 61b is configured or programmed to, upon receipt of various information from one or more working machines 1 belonging to the second group G2 and one or more assistance terminals 2 belonging to the second group G2, provide (transmit) various information to assistance terminal(s) 2 according to function(s)-for-assistance assigned to the assistance terminal(s) 2. The assistance controller 61b is configured or programmed to, upon receipt of operation information from one or more assistance terminals 2 belonging to the second group G2, transmit the operation information to working machine(s) 1 belonging to the second group G2 according to the function(s)-for-assistance assigned to the assistance terminal(s) 2.

The assistance controller 61b is configured or programmed to reference the assignment table T5 stored in the fourth storing device 62, reference the second function(s)-for-assistance assigned to the assistance terminals 2, and transmit operation information to working machine(s) 1 according to the second function(s)-for-assistance. Since the assistance terminals 2 belonging to the second group G2 are assigned third function(s)-for-assistance, the assistance controller 61b provides (transmits) various information to the assistance terminals 2 according to the third function(s)-for-assistance. The assistance controller 61b is configured or programmed to transmit various information to working machine(s) 1 according to the third function(s)-for-assistance.

Specifically, the assistance device 4 (assistance controller 61b) transmits operation information relating to the second manual operator 46 to working machine(s) 1 belonging to the second group G2 according to second function(s)-for-assistance. The assistance device 4 references the assignment table T5 to determine working machine(s) 1 corresponding to the second function(s)-for-assistance, and transmits operation information to the working machine(s) 1 via the fourth communicator 63 and the first communicator 34.

For example, in the case where the assistance device 4 receives operation information from an assistance terminal 2 assigned a second function-for-assistance (remote operation), the assistance device 4 transmits operation information relating to the remote operation to a working machine 1 corresponding to the second function-for-assistance. Therefore, in the case where the assistance device 4 receives operation information from an assistance terminal 2 not assigned the second function-for-assistance (remote operation), the assistance device 4 does not transmit operation information relating to the remote operation to a working machine 1 corresponding to the second function-for-assistance.

This is discussed based on an example case in which different types of remote operation as second functions-for-assistance are assigned to assistance terminals 2. In the case where a first remote operation with respect to one working machine 1 (first working machine 1A) is assigned to one assistance terminal 2 (first assistance terminal 2A), the assistance device 4 transmits operation information relating to the first remote operation to the first working machine 1A. The assistance device 4 does not transmit operation information relating to a second remote operation to the first working machine 1A. The assistance device 4 does not transmit operation information relating to the first remote operation to another working machine 1 (second working machine 1B).

The assistance device 4 (assistance controller 61b) transmits operation information relating to the second brake controlling actuator 46d to a working machine 1 according to a third function-for-assistance (third remote operation). The assistance device 4 transmits operation information relating to the third remote operation to the working machine 1 via the assistance device 4 and the fourth communicator 63.

The assistance device 4 (assistance controller 61b) transmits image information about an image captured by the first imager 36 to assistance terminal(s) 2 according to a third function-for-assistance (remote monitoring). The assistance device 4 transmits image information to assistance terminal(s) 2 via the fourth communicator 63 and the second communicator 43. The assistance device 4 (assistance controller 61b) transmits the state of working machine(s) 1 detected by the state detector 33 to assistance terminal(s) 2 according to a third function-for-assistance (remote monitoring). The assistance device 4 transmits sound information to assistance terminal(s) 2 via the fourth communicator 63 and the second communicator 43. The assistance device 4 (assistance controller 61b) transmits sound information detected by the first sound collector 38 to assistance terminal(s) 2 according to a third function-for-assistance (remote monitoring).

The assistance device 4 (assistance controller 61b) transmits image information about an image captured by the second imager 47 of one assistance terminal 2 (first assistance terminal 2A) belonging to the second group G2 to another assistance terminal 2 (second assistance terminal 2B) belonging to the second group G2, according to a third function-for-assistance (voice conversation). The assistance device 4 transmits image information to the second assistance terminal 2B via the fourth communicator 63 and the second communicator 43. The assistance device 4 (assistance controller 61b) transmits sound information detected by the second sound collector 48 of a first assistance terminal 2A belonging to the second group G2 to a second assistance terminal 2B belonging to the second group G2, according to a third function-for-assistance (voice conversation). The assistance device 4 transmits sound information to the second assistance terminal 2B via the fourth communicator 63 and the second communicator 43.

The assistance device 4 (assistance controller 61b) transmits a text message inputted via the first input interface 45 of one assistance terminal 2 (first assistance terminal 2A) belonging to the second group G2 to another assistance terminal 2 (second assistance terminal 2B) belonging to the second group G2, according to a third function-for-assistance (chat function).

With this, assistance terminal(s) 2 assigned second function(s)-for-assistance, among assistance terminals 2 belonging to the second group G2, is/are able to perform the second function(s)-for-assistance by transmitting information relating to remote operation(s) corresponding to the second function(s)-for-assistance to working machine(s) 1 via the assistance device 4 (assistance controller 61b). The assistance terminals 2 belonging to the second group G2 are able to perform a third function-for-assistance by transmitting information relating to the third remote operation corresponding to the third functions-for-assistance to working machine(s) 1 via the assistance device 4 (assistance controller 61b). The assistance terminals 2 belonging to the second group G2 are able to perform third function(s)-for-assistance (remote monitoring, voice conversation, chat function), etc., based on various information provided from the assistance device 4 (assistance controller 61b).

As such, in the case where a plurality of assistance terminals 2 belong to the second group G2, when remote operation is assigned as a second function-for-assistance to a first assistance terminal 2A belonging to a second group G2 (group G), a third function-for-assistance (remote monitoring) is assigned to a second assistance terminal 2B belonging to the second group G2 (group G). Thus, the remote operation and the remote monitoring are performed concurrently.

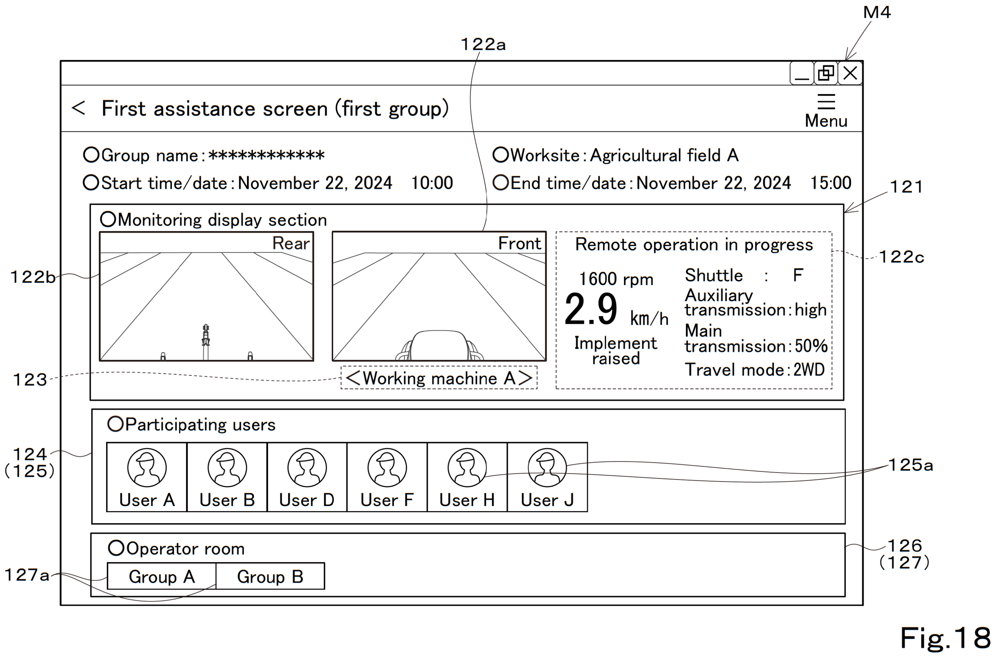

FIG. 18 illustrates an example of a first assistance screen M4. The assistance screen M4 is a screen for an assistance terminal 2 belonging to a first group G1 to perform function(s)-for-assistance. Thus, in the present example embodiment, the first assistance screen M4 is a screen for first function(s)-for-assistance to be performed.

The first assistance screen M4 illustrated in FIG. 15 is a screen for remote monitoring, as a first function-for-assistance, to be performed. The second controller 41 is configured or programmed to, when an operator or the like operates the first input interface 45, cause the first display 44 to display the first assistance screen M4. For example, the second controller 41 is configured or programmed to, when the assistance terminal 2 connects to the access point, cause the first display 44 to display the first assistance screen M4 based on various information received via the second communicator 43 and the fourth communicator 63.

As illustrated in FIG. 18, the first assistance screen M4 includes a first monitoring display section 121. The first monitoring display section 121 is a display area to present information corresponding to remote monitoring. For example, the first monitoring display section 121 includes windows 122a, 122b to display image information about images captured by the first imager 36. In the example in FIG. 18, the first monitoring display section 121 includes a window 122a to display a captured front image of an area forward of the working machine 1 captured from the interior of the protection structure 13, and a window 122b to display a captured rear image of an area rearward of the working machine 1.

The first monitoring display section 121 may include a window 122c to display the state of the working machine 1 detected by the state detector 33. In the example in FIG. 18, the first monitoring display section 121 includes a window 122c to display the vehicle speed, direction of travel (forward or rearward), speed stage, and the like of the working machine 1.

Note that, in the example in FIG. 18, the first monitoring display section 121 displays only information about one working machine 1 of working machine(s) 1 belonging to the first group G1. Thus, in the case where a plurality of working machines 1 belong to the first group G1, the first monitoring display section 121 may be configured to selectively display information (image information, state of working machine 1) relating to one of the working machines 1, on a per-working machine 1 basis. In such a case, the first monitoring display section 121 includes a displayed image (first switching element 123) to receive operations, and the second controller 41 is configured or programmed to switch the working machine 1 displayed in the first monitoring display section 121 in response to the operation on the first switching element 123.

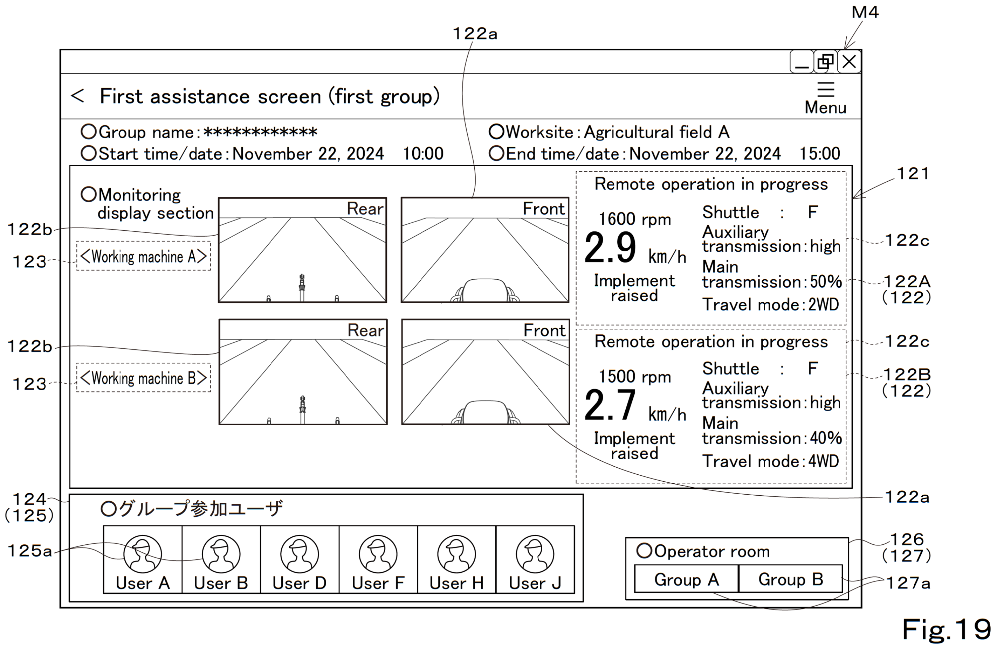

FIG. 19 illustrates another example of the first assistance screen M4. In the case where a plurality of working machines 1 belong to the first group G1, the first monitoring display section 121 may display pieces of information (image information, state of working machine 1) corresponding to the remote monitoring of a plurality of working machines 1 of the working machines 1 belonging to the first group G1 together, as illustrated in FIG. 19. In the example in FIG. 19, the first monitoring display section 121 includes a window 122A to display information corresponding to the remote monitoring of one working machine 1 (first working machine 1A) belonging to the first group G1, and a window 122B to display information corresponding to the remote monitoring of another working machine 1 (second working machine 1B) corresponding to the first group G1.

Note that although the example in FIG. 19 shows a case in which the first monitoring display section 121 displays pieces of information corresponding to the remote monitoring of two working machines 1 together, the number of working machines 1 for which the first monitoring display section 121 can display pieces of information together is not limited to two.

As illustrated in FIGS. 18 and 19, the first assistance screen M4 includes a first connection display section 124. The first connection display section 124 is a display area to display other assistance terminal(s) 2 (user(s)) connected to the access point corresponding to the first group G1. For example, the first connection display section 124 includes a window 125 to display icon(s) 125a representing other user(s).

As illustrated in FIGS. 18 and 19, the first assistance screen M4 includes a group display section 126. The group display section 126 is a display area to display second group(s) G2 corresponding to the first group G1. For example, the group display section 126 includes a window 127 to display buttons 127a representing second groups G2 included in the first group G1.

Note that the second group(s) G2 displayed in the group display section 126 may be operable via the first input interface 45, and a request to join a second group G2 may be issued by operating the first input interface 45. Thus, the second controller 41 (assistance terminal 2) is configured or programmed to, upon receipt of the request via the group display section 126, transmit information relating to the request to the assistance device 4. The fourth controller 61 is configured or programmed to, with this, upon receipt of information relating to the request by the fourth communicator 63, provide a notification indicating that the request is issued to the management terminal 3. In such a case, the manager etc. need only operate the management terminal 3 to operate the second definition screen M2 to change the definition of the second group G2.

As has been discussed, the first assistance screen M4 is able to display, in the first monitoring display section 121 and the first connection display section 124, assistance terminal(s) 2 belonging to a group G (first group G1) and working machine(s) 1 belonging to the group G (first group G1). Thus, the display (first display 44) is configured to display assistance terminal(s) 2 belonging to a group G and working machine(s) 1 belonging to the group G.

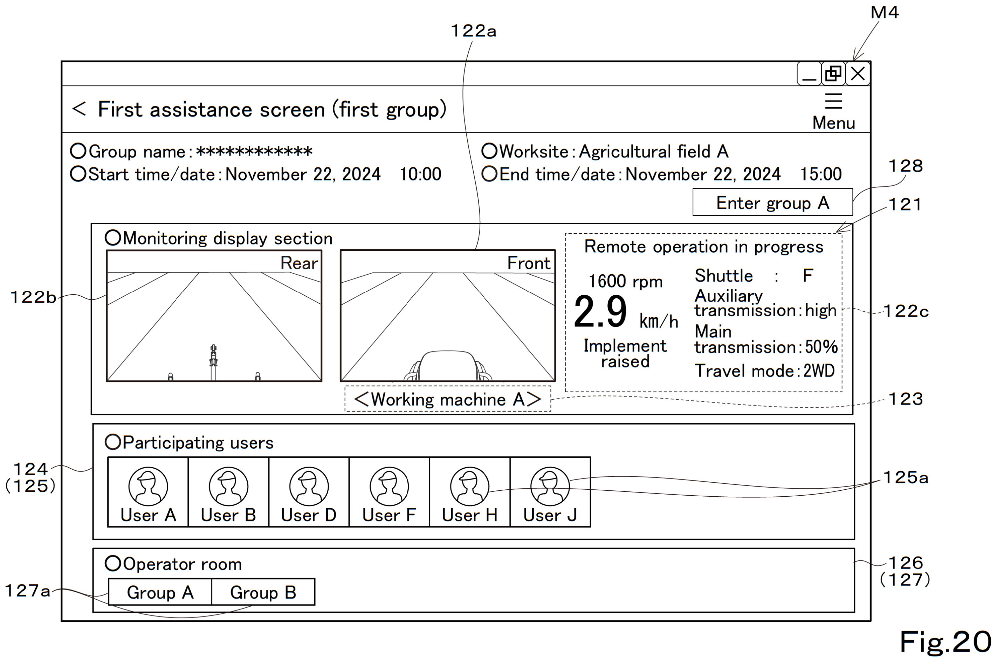

FIG. 20 illustrates another example of the first assistance screen M4. As illustrated in FIG. 20, the first assistance screen M4 may include a transition causing element 128 (enter room button). The transition causing element 128 is a displayed image to receive an operation to cause a transition to a second assistance screen M5. In other words, the transition causing element 128 is an operation actuator (element) via which the assistance terminal 2 receives an instruction to start function(s)-for-assistance with respect to working machine(s) 1 belonging to the corresponding second group G2. Thus, the transition causing element 128 as illustrated in FIG. 20 is displayed on the first assistance screen M4 of the first display 44 of each of assistance terminal(s) 2 belonging to the second group G2, among the assistance terminals 2 belonging to the first group G1. On the other hand, the transition causing element 128 is not displayed on the first assistance screen M4 of the first display 44 of each of assistance terminal(s) 2 not belonging to the second group G2, among the assistance terminals 2 belonging to the first group G1.

Thus, the transition causing element 128 as illustrated in FIG. 20 is displayed on the first assistance screen M4 of the first display 44 of each of assistance terminal(s) 2 belonging to the second group G2, among the assistance terminals 2 belonging to the first group G1. On the other hand, the transition causing element 128 is not displayed on the first assistance screen M4 of the first display 44 of each of assistance terminal(s) 2 not belonging to the second group G2, among the assistance terminals 2 belonging to the first group G1.

Note that the first assistance screen M4 as has been discussed with reference to FIGS. 18 to 20 is merely an example, and the first assistance screen M4 is not limited to the examples shown in FIGS. 18 to 20.

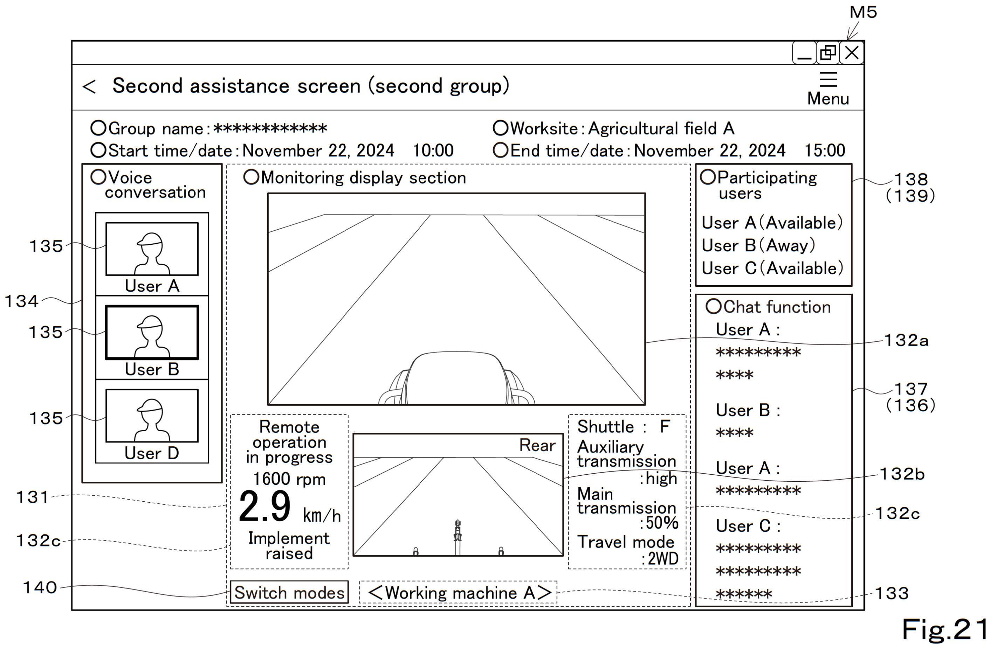

The second assistance screen M5 is a screen for assistance terminal(s) 2 belonging to a second group G2 to perform function(s)-for-assistance. In the present example embodiment, the second assistance screen M5 is mainly for third function(s)-for-assistance to be performed. FIG. 21 illustrates an example of the second assistance screen M5. The second assistance screen M5 is a screen for assistance terminal(s) 2 belonging to a second group G2 to perform function(s)-for-assistance. Thus, in the present example embodiment, the second assistance screen M5 is a screen for third function(s)-for-assistance to be performed.

The second assistance screen M5 in FIG. 21 is a screen for remote monitoring, voice conversation, and a chat function, as third functions-for-assistance, to be performed. The second controller 41 is configured or programmed to, when the operator or the like operates the first input interface 45, cause the first display 44 to display the second assistance screen M5. For example, the second controller 41 is configured or programmed to, when the operator or the like operates the first input interface 45, cause the first display 44 to display the second assistance screen M5 based on various information received via the second communicator 43 and the fourth communicator 63.

As illustrated in FIG. 21, the second assistance screen M5 includes a second monitoring display section 131. The second monitoring display section 131 is a display area to display information corresponding to remote monitoring. For example, the second monitoring display section 131 includes windows 132a, 132b to display image information about images captured by the first imager 36. In the example in FIG. 21, the second monitoring display section 131 includes a window 132a to display a captured front image of an area forward of the working machine 1 captured from the interior of the protection structure 13, and a window 132b to display a captured rear image of an area rearward of the working machine 1.

The second monitoring display section 131 may include a window 132c to display the state of the working machine 1 detected by the state detector 33. In the example in FIG. 21, the second monitoring display section 131 includes windows 132c to display the vehicle speed, direction of travel (forward or rearward), speed stage, and the like of the working machine 1.

Note that, in the example in FIG. 21, the second monitoring display section 131 displays only information about one working machine 1 of working machine(s) 1 belonging to the second group G2. Thus, in the case where a plurality of working machines 1 belong to the second group G2, the second monitoring display section 131 may be configured to selectively display information (image information, state of working machine 1) relating to one of the working machines 1, on a per-working machine 1 basis.

In such a case, the second monitoring display section 131 includes a displayed image (second switching element 133) to receive operations, and the second controller 41 is configured or programmed to switch the working machine 1 displayed in the second monitoring display section 131 in response to the operation on the second switching element 133. A configuration may be used in which the working machine 1 displayed in the second monitoring display section 131 is subject to remote operation. Thus, the second controller 41 is configured or programmed to, when the second manual operator 46 is operated, transmit, to the assistance device 4, operation information corresponding to the working machine 1 to be displayed in the second monitoring display section 131.

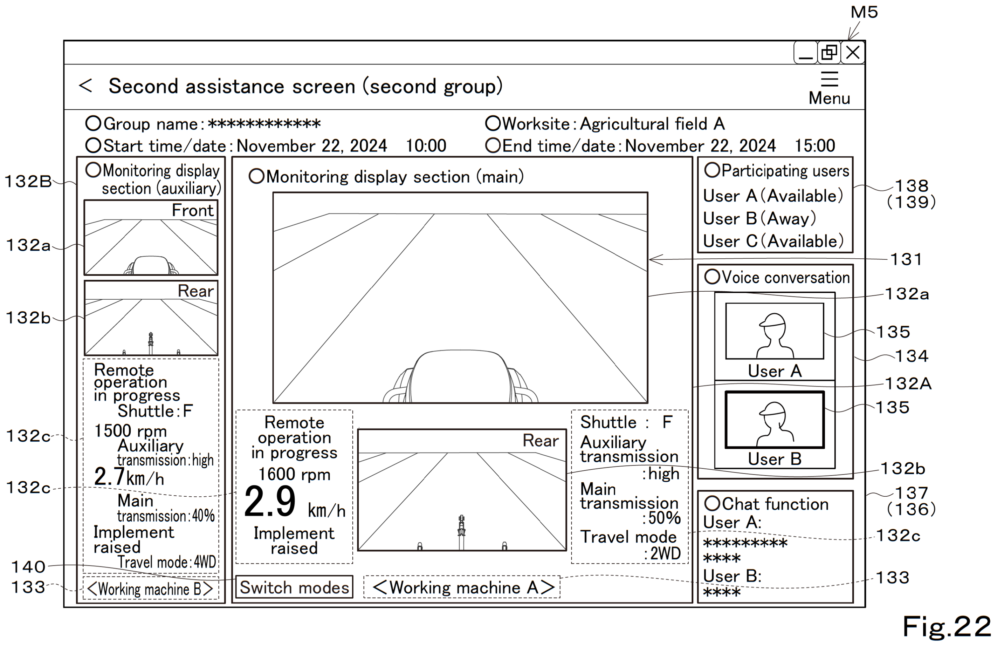

FIG. 22 illustrates another example of the second assistance screen M5. In the case where a plurality of working machines 1 belong to the second group G2, the second monitoring display section 131 may display pieces of information (image information, state of working machine 1) corresponding to the remote monitoring of a plurality of working machines 1 among the working machines 1 belonging to the second group G2 together, as illustrated in FIG. 22. In the example in FIG. 22, the second monitoring display section 131 includes a main display area 132A (first display area) to display information relating to the remote monitoring of one working machine 1 (first working machine 1A) belonging to the second group G2, and a sub-display area 132B (second display area) to display information corresponding to the remote monitoring of another working machine 1 (second working machine 1B) belonging to the second group G2. As illustrated in FIG. 22, the main display area 132A is larger than the sub-display area 132B. The main display area 132A is located at the center or substantially at the center of the second assistance screen M5, and the sub-display area 132B is located radially outward of the main display area 132A.

Note that the working machine 1 displayed in the main display area 132A is subject to the remote operation. Therefore, the working machine 1 displayed in the sub-display area 132B is not subject to the remote operation. Thus, the second controller 41 is configured or programmed to, when the second manual operator 46 is operated, transmit, to the assistance device 4, operation information corresponding to the working machine 1 displayed in the main display area 132A.

Note that although the example in FIG. 22 shows a case in which the second monitoring display section 131 displays pieces of information corresponding to the remote monitoring of two working machines 1 together, the number of working machines 1 for which the second monitoring display section 131 can display pieces of information together is not limited to two.

As illustrated in FIGS. 21 and 22, the second assistance screen M5 includes a call display section 134. The call display section 134 is a display area to display information corresponding to voice conversation (voice call). For example, the call display section 134 includes window(s) 135 to display image information about an image captured by the second imager 47 of another assistance terminal 2.

As illustrated in FIGS. 21 and 22, the second assistance screen M5 includes a chat display section 136. The chat display section 136 is a display area to display information corresponding to the chat function. For example, the chat display section 136 includes a window 137 to display text message(s) inputted via the second input interface 55 of another assistance terminal(s) 2.

As illustrated in FIGS. 21 and 22, the second assistance screen M5 includes a second connection display section 138. The second connection display section 138 is a display area to display other assistance terminal(s) 2 (user(s)) belonging to the second group G2. For example, the second connection display section 138 includes user name(s) representing other user(s).

Note that, as illustrated in FIGS. 21 and 22, the second assistance screen M5 may include software operation actuator(s) to receive an operation to perform a function-for-assistance defined to be assigned to the assistance terminal 2. The operation actuator is, for example, a displayed image 140 to receive a manual operation to perform the fifth remote operation (remote switching operation).

The second assistance screen M5 may be operated via the first input interface 45, and may receive a request to assign a second function-for-assistance in response to the operation. Note there that, in addition to the request to assign a second function-for-assistance, a request to newly associate a working machine 1 with the second group G2 (group G) may be received. Therefore, the second controller 41 (assistance terminal 2) is configured or programmed to, when the second assistance screen M5 receives such request(s), transmit information relating to the request(s) to the assistance device 4. The fourth controller 61 is configured or programmed to, with this, when the fourth communicator 63 receives the information relating to the request(s), provide a notification indicating that the request(s) is/are made to the management terminal 3. In such a case, the manager etc. need only operate the management terminal 3 to operate the third definition screen M3 to change the definition of assignment of second function(s)-for-assistance.

As has been discussed, the second assistance screen M5 is able to, in the second monitoring display section 131 and the second connection display section 138, display assistance terminal(s) 2 belonging to a group G (second group G2) and working machine(s) 1 belonging to the group G (second group G2). Thus, the display (first display 44) is configured to display assistance terminal(s) 2 belonging to a group G and working machine(s) 1 belonging to the group G.

Assistance terminal(s) 2 belonging to a first group G1 is/are allowed to perform first function(s)-for-assistance with respect to working machine(s) 1 belonging to the first group G1. Assistance terminal(s) 2 belonging to a second group G2 is/are allowed to perform second function(s)-for-assistance and third function(s)-for-assistance with respect to working machine(s) 1 belonging to the second group G2.

### Second Example Embodiment

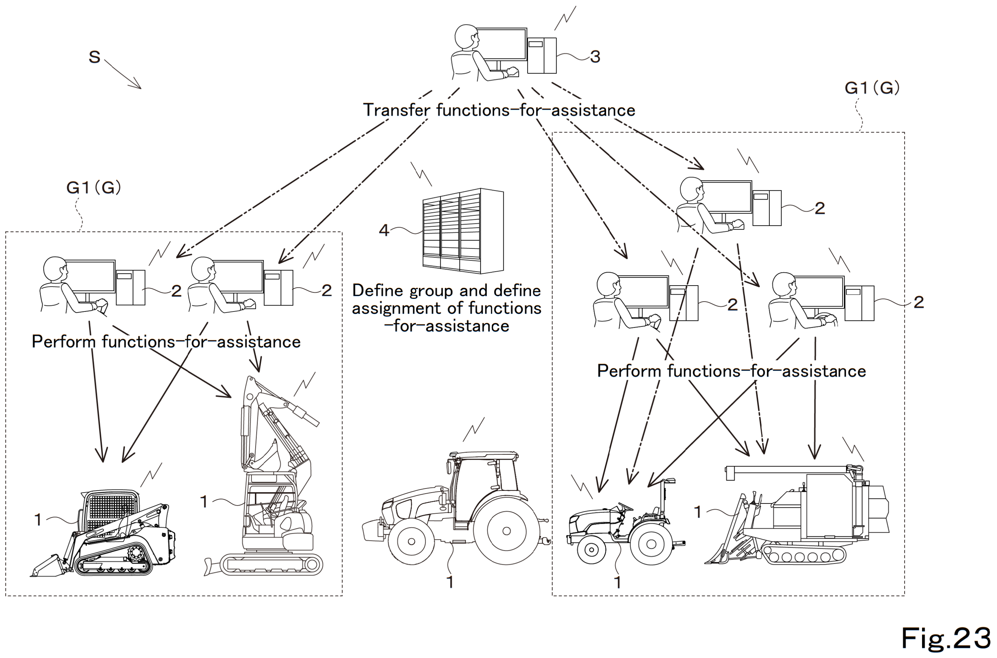

FIG. 23 schematically illustrates a general configuration of an assistance system S of a second example embodiment of the present invention. Although the description of the first example embodiment discusses example cases in which the definer 61a of the assistance system S defines a first group G1 and a second group G2 and defines that second function(s)-for-assistance is/are assigned to assistance terminal(s) 2 belonging to the second group G2, as illustrated in FIG. 23, the definer 61a of the second example embodiment differs from the first example embodiment in that the definer 61a of the second example embodiment defines that second function(s)-for-assistance is/are assigned to assistance terminal(s) 2 belonging to the first group G1 and does not define the second group G2. That is, the definer 61a is configured or programmed such that, in the case where a plurality of assistance terminals 2 belong to a group G (first group G1), the definer 61a defines that respective different second functions-for-assistance, as functions-for-assistance with respect to working machine(s) 1 belonging to the group G, are assigned to a first assistance terminal 2A belonging to the group G and a second assistance terminal 2B belonging to the group G.

The following description discusses, with regard to the assistance system S of the second example embodiment, mainly elements different from those of the foregoing example embodiment (first example embodiment), and the same elements as those of the first example embodiment are assigned identical reference signs and the detailed description thereof is omitted here. In the following description of the second example embodiment, the first group G1 is referred to simply as a "group G".

In the second example embodiment, the definer 61a defines, as a group G, one or more assistance terminal 2 connected to a predetermined access point and one or more working machines 1 associated with the access point. The definer 61a acquires a defining instruction to define a group G based on information inputted via the management terminal 3. The definer 61a generates an access point in accordance with the defining instruction to define a group G. The definer 61a, based on information inputted via the management terminal 3, acquire information about working machine(s) 1 (machine identification information) and information about user(s) to be associated with the group G, and defines group information in which information relating to the access point (e.g., URL specific to the group G, group ID, etc.), the machine identification information, and the user identification information are associated with each other.

The definer 61a defines that predetermined second function(s)-for-assistance, as function(s)-for-assistance with respect to working machine(s) 1 belonging to the group G, are assigned to assistance terminal(s) 2 belonging to the group G. Specifically, the definer 61a is configured or programmed to, in the case where a plurality of assistance terminals 2 belong to the group G, define that respective different second functions-for-assistance, as functions-for-assistance with respect to working machine(s) 1 belonging to the group G, are assigned to one of the assistance terminals 2 (first assistance terminal 2A) belonging to the group G and another of the assistance terminals 2 (second assistance terminal 2B) belonging to the group G. In other words, the definer 61a is configured or programmed such that, when the definer 61a defines that a second function-for-assistance with respect to one working machine 1 belonging to the group G is assigned to one assistance terminal 2 (first assistance terminal 2A) belonging to the group G, the definer 61a does not define that the same second function-for-assistance with respect to the one working machine 1 is assigned to another assistance terminal 2 (second assistance terminal 2B) belonging to the group G.

Specifically, in the present example embodiment, the definer 61a is configured or programmed to define that second function(s)-for-assistance is/are assigned to assistance terminal(s) 2 belonging to the group G, based on information relating to assignment of the second function(s)-for-assistance inputted by the manager etc. operating the management terminal 3. For example, the definer 61a is configured or programmed such that, when the definer 61a defines that a function-for-assistance in traveling (first remote operation, remote travel-controlling operation) or steering (second remote operation, remote steering-controlling operation) of a working machine 1 belonging to the group G is assigned to a first assistance terminal 2A belonging to the group G, the definer 61a does not define that the function-for-assistance in traveling (first remote operation, remote travel-controlling operation) or steering (second remote operation, remote steering-controlling operation) of the working machine 1, which has been assigned to the first assistance terminal 2A, is assigned to a second assistance terminal 2B belonging to the group G.

The definer 61a may be configured or programmed to define that third function(s)-for-assistance, as function(s)-for-assistance with respect to working machine(s) 1 belonging to the group G, is/are assigned in common to assistance terminal(s) 2 belonging to the group G. Specifically, the definer 61a defines that third function(s)-for-assistance, as function(s)-for-assistance with respect to working machine(s) 1 belonging to the group G, is/are assigned in common to a first assistance terminal 2A belonging to the group G and a second assistance terminal 2B belonging to the group G. In other words, the definer 61a is configured or programmed to, even when the definer 61a defines that third function(s)-for-assistance with respect to one working machine 1 belonging to the group G is/are assigned to one assistance terminal 2 (first assistance terminal 2A) belonging to the group G, define that the same third function(s)-for-assistance with respect to the one working machine 1 is/are assigned to another assistance terminal 2 (second assistance terminal 2B) belonging to the group G.

In the present example embodiment, the definer 61a, when defining a group G, automatically defines third function(s)-for-assistance for assistance terminal(s) 2 (user(s)) belonging to the group G. For example, the definer 61a associates third function(s)-for-assistance with group information.

For example, the definer 61a of the present example embodiment is configured or programmed to define that a function-for-assistance in braking working machine(s) 1 belonging to the group G (third remote operation), as a third function-for-assistance with respect to the working machine(s) 1, for assistance terminal(s) 2 belonging to the group G. Therefore, in the case where a plurality of assistance terminals 2 belong to the group G, the definer 61a defines that the third remote operation, as a third function-for-assistance with respect to working machine(s) 1 belonging to a group G, is assigned to both a first assistance terminal 2A (one of the assistance terminals 2) belonging to the group G and a second assistance terminal 2B (another of the assistance terminals 2) belonging to the group G.

Note that the second functions-for-assistance and third functions-for-assistance have already discussed in detail in the description of the first example embodiment, and therefore are not discussed in detail in the description of the second example embodiment.

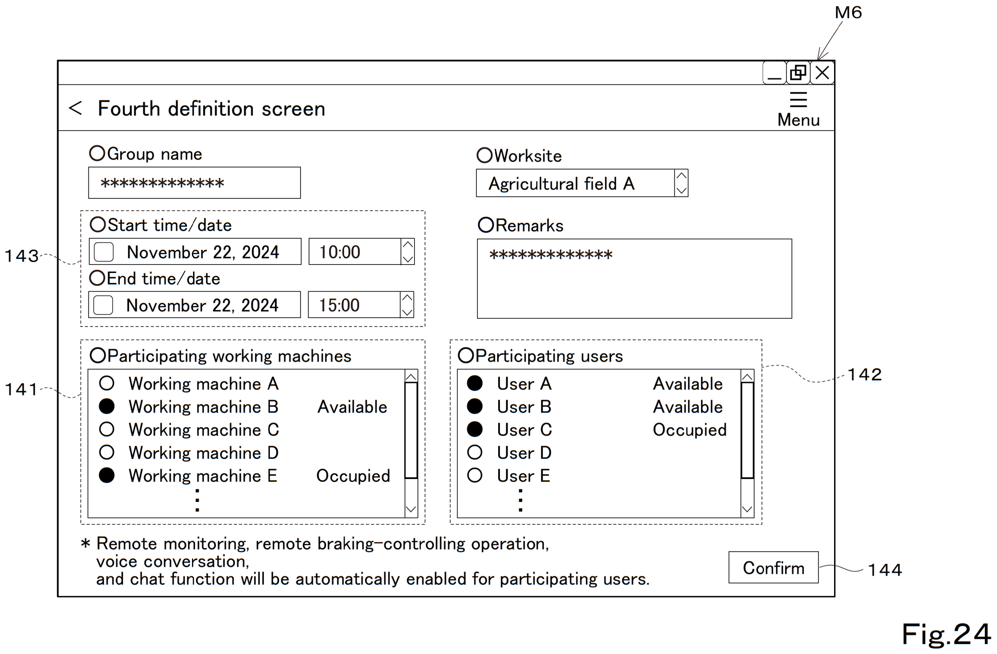

FIG. 24 illustrates an example of a fourth definition screen M6. The fourth definition screen M6 is a screen to receive input of various information for use in defining a group G. Thus, the fourth definition screen M6 is displayed on the second display 54 of the management terminal 3. Various information inputted on the fourth definition screen M6 is transmitted via the third communicator 53 and the fourth communicator 63 to the fourth controller 61. The definer 61a is configured or programmed to, with this, define a group G based on the various information.

The third controller 51 is configured or programmed to, when the manager etc. performs an operation on the second input interface 55, cause the second display 54 to display the fourth definition screen M6. In the present example embodiment, the third controller 51 is configured or programmed to send, via the third communicator 53 and the fourth communicator 63 to the fourth controller 61, a request for display information including image information for use in displaying the fourth definition screen M6. The third controller 51 is configured or programmed to, upon receipt of the display information by the third communicator 53 from the fourth communicator 63, cause the second display 54 to display the fourth definition screen M6 based on the display information.

Note that the third controller 51 may be configured or programmed to cause the second display 54 to display the fourth definition screen M6 based on program(s), image information, and/or the like stored in the third storing device 52.

As illustrated in FIG. 24, the fourth definition screen M6 includes a third machine body input section 141. The third machine body input section 141 receives input of one or more working machines 1 to be associated with an access point. Note that the third machine body input section 141 includes the same or substantially the same configuration as the first machine body input section 101 of the first definition screen M1, and therefore detailed description thereof is omitted here.

The fourth definition screen M6 includes a third user input section 142. The third user input section 142 receives input of one or more users to share connection information about the access point. Note that the third user input section 142 includes the same or substantially the same configuration as the first user input section 102 of the first definition screen M1, and therefore detailed description thereof is omitted here.

The fourth definition screen M6 may include a second time input section 143. The second time input section 143 receives input of time information relating to the group G. For example, the second time input section 143 receives input of, as the time information relating to the group, at least one of the start time or the end time. In the present example embodiment, the second time input section 143 receives input of both the start time and the end time. The start time is the time at which assistance for working machine(s) 1 belonging to the group G is to be started using assistance terminal(s) 2 belonging to the group G. The end time is the time at which assistance for working machine(s) 1 belonging to the group G using assistance terminal(s) 2 belonging to the group G is to be ended. Note that the second time input section 143 includes the same or substantially the same configuration as the first time input section 103 of the first definition screen M1, and therefore detailed description thereof is omitted here.

Similar to the first definition screen M1, the fourth definition screen M6 may provide a predetermined notification based on the time information inputted in the second time input section 143 and the working machine 1 inputted in the third machine body input section 141, instead of presenting working machine(s) 1 that can be inputted into the third machine body input section 141. The fourth definition screen M6 may present user(s) that can be inputted into the third user input section 142 based on the time information inputted in the second time input section 143.

The fourth definition screen M6 includes a fourth confirmation button 144. The fourth confirmation button 144 is a displayed image to receive operation via the second input interface 55. The fourth confirmation button 144, when operated, receives confirmation of information inputted on the fourth definition screen M6. When the fourth confirmation button 144 is operated, the management terminal 3 transmits, via the third communicator 53 and the fourth communicator 63 to the fourth controller 61, the information inputted on the fourth definition screen M6.

When the fourth communicator 63 receives the information, the definer 61a generates group information based on the received information. In the present example embodiment, the definer 61a generates an access point and a group ID, and generates a URL specific to the group G, as the address information of the access point. The definer 61a acquires one or more pieces of machine identification information, one or more pieces of user identification information, and time information inputted on the fourth definition screen M6. With this, the definer 61a associates the group ID, the address information, the one or more pieces of machine identification information, the one or more pieces of user identification information, the time information and one or more third functions-for-assistance with each other to generate group information. When the definer 61a defines group information, the fourth storing device 62 stores the group information in a group table T6.

Note that the definer 61a may associate other information in addition to the above-described information to generate group information. For example, the definer 61a may associate information about a worksite such as an agricultural field where work is to be performed by the working machine(s) 1 and/or the content of the work, etc., in addition to the above-described information to define group information.

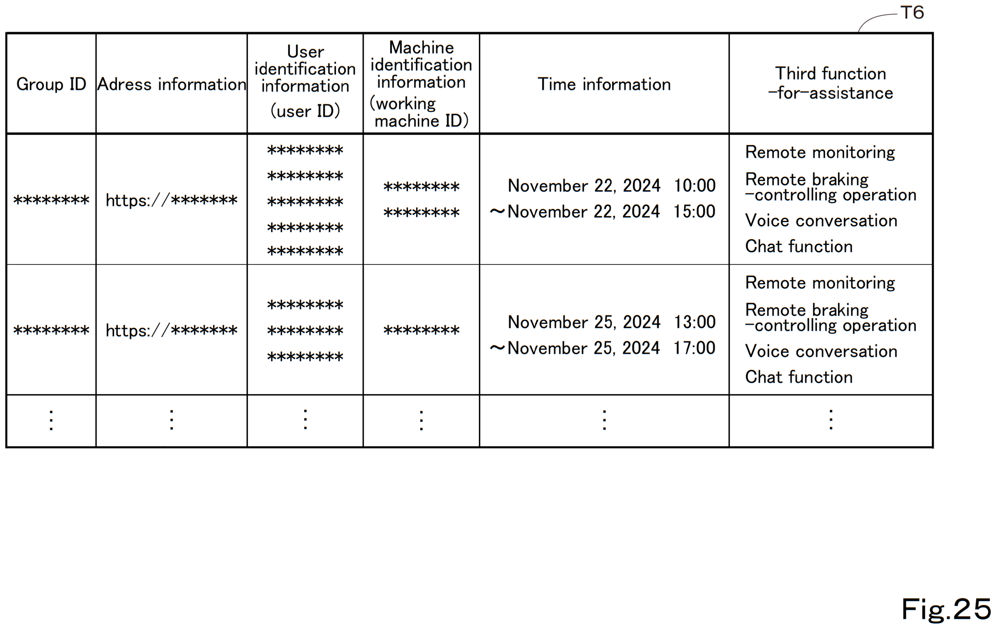

FIG. 25 is a block diagram showing an example of the group table T6. As illustrated in FIG. 25, the group table T6 stores a group ID, address information, one or more pieces of machine identification information, one or more pieces of user identification information, time information, and third function(s)-for-assistance which are associated with each other, per group G.

The fourth controller 61 may be configured or programmed to, when the definer 61a defines group information, provide a notification of address information based on the one or more pieces of user identification information included in the corresponding group G. For example, the fourth controller 61 is configured or programmed to reference the user table T1 stored in the fourth storing device 62 to acquire email address(es) corresponding to the one or more pieces of user identification information included in the group information. The fourth controller 61 is configured or programmed to generate (create) notification email(s) including or enclosing the address information, and send the notification email(s) to the acquired email address(es).

The fourth controller 61 may be configured or programmed to, when the definer 61a generates group information, update the first schedule information based on the group information. Specifically, the fourth controller 61 is configured or programmed to cause information included in the group information to be stored as action plan(s) for working machine(s) 1 corresponding to the one or more pieces of machine identification information included in the group information. For example, the fourth controller 61 is configured or programmed to cause the first schedule information to store action plan(s) for working machine(s) 1 included in the group information.

The fourth controller 61 may be configured or programmed to, when the definer 61a generates group information, update the second schedule information based on the group information. Specifically, the fourth controller 61 may be configured or programmed to cause information included in the group information to be stored as action plan(s) for the user(s) corresponding to the one or more pieces of user identification information included in the group information. For example, the fourth controller 61 may be configured or programmed to cause the second schedule information to store action plan(s) for the user(s) during the time indicated by the time information included in the group information. The fourth controller 61 may be configured or programmed to cause the schedule information to store, as action plan(s) for the user(s), information such as the address information, one or more working machine(s) 1, other user(s), worksite(s), work content, and/or the like, of the group information.

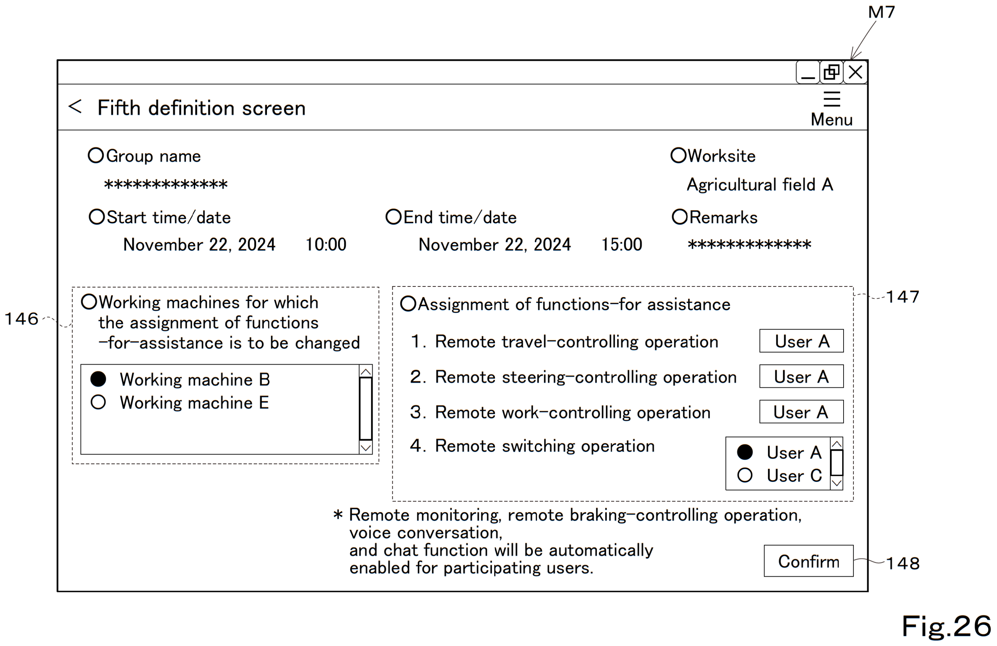

FIG. 26 illustrates an example of a fifth definition screen M7. The fifth definition screen M7 is configured to receive input of various information used to define that second function(s)-for-assistance with respect to working machine(s) 1 belonging to a group G is/are assigned to assistance terminal(s) 2 belonging to the group G. Thus, the fifth definition screen M7 is displayed on the second display 54 of the management terminal 3. Various information inputted on the fifth definition screen M7 is transmitted via the third communicator 53 and the fourth communicator 63 to the fourth controller 61. The definer 61a is configured or programmed to, with this, define second function(s)-for-assistance for assistance terminal(s) 2 belonging to the group G based on the various information.

The third controller 51 is configured or programmed to, when the manager etc. performs an operation on the second input interface 55, cause the second display 54 to display the fifth definition screen M7. For example, the third controller 51 is configured or programmed to, when the fourth confirmation button 144 is operated while the second display 54 is displaying the fourth definition screen M6, control the second display 54 to cause a display transition from the fourth definition screen M6 to the fifth definition screen M7. In such a case, the fifth definition screen M7 is configured to be used to define second function(s)-for-assistance for assistance terminal(s) 2 belonging to the group G which has been defined based on the various information inputted on the fourth definition screen M6. Thus, the fifth definition screen M7 corresponds to the group G which has been defined using the fourth definition screen M6 displayed before the display transition.

Note that the third controller 51 may be configured or programmed to display the fifth definition screen M7 anytime in response to the operation by the manager etc. on the second input interface 55.

In the present example embodiment, the third controller 51 is configured or programmed to send, via the third communicator 53 and the fourth communicator 63 to the fourth controller 61, a request for display information including image information for use in displaying the fifth definition screen M7. The third controller 51 is configured or programmed to, upon receipt of the display information by the third communicator 53 from the fourth communicator 63, cause the second display 54 to display the fifth definition screen M7 based on the display information.

Note that the third controller 51 may be configured or programmed to cause the second display 54 to display the fifth definition screen M7 based on program(s), image information, and/or the like stored in the third storing device 52.

As illustrated in FIG. 26, the fifth definition screen M7 includes a second machine body selecting section 146. The second machine body selecting section 146 receives input of a selection of one or more working machines 1 belonging to the group G. Note that the second machine body selecting section 146 includes the same or substantially the same configuration as the first machine body selecting section 111 of the third definition screen M3, and therefore detailed description thereof is omitted here.

The fifth definition screen M7 includes a second assignment selecting section 147. The second assignment selecting section 147 receives input of assignment of second function(s)-for-assistance with respect to working machine(s) 1 belonging to the group G to assistance terminal(s) 2 (user(s)) belonging to the group G. Note that the second assignment selecting section 147 includes the same or substantially the same configuration as the first assignment selecting section 112 of the third definition screen M3, and therefore detailed description thereof is omitted here.

The fifth definition screen M7 includes a fifth confirmation button 148. The fifth confirmation button 148 is a displayed image to receive operation via the second input interface 55. The fifth confirmation button 148, when operated, receives confirmation of information inputted on the fifth definition screen M7. When the fifth confirmation button 148 is operated, the management terminal 3 transmits, via the third communicator 53 and the fourth communicator 63 to the fourth controller 61, the information inputted on the fifth definition screen M7. Note here that the fifth confirmation button 148 may be configured to not accept operation in the case where no assistance terminals 2 (users) are assigned to second function(s)-for-assistance with respect to working machine(s) 1 belonging to the group G.

With this, when the fourth communicator 63 receives the various information, the definer 61a defines second function(s)-for-assistance for assistance terminal(s) 2 based on the received various information. The definer 61a associates the group ID, machine identification information, user identification information, and second function(s)-for-assistance with each other to generate assignment information. When the definer 61a defines assignment information, the fourth storing device 62 stores the assignment information in the assignment table T5. Note that the description of the assignment table T5 in the second example embodiment can be obtained merely by replacing the second group ID of the assignment table T5 in the description of the first example embodiment with the group ID, and therefore detailed description thereof is omitted here.

### Performing functions-for-assistance

The following description discusses performing functions-for-assistance using assistance terminal(s) 2. The assistance controller 61b of the second example embodiment is configured or programmed to control transmission and reception of various information for assistance terminal(s) 2 belonging to a group G, based on the group table T6 and the assignment table T5 stored in the fourth storing device 62, to perform function(s)-for-assistance (second function(s)-for-assistance, third function(s)-for-assistance).

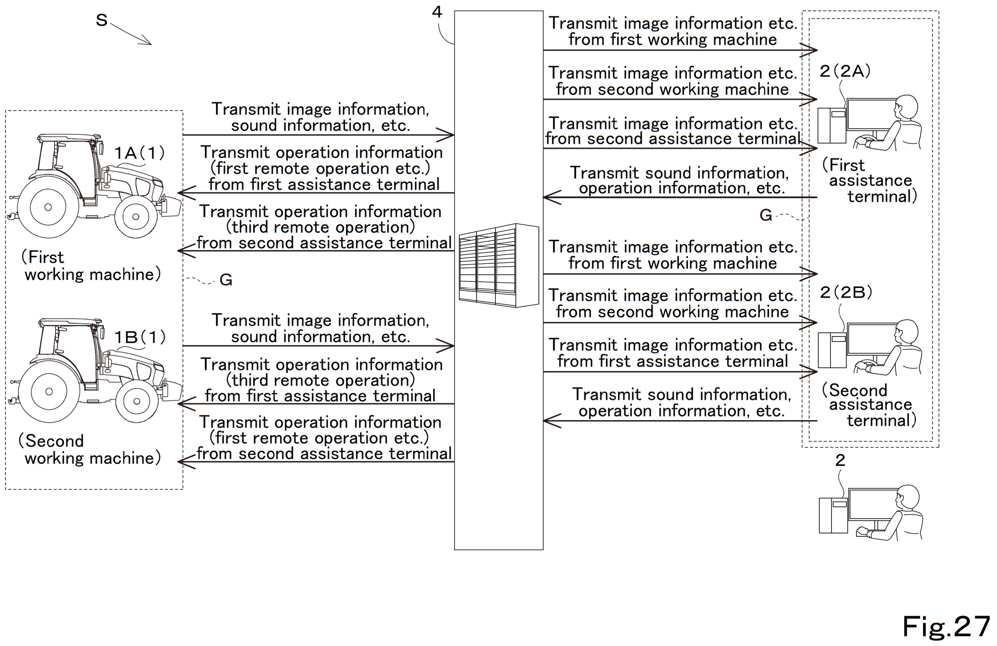

FIG. 27 schematically illustrates a flow of various information in a group G of the second example embodiment. As illustrated in FIG. 27, in the case where one or more working machines 1 have established communication with the access point corresponding to the group G, the one or more working machines 1 transmit image information about an image captured by the first imager 36, etc., to the assistance device 4.

As illustrated in FIG. 27, in the case where one or more assistance terminals 2 have established connection with the access point corresponding to the group G, the assistance terminal(s) 2 belonging to the group G transmits operation information received at the second manual operator 46, etc., to the assistance device 4.

The assistance controller 61b is configured or programmed to, upon receipt of various information from one or more working machines 1 and one or more assistance terminals 2 belonging to the group G, provide (transmit) the information to the assistance terminal(s) 2 according to function(s)s-for-assistance assigned to the assistance terminal(s) 2. The assistance controller 61b is configured or programmed to, upon receipt of operation information from one or more assistance terminals 2 belonging to the group G, transmit the operation information to working machine(s) 1 belonging to the group G according to function(s)-for-assistance assigned to each assistance terminal 2.

The assistance controller 61b is configured or programmed to reference the assignment table T5 stored in the fourth storing device 62, reference second function(s)-for-assistance assigned to the assistance terminals 2, and transmit operation information to working machine(s) 1 according to the second function(s)-for-assistance. Since the assistance terminals 2 belonging to the group G are assigned third function(s)-for-assistance, the assistance controller 61b provides (transmits) various information to the assistance terminals 2 according to the third function(s)-for-assistance. Furthermore, the assistance controller 61b is configured or programmed to transmit various information to working machine(s) 1 according to the third function(s)-for-assistance.

Specifically, the assistance device 4 (assistance controller 61b) transmits operation information relating to the second manual operator 46 to working machine(s) 1 belonging to the group G according to a second function-for-assistance. The assistance device 4 (assistance controller 61b) transmits image information about an image captured by the second imager 47 of one assistance terminal 2 (first assistance terminal 2A) belonging to the group G to another assistance terminal 2 (second assistance terminal 2B) belonging to the group G, according to a third function-for-assistance (voice conversation). The assistance device 4 (assistance controller 61b) transmits sound information detected by the second sound collector 48 of a first assistance terminal 2A belonging to the group G to a second assistance terminal 2B belonging to the group G, according to a third function-for-assistance (voice conversation). The assistance device 4 (assistance controller 61b) transmits a text message inputted via the first input interface 45 of one assistance terminal 2 (first assistance terminal 2A) belonging to the group G to another assistance terminal 2 (second assistance terminal 2B) belonging to the group G, according to a third function-for-assistance (chat function).

With this, assistance terminal(s) 2 assigned second function(s)-for-assistance, among the assistance terminals 2 belonging to the group G, is/are able to perform the second function(s)-for-assistance by transmitting information relating to the remote operation corresponding to the second function(s)-for-assistance to working machine(s) 1 via the assistance device 4 (assistance controller 61b). The assistance terminals 2 belonging to the group G are able to perform third function(s)-for-assistance by transmitting information relating to the third remote operation corresponding to the third function(s)-for-assistance to working machine(s) 1 via the assistance device 4 (assistance controller 61b). The assistance terminals 2 belonging to the group G are able to perform third function(s)-for-assistance (remote monitoring, voice conversation, chat function), etc., based on various information provided from the assistance device 4 (assistance controller 61b).

Note that the second controller 41 is configured or programmed to, when an assistance terminal 2 belonging to a group G connects to the access point, cause the first display 44 to display the second assistance screen M5 based on various information received via the second communicator 43 and the fourth communicator 63 (see FIGS. 21 and 22). Thus, in the second example embodiment, the second assistance screen M5 is a screen for an assistance terminal 2 belonging to a group G to perform function(s)-for-assistance.

As has been discussed, assistance terminal(s) 2 belonging to a group G is/are allowed to perform second function(s)-for-assistance and third function(s)-for-assistance with respect to working machine(s) 1 belonging to the group G.

### Third Example Embodiment

The description of the first and second example embodiments discusses cases in which the working machine(s) 1, the assistance terminal(s) 2, and the management terminal 3 communicate with each other in a client-server manner in the assistance system S. In contrast, an assistance system S of a third example embodiment differs from the first and second example embodiments in that the working machine(s) 1 and the assistance terminal(s) 2 communicate with each other in a peer-to-peer (P2P) manner. Therefore, in the third example embodiment, when the definer 61a has defined a group G or made a definition relating to function(s)-for-assistance, assistance terminal(s) 2 belonging to the group G communicate directly with working machine(s) 1 belonging to the group G.

The following description discusses, with regard to the assistance system S of the third example embodiment, mainly elements different from those of the foregoing example embodiments (first and second example embodiments), and the same elements as those of the first and second example embodiments are assigned identical reference signs and detailed description thereof is omitted here. The following description discusses the assistance system S of the third example embodiment based on an example case in which the definer 61a defines a first group G1 and a second group G2, as with the definer 61a of the first example embodiment. Although the description of the third example embodiment discusses cases in which the working machine(s) 1 and the assistance terminal(s) 2 communicate with each other in a P2P manner and the assistance terminals 2 also communicate with each other in a P2P manner, the assistance terminals 2 may communicate with each other in a client-server manner similar to the first and second example embodiments.

The first communicator 34 of each working machine 1 of the third example embodiment is configured or programmed to communicate wirelessly with the second communicator 43 of assistance terminal(s) 2 via a cell phone communication network, the Internet, wireless LAN and/or the like. The second communicator 43 of one assistance terminal 2 (first assistance terminal 2A) is configured or programmed to communicate wirelessly with the second communicator 43 of another assistance terminal 2 (first assistance terminal 2A) via a cell phone communication network, the Internet, wireless LAN and/or the like. Note that the user table T1 of the third example embodiment stores the IP address(es) of the second communicator(s) 43 of assistance terminal(s) 2, as user information. Specifically, the user information includes IP address(es) of the second communicator(s) 43 of assistance terminal(s) 2 logged in by user(s).

In the assistance system S of the third example embodiment, the first controller 31 and the second controller 41 are configured or programmed to control transmission and reception of various information for assistance terminal(s) 2 to perform function(s)-for-assistance. Specifically, the first controller 31 is configured or programmed to reference the first group table T3 stored in the fourth storing device 62, and control transmission and reception of various information for assistance terminal(s) 2 belonging to the first group G1 to perform function(s)-for-assistance (first functions-for-assistance). The second controller 41 is configured or programmed to reference the first group table T3 stored in the fourth storing device 62 and control transmission and reception of various information for assistance terminal(s) 2 belonging to the first group G1 to perform function(s)-for-assistance (first functions-for-assistance).

The first controller 31 is configured or programmed to reference the second group table T4 and the assignment table T5 stored in the fourth storing device 62, and control transmission and reception of various information for assistance terminal(s) 2 belonging to the second group G2 to perform function(s)-for-assistance (second function(s)-for-assistance, third function(s)-for-assistance). The second controller 41 is configured or programmed to reference the second group table T4 and the assignment table T5 stored in the fourth storing device 62, and control transmission and reception of various information for assistance terminal(s) 2 belonging to the second group G2 to perform function(s)-for-assistance (second function(s)-for-assistance, third functions-for-assistance).

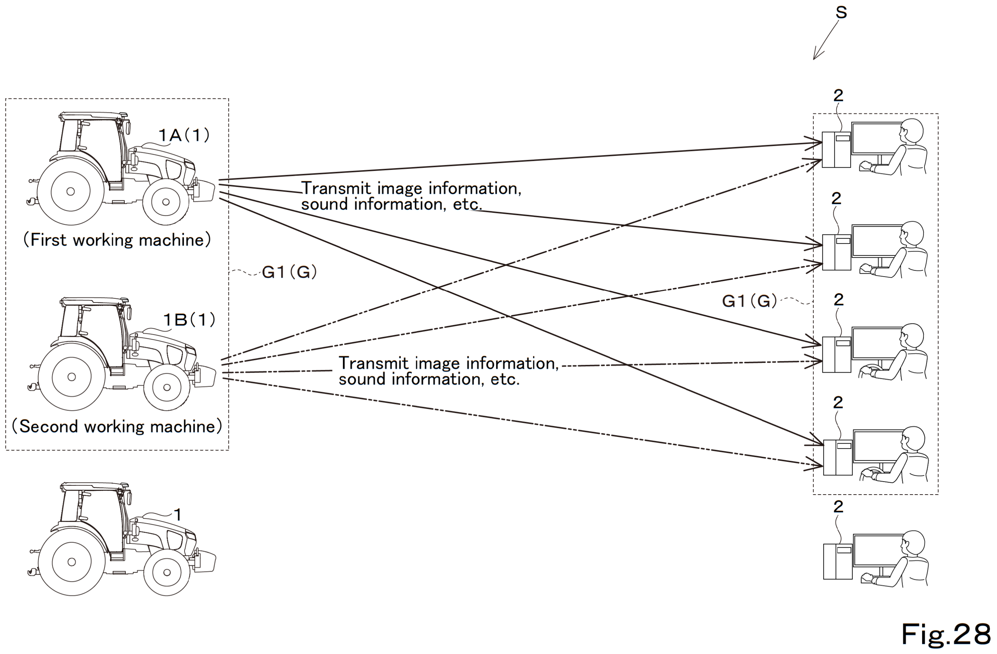

FIG. 28 schematically illustrates a flow of various information in the first group G1 of the third example embodiment. FIG. 28 shows that each user has logged in to an assistance terminal 2, and the assistance terminals 2 belonging to the first group G1 and working machines 1 belonging to the first group G1 are communicably connected to each other. Each assistance terminal 2 belonging to the first group G1 establishes communication with the working machines 1 belonging to the first group G1 based on the IP addresses of the first communicators 34 included in the working machine table T2.

As illustrated in FIG. 28, in the present example embodiment, each working machine 1 (first controller 31) belonging to the first group G1 transmits image information about an image captured by the first imager 36 to assistance terminals 2 belonging to the first group G1, according to a first function-for-assistance (remote monitoring) assigned to the assistance terminals 2 belonging to the first group G1. Each working machine 1 belonging to the first group G1 transmits image information about an image captured by the first imager 36 to assistance terminals 2 belonging to the first group G1 according to a first function-for-assistance (remote monitoring). Each working machine 1 belonging to the first group G1 transmits image information to the assistance terminals 2 belonging to the first group G1 via the first communicator 34 and the second communicator 43. Each working machine 1 belonging to the first group G1 transmits the state of the working machine 1 belonging to the first group G1 detected by the state detector 33 to assistance terminals 2 belonging to the first group G1, according to a first function-for-assistance (remote monitoring). Each working machine 1 belonging to the first group G1 transmits sound information to assistance terminals 2 belonging to the first group G1 via the first communicator 34 and the second communicator 43. Each working machine 1 belonging to the first group G1 transmits sound information detected by the first sound collector 38 to assistance terminals 2 belonging to the first group G1, according to a first function-for-assistance (remote monitoring). Each working machine 1 belonging to the first group G1 transmits sound information to assistance terminals 2 belonging to the first group G1 via the first communicator 34 and the second communicator 43.

With this, assistance terminal(s) 2 belonging to a first group G1 is/are able to perform a first function-for-assistance (remote monitoring) based on various information provided from working machine(s) 1 belonging to the first group G1. Note that, also in the third example embodiment, similar to the first example embodiment, the assistance terminal(s) 2 belonging to the first group G1 need only be configured to display the first assistance screen M4 based on the received various information.

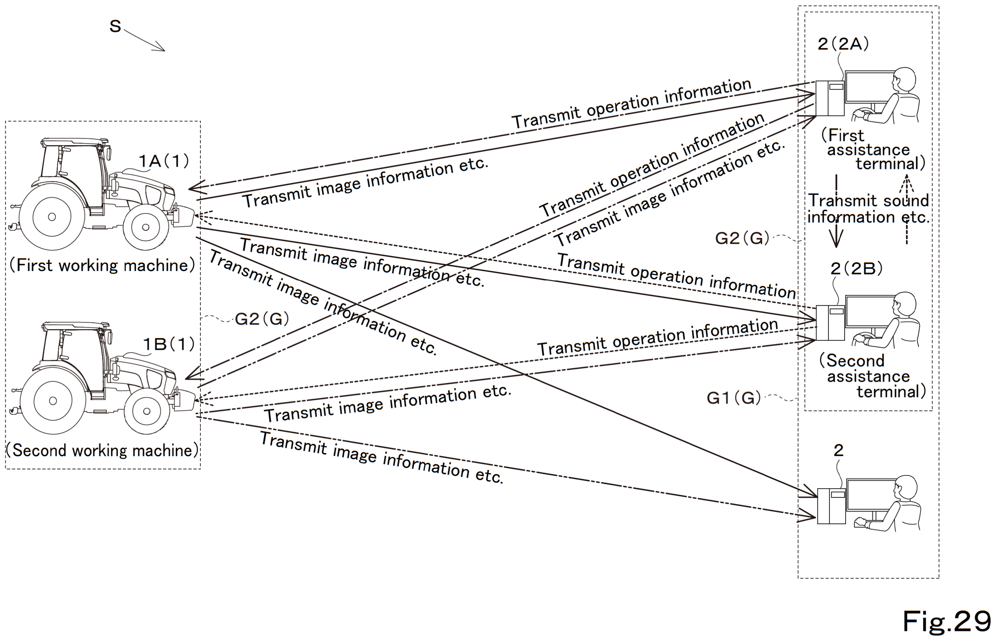

FIG. 29 schematically illustrates a flow of various information in a second group G2 of the third example embodiment. FIG. 29 shows that each user has logged in to an assistance terminal 2, and assistance terminals 2 belonging to the second group G2 and working machines 1 belonging to the second group G2 are communicably connected to each other. FIG. 29 also shows that assistance terminals 2 belonging to the second group G2 are communicably connected to each other. One assistance terminal 2 (first assistance terminal 2A) belonging to the second group G2 establishes connection with another assistance terminal 2 (second assistance terminal 2B) belonging to the second group G2 based on the IP address of the second communicator 43 included in the user table T1.

As illustrated in FIG. 29, in the present example embodiment, each assistance terminal 2 (second controller 41) belonging to the second group G2 transmits operation information about the second manual operator 46 to working machine(s) 1 belonging to the second group G2, according to a second function-for-assistance (remote operation) assigned to the assistance terminal 2 belonging to the second group G2. Each assistance terminal 2 references the assignment table T5 to determine a working machine 1 corresponding to the second function-for-assistance, and transmits the operation information to the working machine 1 via the second communicator 43 and the first communicator 34.

For example, an assistance terminal 2 assigned a second function-for-assistance (remote operation) transmits operation information relating to the remote operation to a working machine 1 corresponding to the second function-for-assistance. Therefore, an assistance terminal 2 not assigned the second function-for-assistance (remote operation) does not transmit operation information relating to the remote operation to the working machine(s) 1 corresponding to the second function-for-assistance.

This is discussed based on an example case in which different types of remote operation as second functions-for-assistance are assigned to assistance terminals 2. In the case where a first remote operation with respect to one working machine 1 (first working machine 1A) is assigned to one assistance terminal 2 (first assistance terminal 2A), the first assistance terminal 2A transmits operation information relating to the first remote operation to the first working machine 1A. The second assistance terminal 2B does not transmit operation information relating to the second remote operation to the first working machine 1A. The first assistance terminal 2A does not transmit operation information relating to the first remote operation to another working machine 1 (second working machine 1B).

Each assistance terminal 2 (second controller 41) belonging to the second group G2 transmits operation information about the second brake controlling actuator 46d to working machine(s) 1 according to a third function-for-assistance (third remote operation) assigned to the assistance terminal 2 belonging to the second group G2. Each assistance terminal 2 transmits operation information relating to the third remote operation to working machine(s) 1 via the second communicator 43 and the first communicator 34.

As illustrated in FIG. 29, in the present example embodiment, each working machine 1 (first controller 31) belonging to the second group G2 transmits various information to assistance terminal(s) 2 belonging to the second group G2, according to a third function-for-assistance (remote monitoring) assigned to the assistance terminal(s) 2 belonging to the second group G2. Each working machine 1 belonging to the second group G2 transmits image information about an image captured by the first imager 36 to assistance terminal(s) 2 belonging to the second group G2, according to the third function-for-assistance (remote monitoring). Each working machine 1 belonging to the second group G2 transmits image information to assistance terminal(s) 2 belonging to the second group G2 via the first communicator 34 and the second communicator 43, according to the third function-for-assistance (remote monitoring). Each working machine 1 belonging to the second group G2 transmits the state of the working machine 1 belonging to the second group G2 detected by the state detector 33 to assistance terminal(s) 2 belonging to the second group G2, according to the third function-for-assistance (remote monitoring). Each working machine 1 belonging to the second group G2 transmits sound information to assistance terminal(s) 2 belonging to the second group G2 via the first communicator 34 and the second communicator 43. Each working machine 1 belonging to the second group G2 transmits sound information detected by the first sound collector 38 to assistance terminal(s) 2 belonging to the second group G2, according to the third function-for-assistance (remote monitoring).

One assistance terminal 2 (first assistance terminal 2A, second controller 41) belonging to the second group G2 transmits image information about an image captured by the second imager 47 to another assistance terminal 2 (second assistance terminal 2B) belonging to the second group G2, according to a third function-for-assistance (voice conversation). The first assistance terminal 2A transmits image information to the second assistance terminal 2B via the fourth communicator 63 and the second communicator 43. One assistance terminal 2 (first assistance terminal 2A, second controller 41) belonging to the second group G2 transmits sound information detected by the second sound collector 48 to another assistance terminal 2 (second assistance terminal 2B) belonging to the second group G2, according to the third functions-for-assistance (voice conversation). The first assistance terminal 2A transmits sound information to the second assistance terminal 2B via the fourth communicator 63 and the second communicator 43. One assistance terminal 2 (first assistance terminal 2A, second controller 41) belonging to the second group G2 transmits a text message inputted via the first input interface 45 to another assistance terminal 2 (second assistance terminal 2B) belonging to the second group G2, according to a third functions-for-assistance (chat function).

With this, assistance terminal(s) 2 assigned a second function-for-assistance, among the assistance terminals 2 belonging to the second group G2, is/are able to perform the second function-for-assistance by transmitting information relating to a remote operation corresponding to the second function-for-assistance directly to working machine(s) 1. The assistance terminals 2 belonging to the second group G2 are able to perform a third function-for-assistance by transmitting information relating to a third remote operation corresponding to the third function-for-assistance directly to working machine(s) 1. The assistance terminals 2 belonging to the second group G2 are able to perform the third function-for-assistance (remote monitoring) based on the information about the remote monitoring directly transmitted from working machine(s) 1. One assistance terminal 2 (first assistance terminal 2A) belonging to the second group G2 is able to perform the third functions-for-assistance (voice conversation, chat function) based on the sound information and text message directly transmitted from another assistance terminal 2 (second assistance terminal 2B).

Therefore, in the case where a plurality of assistance terminals 2 belong to a second group G2, when a remote operation as a second function-for-assistance is assigned to one of the assistance terminals 2 (first assistance terminal 2A) belonging to the second group G2 (group G), a third function-for-assistance (remote monitoring) is assigned to another of the assistance terminals 2 (second assistance terminal 2B) belonging to the second group G2 (group G). Therefore, the remote operation and the remote monitoring are performed concurrently.

### Other Variations

Note that, although the description of the foregoing example embodiments discusses cases in which the assistance system S includes a plurality of assistance terminals 2 and the plurality of assistance terminals 2 are configured to perform assistance of a plurality of working machines 1, the number of assistance terminals 2 included in the assistance system S and the number of working machines 1 for which the assistance terminals 2 can perform assistance are not particularly limited. Therefore, the assistance system S may include one assistance terminal 2. The assistance terminal 2 may be configured to perform assistance of one working machine 1.

Although the description of the foregoing example embodiments discusses a tractor including an operator's seat 12 and a protection structure 13 as an example of a working machine 1, a working machine 1 configured to operate under at least one of the remote operation control or the automatic operation control does not need to include devices, apparatuses, etc., for the worker to ride on the working machine 1 and manually operate the working machine 1, such as the operator's seat 12, the protection structure 13, and the first manual operator 14.

Although the description of the foregoing example embodiments discusses example cases in which the definer 61a is included in the assistance device 4, the definer 61a does not need to be included in the assistance device 4. For example, the second controller 41 of an assistance terminal 2 may include the definer 61a, the third controller 51 of the management terminal 3 may include the definer 61a, and/or the first controller 31 of a working machine 1 may include the definer 61a. The definer 61a may be included in another controller other than the second controller 41 and the third controller 51. The functions of the definer 61a may be separately included in different controllers.

Although the description of the foregoing example embodiments discusses cases in which the working machine 1 includes an operator's seat 12 and the working machine 1 is configured to be switched to the manual operation mode in which the worker seated on the seat operates the first manual operator 14, the working machine 1 may be configured not to be manually operated. In such a case, the working machine 1 does not need to include the operator's seat 12, the protection structure 13, the first manual operator 14 and the like.

Although the description of the foregoing example embodiments discusses cases in which the fourth storing device 62 of the assistance device 4 stores the first schedule information and the second schedule information, the assistance device 4 may be configured to reference the first schedule information and/or the second schedule information managed by some other server. In such a case, the first schedule information and/or the second schedule information is/are managed by a schedule management service executed on some other server.

The description of the foregoing example embodiments discusses cases in which time information (start time, end time) relating to the first group G1 is defined. Additionally or alternatively, time information relating to the second group G2 may be defined. The time information relating to the second group G2 is defined between the start time and the end time of the first group G1.

Example embodiments of the present invention provide assistance systems S described in the following items.

(Item 1) An assistance system S including one or more assistance terminals 2 to provide assistance to one or more working machines 1 from an outside of the one or more working machines 1, and a definer 61a to define a predetermined group G including at least one working machine 1 which is at least one of the one or more working machines 1 and at least one assistance terminal 2 which is at least one of the one or more assistance terminals 2, wherein the at least one assistance terminal 2 belonging to the predetermined group G is configured to perform one or more functions-for-assistance, which are one or more functions for the assistance, with respect to the at least one working machine 1 belonging to the predetermined group G.

With the assistance system S according to item 1, one or more assistance terminals 2 belonging to a group G defined by the definer 61a are able to perform assistance with respect to one or more working machines 1 belonging to the group G. Therefore, there are no restrictions on the number of working machines 1 that can be assisted by one assistance terminal 2 or the number of assistance terminals 2 that can assist one working machine 1. Thus, defining a group G by the definer 61a allows one or more assistance terminals 2 to appropriately assist one or more working machines 1.

(Item 2) The assistance system S according to item 1, wherein the definer 61a is configured or programmed to define that one or more functions-for-assistance, with respect to at least one of the at least one working machine 1 belonging to the predetermined group G, are assigned to at least one of the at least one assistance terminals 2 belonging to the predetermined group G.

With the assistance system S according to item 2, assistance terminal(s) 2 belonging to the group G is/are able to perform various types of assistance with respect to one working machine 1. In other words, in the case where a plurality of assistance terminals 2 belong to the group G, the assistance terminals 2 are able to perform different types of assistances with respect to one working machine 1. In the case where a plurality of working machines 1 belong to the group G, one assistance terminal 2 is able to perform different types of assistance with respect to the respective working machines 1.

(Item 3) The assistance system S according to item 2, wherein the definer 61a is configured or programmed to define, as a first group G1 which is the predetermined group, (i) the at least one assistance terminal 2 that is connected to a predetermined access point and (ii) the at least one working machine 1 that is associated with the predetermined access point, and define that one or more first functions-for-assistance, as the one or more functions-for-assistance with respect to the at least one of the at least one working machine 1 belonging to the first group G1, are assigned to at least one of the at least one assistance terminal 2 belonging to the first group G1.

With the assistance system S according to item 3, assistance terminal(s) 2 is/are able to perform assistance (first functions-for-assistance) with respect to working machine(s) 1 belonging to a first group G1 by connecting to an access point of the first group G1. Thus, each assistance terminal 2 is able to assist working machine(s) 1 belonging to the first group G1 by performing a relatively easy process of connecting to the access point.

(Item 4) The assistance system S according to item 3, wherein the first group G1 includes a plurality of the assistance terminals 2 including a first assistance terminal 2A and a second assistance terminal 2B, and the definer 61a is configured or programmed to define that the one or more first functions-for-assistance, as the one or more functions-for-assistance with respect to the at least one of the at least one working machine 1 belonging to the first group G1, are assigned in common to both the first assistance terminal 2A and the second assistance terminal 2B.

With the assistance system S according to item 4, the first assistance terminal 2A and the second assistance terminal 2B are able to perform the same function(s)-for-assistance with respect to the same working machine 1 belonging to the first group G1, by merely connecting to the access point of the first group G1. This makes it possible to improve the flexibility of assistance provided by the assistance terminals 2 (the first assistance terminal 2A and the second assistance terminal 2B) to the working machine(s) 1.

(Item 5) The assistance system S according to item 3 or 4, wherein the definer 61a is configured or programmed to define, as a second group G2, at least one assistance terminal 2 and at least one working machine 1 extracted from the at least one assistance terminal 2 belonging to the first group G1 and the at least one working machine 1 belonging to the first group G1, and define that one or more second functions-for-assistance, as one or more functions-for-assistance with respect to at least one of the at least one working machine 1 belonging to the second group G2, are assigned to at least one of the at least one assistance terminal 2 belonging to the second group G2.

With the assistance system S according to item 5, the definer 61a is able to subdivide the first group G1 to define second group(s) G2 to thus give different roles to assistance terminal(s) 2 belonging to the second group(s) and to assistance terminal(s) 2 belonging to the first group G1. This makes it possible to improve the convenience of the assistance terminals 2.

(Item 6) The assistance system S according to item 5, wherein the second group G2 includes a plurality of the assistance terminals 2 including a first assistance terminal 2A and a second assistance terminal 2B, and the definer 61a is configured or programmed to define that respective different second functions-for-assistance, as functions-for-assistance with respect to at least one of the at least one working machine 1 belonging to the second group G2, are assigned to the first assistance terminal 2A and to the second assistance terminal 2B.

With the assistance system S according to item 6, assistance terminals 2 belonging to the second group G2 perform respective different types of assistance (second functions-for-assistance), and therefore it is possible to eliminate or reduce the likelihood that conflict will occur between the first assistance terminal 2A and the second assistance terminal 2B in terms of function-for-assistance. This makes it possible for the first assistance terminal 2A and the second assistance terminal 2B to smoothly assist working machine(s) 1.

(Item 7) The assistance system S according to item 6, wherein the definer 61a is configured or programmed such that, when the definer 61a has defined that a function-for-assistance in traveling or steering of at least one of the at least one working machine 1 belonging to the second group G2 is assigned to the first assistance terminal 2A belonging to the second group G2, the definer 61a does not define that the function-for-assistance in traveling or steering of the at least one of the at least one working machine 1 belonging to the second group G2, which has been assigned to the first assistance terminal 2A, is assigned to the second assistance terminal 2B belonging to the second group G2.

With the assistance system S according to item 7, it is possible to eliminate or reduce the likelihood that conflict will occur between the first assistance terminal 2A and the second assistance terminal 2B in terms of the function-for-assistance relating to travel and the function-for-assistance in terms of steering. This makes it possible to eliminate or reduce the likelihood that there will be confusion in assistance provided by the first assistance terminal 2A and the second assistance terminal 2B to the working machine 1.

(Item 8) The assistance system S according to item 6 or 7, wherein the definer 61a is configured or programmed to define that one or more third functions-for-assistance, as the one or more functions-for-assistance with respect to the at least one of the at least one working machine 1 belonging to the second group G2, are assigned in common to both the first assistance terminal 2A belonging to the second group G2 and the second assistance terminal 2B belonging to the second group G2.

With the assistance system S according to item 8, the first assistance terminal 2A and the second assistance terminal 2B are able to perform not only respective different functions-for-assistance (second functions-for-assistance) but also the same function-for-assistance (third function-for-assistance). This makes it possible to improve the flexibility of assistance provided by the assistance terminals 2 (the first assistance terminal 2A and the second assistance terminal 2B) to the working machine(s) 1.

(Item 9) The assistance system S according to item 8, wherein the definer 61a is configured or programmed to define that a function-for-assistance in braking at least one of the at least one working machine 1 belonging to the second group G2, as a third function-for-assistance with respect to the at least one of the at least one working machine 1 belonging to the second group G2, is assigned to both the first assistance terminal 2A belonging to the second group G2 and the second assistance terminal 2B belonging to the second group G2.

With the assistance system S according to item 9, a conflict between the first assistance terminal 2A and the second assistance terminal 2B in terms of function-for-assistance relating to braking is allowed. Thus, when a working machine 1 should be slowed down or stopped, for example, in case of emergency, both the first assistance terminal 2A and the second assistance terminal 2B are able to perform assistance to brake the working machine 1.

(Item 10) The assistance system S according to item 2, wherein the predetermined group G includes a plurality of the assistance terminals 2 including a first assistance terminal 2A and a second assistance terminal 2B, and the definer 61a is configured or programmed to define that respective different second functions-for-assistance, as functions-for-assistance with respect to at least one of the at least one working machine 1 belonging to the predetermined group G, are assigned to the first assistance terminal 2A and to the second assistance terminal 2B.

With the assistance system S according to item 10, assistance terminals 2 belonging to the group G perform respective different types of assistance (second functions-for-assistance), and therefore it is possible to eliminate or reduce the likelihood that a conflict will occur between the first assistance terminal 2A and the second assistance terminal 2B in terms of functions-for-assistance. This makes it possible for the first assistance terminal 2A and the second assistance terminal 2B to smoothly assist working machine(s) 1.

(Item 11) The assistance system S according to item 10, wherein the definer 61a is configured or programmed such that, when the definer 61a has defined that a function-for-assistance in traveling or steering of at least one of the at least one working machine 1 belonging to the predetermined group G is assigned to the first assistance terminal 2A belonging to the predetermined group G, the definer does not define that the function-for-assistance in traveling or steering of the at least one of the at least one working machine 1 belonging to the predetermined group G, which has been assigned to the first assistance terminal 2A, is assigned to the second assistance terminal 2B belonging to the predetermined group G.

With the assistance system S according to item 11, it is possible to eliminate or reduce the likelihood that conflict will occur between the first assistance terminal 2A and the second assistance terminal 2B in terms of the function-for-assistance relating to travel and the function-for-assistance in terms of steering. This makes it possible to eliminate or reduce the likelihood that there will be confusion in assistance provided by the first assistance terminal 2A and the second assistance terminal 2B to the working machine 1.

(Item 12) The assistance system S according to item 10 or 11, wherein the definer 61a is configured or programmed to define that one or more third functions-for-assistance, as the one or more functions-for-assistance with respect to the at least one of the at least one working machine 1 belonging to the predetermined group G, are assigned in common to both the first assistance terminal 2A belonging to the predetermined group G and the second assistance terminal 2B belonging to the predetermined group G.

With the assistance system S according to item 12, the first assistance terminal 2A and the second assistance terminal 2B are able to perform not only respective different functions-for-assistance (second functions-for-assistance) but also the same function-for-assistance (third function-for-assistance). This makes it possible to improve the flexibility of assistance provided by the assistance terminals 2 (the first assistance terminal 2A and the second assistance terminal 2B) to the working machine(s) 1.

(Item 13) The assistance system S according to item 12, wherein the definer 61a is configured or programmed to define that a function-for-assistance in braking at least one of the at least one working machine belonging to the predetermined group G, as a third function-for-assistance with respect to the at least one of the at least one working machine 1 belonging to the predetermined group G, is assigned to both the first assistance terminal 2A belonging to the predetermined group G and the second assistance terminal 2B belonging to the predetermined group G.

With the assistance system S according to item 13, a conflict between the first assistance terminal 2A and the second assistance terminal 2B in terms of function-for-assistance relating to braking is allowed. Thus, when a working machine 1 should be slowed down or stopped, for example, in case of emergency, both the first assistance terminal 2A and the second assistance terminal 2B are able to perform assistance to brake the working machine 1.

(Item 14) The assistance system S according to any one of items 2 to 13, wherein, when the definer 61a has defined a group G or made a definition relating to one or more functions-for-assistance, at least one of the one or more assistance terminals 2 that belongs to the defined group G communicates directly with at least one of the one or more working machines 1 that belongs to the defined group G.

With the assistance system S according to item 14, assistance terminal(s) 2 and working machine(s) 1 directly communicate with each other without any other communication devices or the like. This makes it possible to prevent or reduce the occurrence of communication delay and possible to perform functions-for-assistance relatively quickly.

(Item 15) The assistance system S according to any one of items 2 to 14, further including a management terminal 3 from which one or more functions-for-assistance are assigned to the one or more assistance terminals 2, wherein the definer 61a is configured or programmed to redefine that at least one of the one or more functions-for-assistance, which are defined to be assigned to the management terminal 3, is assigned to at least one of the at least one assistance terminal 2 belonging to the predetermined group G.

With the assistance system S according to item 15, it is possible to redefine that function(s)-for-assistance originally assigned to the management terminal 3 is/are assigned to assistance terminal(s) 2. Thus, functions-for-assistance can be distributed from the management terminal 3 to assistance terminal(s) 2 belonging to the group G. This allows a manager who operates the management terminal 3 to appropriately prepare a work plan using working machine(s) 1.

(Item 16) The assistance system S according to any one of items 2 to 14, further including a management terminal 3 from which one or more functions-for-assistance are assigned to the one or more assistance terminals 2, wherein the definer 61a is configured or programmed to define that at least one of the one or more functions-for-assistance is assigned to at least one of the at least one assistance terminal 2 belonging to the predetermined group G, based on information relating to function-for-assistance assignment transmitted from the management terminal 3.

With the assistance system S according to item 16, it is possible to assign, from the management terminal 3, functions-for-assistance in a distributed manner to assistance terminals 2 belonging to the group G. This allows a manager who operates the management terminal 3 to appropriately prepare a work plan using working machine(s) 1.

(Item 17) The assistance system S according to any one of items 1 to 16, wherein the one or more functions-for-assistance include providing assistance with respect to one or more functions of one or more devices included in the one or more working machines 1.

With the assistance system S according to item 17, assistance terminal(s) 2 belonging to the group G is/are able to perform function(s)-for-assistance with respect to device(s) of the working machine(s) 1. This makes it possible to improve the flexibility of assistance provided by the assistance terminal(s) 2 to the working machine(s) 1.

(Item 18) The assistance system S according to any one of items 1 to 17, wherein the one or more functions-for-assistance include at least one of a remote operation of the one or more working machines 1, a remote configuration of the one or more working machines 1, or a remote monitoring of the one or more working machines 1.

With the assistance system S according to item 18, one or more assistance terminals 2 are able to appropriately perform at least one of a remote operation, a remote configuration, or a remote monitoring with respect to one or more working machines 1 belonging to a group G defined by the definer 61a.

(Item 19) The assistance system S according to item 12 or according to any one of items 13 to 18 depending directly or indirectly from item 12, wherein one of the second functions-for-assistance (i) is assigned to the first assistance terminal 2A belonging to the predetermined group G and (ii) includes a remote operation of at least one of the at least one working machine 1 belonging to the predetermined group G, the one or more third functions-for-assistance (i) is/are assigned to the second assistance terminal 2B belonging to the predetermined group G and (ii) each include a remote monitoring of the at least one of the at least one working machine 1 belonging to the predetermined group G, and the remote operation and the remote monitoring are configured to be performed concurrently.

With the assistance system S according to item 19, it is possible to allow the first assistance terminal 2A to perform a remote operation of the working machine 1 while allowing the second assistance terminal 2B to perform a remote monitoring of the working machine 1. This allows a worker who operates the first assistance terminal 2A and a worker who operates the second assistance terminal 2B to appropriately cooperate together.

(Item 20) The assistance system S according to any one of items 1 to 19, further including a display 44, 54 to display the at least one assistance terminal 2 belonging to the predetermined group G and the at least one working machine 1 belonging to the predetermined group G.

The assistance system S according to item 20 allows a worker to check an indication on the display 44, 54 to know assistance terminal(s) 2 and working machine(s) 1 belonging to the group G at a glance.

While example embodiments of the present invention have been described above, it is to be understood that variations and modifications will be apparent to those skilled in the art without departing from the scope and spirit of the present invention. The scope of the present invention, therefore, is to be determined solely by the following claims.

## Claims

1. An assistance system (S) comprising:
one or more assistance terminals (2) configured to provide assistance to one or more working machines (1) from an outside of the one or more working machines (1); and
a definer (61a) configured to define a predetermined group (G) including at least one working machine (1) which is at least one of the one or more working machines (1) and at least one assistance terminal (2) which is at least one of the one or more assistance terminals (2); wherein
the at least one assistance terminal (2) belonging to the predetermined group (G) is configured to perform one or more functions-for-assistance, which are one or more functions for the assistance, with respect to the at least one working machine (1) belonging to the predetermined group (G).

2. The assistance system (S) according to claim 1, wherein the definer (61a) is configured or programmed to define that one or more functions-for-assistance, with respect to at least one of the at least one working machine (1) belonging to the predetermined group (G), are assigned to at least one of the at least one assistance terminals (2) belonging to the predetermined group (G).

3. The assistance system (S) according to claim 2, wherein the definer (61a) is configured or programmed to:
define, as a first group (G1) which is the predetermined group, (i) the at least one assistance terminal (2) that is connected to a predetermined access point and (ii) the at least one working machine (1) that is associated with the predetermined access point; and
define that one or more first functions-for-assistance, as the one or more functions-for-assistance with respect to the at least one of the at least one working machine (1) belonging to the first group (G1), are assigned to at least one of the at least one assistance terminal (2) belonging to the first group (G1).

4. The assistance system (S) according to claim 3, wherein
the first group (G1) includes a plurality of the assistance terminals (2) including a first assistance terminal (2A) and a second assistance terminal (2B); and
the definer (61a) is configured or programmed to define that the one or more first functions-for-assistance, as the one or more functions-for-assistance with respect to the at least one of the at least one working machine (1) belonging to the first group (G1), are assigned in common to both the first assistance terminal (2A) and the second assistance terminal (2B).

5. The assistance system (S) according to claim 3 or 4, wherein the definer (61a) is configured or programmed to:
define, as a second group (G2), at least one assistance terminal (2) and at least one working machine (1) extracted from the at least one assistance terminal (2) belonging to the first group (G1) and the at least one working machine (1) belonging to the first group (G1); and
define that one or more second functions-for-assistance, as one or more functions-for-assistance with respect to at least one of the at least one working machine (1) belonging to the second group (G2), are assigned to at least one of the at least one assistance terminal (2) belonging to the second group (G2).

6. The assistance system (S) according to claim 5, wherein
the second group (G2) includes a plurality of the assistance terminals (2) including a first assistance terminal (2A) and a second assistance terminal (2B); and
the definer (61a) is configured or programmed to define that respective different second functions-for-assistance, as functions-for-assistance with respect to at least one of the at least one working machine (1) belonging to the second group (G2), are assigned to the first assistance terminal (2A) and to the second assistance terminal (2B).

7. The assistance system (S) according to claim 6, wherein the definer (61a) is configured or programmed such that, when the definer (61a) has defined that a function-for-assistance in traveling or steering of at least one of the at least one working machine (1) belonging to the second group (G2) is assigned to the first assistance terminal (2A) belonging to the second group (G2), the definer (61a) does not define that the function-for-assistance in traveling or steering of the at least one of the at least one working machine (1) belonging to the second group (G2), which has been assigned to the first assistance terminal (2A), is assigned to the second assistance terminal (2B) belonging to the second group (G2).

8. The assistance system (S) according to claim 6 or 7, wherein the definer (61a) is configured or programmed to define that one or more third functions-for-assistance, as the one or more functions-for-assistance with respect to the at least one of the at least one working machine (1) belonging to the second group (G2), are assigned in common to both the first assistance terminal (2A) belonging to the second group (G2) and the second assistance terminal (2B) belonging to the second group (G2).

9. The assistance system (S) according to claim 8, wherein the definer (61a) is configured or programmed to define that a function-for-assistance in braking at least one of the at least one working machine (1) belonging to the second group (G2), as a third function-for-assistance with respect to the at least one of the at least one working machine (1) belonging to the second group (G2), is assigned to both the first assistance terminal (2A) belonging to the second group (G2) and the second assistance terminal (2B) belonging to the second group (G2).

10. The assistance system (S) according to claim 2, wherein:
the predetermined group (G) includes a plurality of the assistance terminals (2) including a first assistance terminal (2A) and a second assistance terminal (2B); and
the definer (61a) is configured or programmed to define that respective different second functions-for-assistance, as functions-for-assistance with respect to at least one of the at least one working machine (1) belonging to the predetermined group (G), are assigned to the first assistance terminal (2A) and to the second assistance terminal (2B).

11. The assistance system (S) according to claim 10, wherein the definer (61a) is configured or programmed such that, when the definer (61a) has defined that a function-for-assistance in traveling or steering of at least one of the at least one working machine (1) belonging to the predetermined group (G) is assigned to the first assistance terminal (2A) belonging to the predetermined group (G), the definer (61a) does not define that the function-for-assistance in traveling or steering of the at least one of the at least one working machine (1) belonging to the predetermined group (G), which has been assigned to the first assistance terminal (2A), is assigned to the second assistance terminal (2B) belonging to the predetermined group (G).

12. The assistance system (S) according to claim 10 or 11, wherein the definer (61a) is configured or programmed to define that one or more third functions-for-assistance, as the one or more functions-for-assistance with respect to the at least one of the at least one working machine (1) belonging to the predetermined group (G), are assigned in common to both the first assistance terminal (2A) belonging to the predetermined group (G) and the second assistance terminal (2B) belonging to the predetermined group (G).

13. The assistance system (S) according to claim 12, wherein the definer (61a) is configured or programmed to define that a function-for-assistance in braking at least one of the at least one working machine (1) belonging to the predetermined group (G), as a third function-for-assistance with respect to the at least one of the at least one working machine (1) belonging to the predetermined group (G), is assigned to both the first assistance terminal (2A) belonging to the predetermined group (G) and the second assistance terminal (2B) belonging to the predetermined group (G).

14. The assistance system (S) according to any one of claims 2 to 13, wherein, when the definer (61a) has defined a group (G) or made a definition relating to one or more functions-for-assistance, at least one of the one or more assistance terminals (2) that belongs to the defined group (G) communicates directly with at least one of the one or more working machines (1) that belongs to the defined group.

15. The assistance system (S) according to any one of claims 2 to 14, further comprising a management terminal (3) from which one or more functions-for-assistance are assigned to the one or more assistance terminals (2); wherein
the definer (61a) is configured or programmed to redefine that at least one of the one or more functions-for-assistance, which are defined to be assigned to the management terminal (3), is assigned to at least one of the at least one assistance terminal (2) belonging to the predetermined group (G).
